(19) **Europäisches Patentamt / European Patent Office / Office européen des brevets**

(11) **EP 4 456 649 B1**

(12) **EUROPEAN PATENT SPECIFICATION**

(45) Date of publication and mention
of the grant of the patent:
**06.05.2026 Bulletin 2026/19**

(21) Application number: **21968571.6**

(22) Date of filing: **22.12.2021**

(51) International Patent Classification (IPC):
*H04W 72/232* (2023.01)    *H04L 5/00* (2006.01)

(52) Cooperative Patent Classification (CPC):
**H04L 5/0053; H04L 5/001; H04L 5/0094;
H04W 72/232;** H04L 5/0048; H04L 5/0058

(86) International application number:
**PCT/CN2021/140634**

(87) International publication number:
**WO 2023/115422 (29.06.2023 Gazette 2023/26)**

(54) **PROCESSING METHOD, COMMUNICATION DEVICE AND STORAGE MEDIUM**

VERARBEITUNGSVERFAHREN, KOMMUNIKATIONSVORRICHTUNG UND SPEICHERMEDIUM

PROCÉDÉ DE TRAITEMENT, DISPOSITIF DE COMMUNICATION ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.10.2024 Bulletin 2024/44**

(73) Proprietor: **Shenzhen Transsion Holdings Co.,
Ltd.
Shenzhen, Guangdong 518057 (CN)**

(72) Inventors:
• **ZHU, Rongchang
Shenzhen, Guangdong 518057 (CN)**
• **HUANG, Wei
Shenzhen, Guangdong 518057 (CN)**
• **HUANG, Junwei
Shenzhen, Guangdong 518057 (CN)**

(74) Representative: **Elzaburu S.L.P.
Paseo de la Castellana 259C
Torre de Cristal, planta 28
28046 Madrid (ES)**

(56) References cited:
**EP-A1- 4 149 188        EP-A2- 3 913 845
WO-A1-2009/117942        WO-A1-2021/223703
CN-A- 111 955 033        CN-A- 112 534 946
US-A1- 2011 286 411        US-A1- 2019 059 057**

• **LENOVO ET AL: "Discussion on multi-cell
PDSCH scheduling via a single DCI", vol. RAN
WG1, no. E-meeting; 20210510 - 20210527, 12
May 2021 (2021-05-12), XP052011089, Retrieved
from the Internet <URL:https://ftp.3gpp.org/
tsg_ran/WG1_RL1/TSGR1_105-e/Docs/
R1-2104868.zip R1-2104868.docx> [retrieved on
20210512]**

## Description

### TECHNICAL FIELD

The present application relates to communication technologies, and in particular, to a processing method, a communication device and a storage medium.

### BACKGROUND

In some implementations, a network device may implement transmission of a transport block with a terminal device on one carrier in a cell.

During a process of conceiving and achieving the present application, the inventors found at least the following problems: when receiving a transport block sent by the network device or sending a transport block to the network device on multiple carriers in a same logical cell, the terminal device needs to acquire a scheduling manner for each carrier in the logical cell, and there is no solution for determining the scheduling manners of multiple carriers in the same logical cell at present.

The foregoing description is aimed to provide general background information and does not necessarily constitute a prior art. EP 3913845 A2 discloses a base station and/or a wireless device may communicate using a plurality of wireless resources. Multiple carriers may be used for a transmission such that portions of the transmission may be transmitted using different carrier. Multiple carrier transmission may be independently configured for each of a plurality of wireless resources. XP052011089 discloses that scheduling PDSCHs on multiple carriers via a single DCI: Regarding using a single DCI scheduling two PDSCHs on two carriers, there are two possible cases, Case 1: one PDSCH is self-scheduled on same carrier and another PDSCH is cross-carrier scheduled; Case 2: the two PDSCHs are cross-carrier scheduled from a third carrier. WO 2021/223703 A1 discloses receiving first downlink control information for scheduling multiple carriers, cells or bandwidth parts; and according to the first downlink control information, the number of bits required for frequency domain resource allocation for each scheduled carrier, cell or bandwidth part, and a frequency domain resource set corresponding to each bit, obtaining frequency domain resources of a terminal on the multiple carriers, cells or bandwidth parts.

### SUMMARY

The invention is set out in the appended set of claims.

### BRIEF DESCRIPTION OF THE DRAWINGS

The accompanying drawings here are incorporated into the specification and constitute a part of the specification, and illustrate embodiments in accordance with the present application and together with the description serve to explain the principles of the present application. In order to illustrate the technical solutions of the embodiments of the present application more clearly, the following will briefly introduce the accompanying drawings used for the description of the embodiments. Obviously, for those of ordinary skill in the art, other drawings can be obtained from these drawings without creative labor.

FIG. 1 is a schematic diagram of a hardware structure of a terminal device provided by an embodiment of the present application.

FIG. 2 is a system architecture diagram of a communication network provided by an embodiment of the present application.

FIG. 3 is a schematic diagram of a hardware structure of a controller provided by an embodiment of the present application.

FIG. 4 is a schematic diagram of a hardware structure of a network node provided by an embodiment of the present application.

FIG. 5 is a schematic diagram of a hardware structure of a network node provided by an embodiment of the present application.

FIG. 6 is a schematic diagram of a hardware structure of a controller provided by an embodiment of the present application.

FIG. 7 is a schematic diagram of a hardware structure of a network node provided by an embodiment of the present application.

FIG. 8 is a schematic signaling diagram 1 of a processing method provided by an embodiment of the present application.

FIG. 9 is a schematic diagram 1 of scheduling information transmission provided by an embodiment of the present application.

FIG. 10 is a schematic diagram 2 of scheduling information transmission provided by an embodiment of the present application.

FIG. 11 is a schematic diagram 1 of transmission of scheduling information and/or configuration information provided by an embodiment of the present application.

FIG. 12 is a schematic diagram 2 of transmission of scheduling information and/or configuration information provided by an embodiment of the present application.

FIG. 13 is a schematic diagram 1 of frequency domain resources of a carrier provided by an embodiment of the present application.

FIG. 14 is a schematic diagram 2 of frequency domain resources of a carrier provided by an embodiment of the present application.

FIG. 15 is a schematic diagram 3 of transmission of scheduling information and/or configuration information provided by an embodiment of the present application.

FIG. 16 is a schematic diagram 3 of frequency domain resources of a carrier provided by an embodiment of the present application.

FIG. 17 is a schematic diagram 4 of frequency domain resources of a carrier provided by an embodiment of the present application.

FIG. 18 a schematic signaling diagram 2 of a processing method provided by an embodiment of the present application.

FIG. 19 is a schematic structural diagram of a processing apparatus provided by an embodiment of the present application.

FIG. 20 is a schematic structural diagram of a processing apparatus provided by an embodiment of the present application.

FIG. 21 is a schematic structural diagram of a processing apparatus provided by an embodiment of the present application.

FIG. 22 is a schematic structural diagram of a communication device provided by an embodiment of the present application.

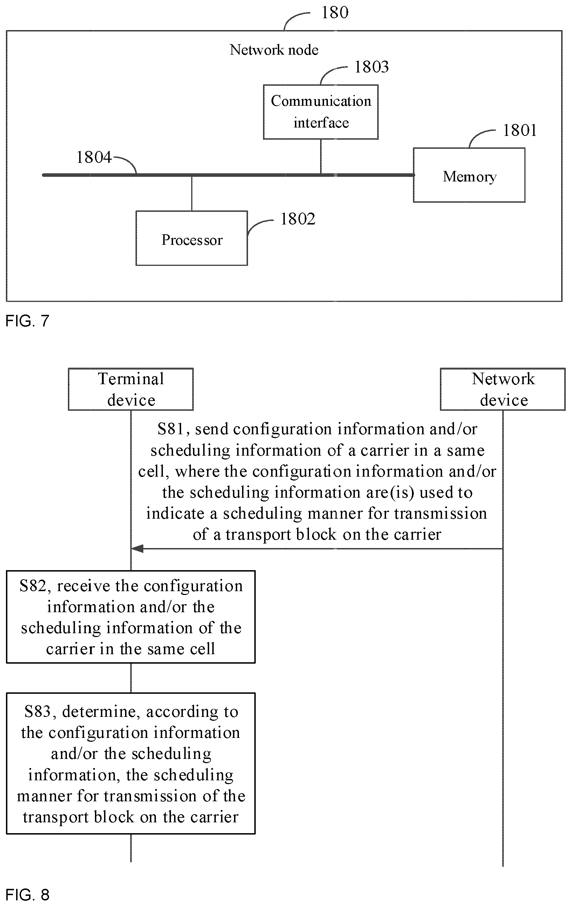

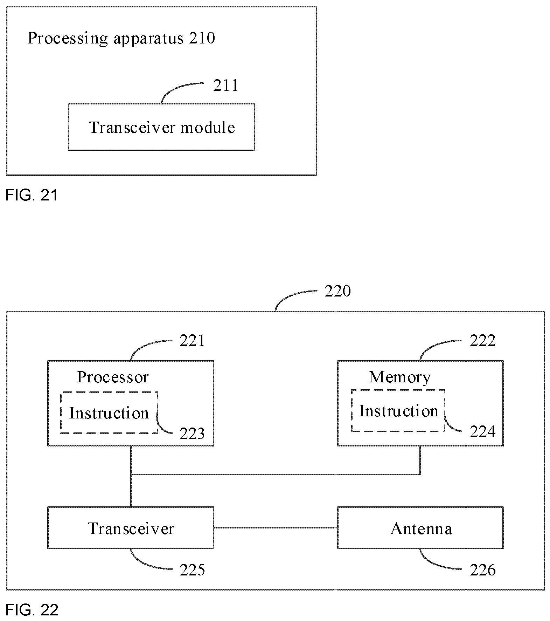

The invention is described by the combination of the embodiments related to figures 8 and 22

The realization of the purpose, functional characteristics, and advantages of the present application will be further illustrated in conjunction with the embodiments and with reference to the accompanying drawings. Through the above accompanying drawings, the specific embodiments of the present application have been shown, which will be described in more detail later. These accompanying drawings and text descriptions are not intended to limit the scope of the concept of the present application in any way, but to illustrate the concept of the present application for those skilled in the art by referring to specific embodiments.

**DETAILED DESCRIPTION OF THE EMBODIMENTS**

The example embodiments will be described in detail here, and examples thereof are shown in the drawings. When the following description refers to the drawings, unless otherwise represented, the same numerals in different drawings represent same or similar elements. The implementations described in the following example embodiments do not represent all implementations consistent with the present application. On the contrary, they are merely examples of apparatuses and methods consistent with some aspects of the application as detailed in the appended claims.

It should be noted that, in this description, the terms "include", "comprise" or any other variants thereof are intended to cover non-exclusive inclusion, so that a process, method, object or apparatus including a series of elements not only include those elements, but also include other elements that are not explicitly listed, or include elements inherent to the process, method, object, or apparatus. In a case that there are no more restrictions, the element defined by the sentence "including a..." does not exclude the existence of other same elements in the process, method, object, or apparatus that includes the element. In addition, components, features, and elements with the same name in different embodiments of the present application may have the same or different meanings, and their specific meanings need to be determined based on the interpretation in the specific embodiments or further combined with the context in the specific embodiments.

It should be understood that although the terms "first", "second", "third", etc. may be used herein to describe various information, the information should not be limited to these terms. These terms are only used to distinguish the same type of information from each other. For example, without departing from the scope of this disclosure, first information may also be referred to as second information, and similarly, the second information may also be referred to as the first information. Depending on the context, the word "if" as used herein may be interpreted as "when" or "as" or "in response to determination of". Furthermore, as used herein, singular forms "a", "an" and "the" are intended to also include plural forms, unless the context instructs to the contrary. It should be further understood that the terms "contain" and "include" indicate a presence of the described features, steps, operations, elements, components, items, categories, and/or groups, but do not exclude an existence, appearance or addition of one or more other features, steps, operations, elements, components, items, categories, and/or groups. The terms "or", "and/or" and "including at least one of" used herein are interpreted as inclusive or mean any one or any combination. For example, "including at least one of the following: A, B, C" means "any of the following: A; B; C; A and B; A and C; B and C; A, B and C". For another example, "A, B or C" or "A, B and/or C" means "any of the following: A; B; C; A and B; A and C; B and C; A, B and C". An exception to this definition will only occur when the combination of elements, functions, steps or operations is inherently mutually exclusive in some way.

It should be understood that, although the steps in the flowchart in the embodiments of the present application are displayed in sequence as indicated by the arrows, these steps are not necessarily executed in sequence in the order indicated by the arrows. Unless explicitly stated in this description, there is no strict order limitation for the execution of these steps, and they may be executed in other orders. Moreover, at least part of the steps in figures may include multiple sub-steps or multiple stages, these sub-steps or stages are not necessarily executed at the same time, but may be executed at different time, and the order of execution is not necessarily sequential order, but they may be executed in turn or alternately with other steps or sub-steps of other steps or at least a part of stages.

Depending on the context, the words "if" and "in a case that" used here may be interpreted as "at the time of", "when", "in response to determining" or "in response to detecting". Similarly, depending on the context, the phrases "if it is determined that" or "if it is detected that (a stated condition or event)" may be interpreted as "at the time of determining" or "in response to determining" or "at the time of detecting (the stated condition or event)" or "in response to detecting (the stated condition or event)".

It should be noted that in this description, step signs such as S1 and S2, etc. are adopted to express the corresponding content more clearly and concisely, and do not constitute a substantive restriction on the order. During specific implementation, those skilled in the art may execute S2 first and then execute S1, etc., but these should fall within the protection scope of the preset application.

It should be understood that the specific embodiments described here are only used to explain the present application, and are not intended to limit the present application.

In subsequent descriptions, the use of suffixes such as "module", "component" or "unit" for representing an element is only for facilitating the description of the present application and has no specific meaning by itself. Therefore, "module", "component" or "unit" may be mixedly used.

A terminal device may be a smart terminal, and the smart terminal may be implemented in various forms. For example, the smart terminal described in the present application may include a mobile phone, a tablet computer, a notebook computer, a palmtop computer, a personal digital assistant (PDA), a portable media player (PMP), a navigation apparatus, a wearable device, a smart bracelet, a pedometer and other smart terminals, as well as a digital TV, a desktop computer and other fixed terminals.

In subsequent descriptions, the terminal device will be taken as an example, and those skilled in the art will understand that, in addition to elements specially used for mobile purposes, a construction according to the embodiments of the present application can also be applied to fixed-type terminals.

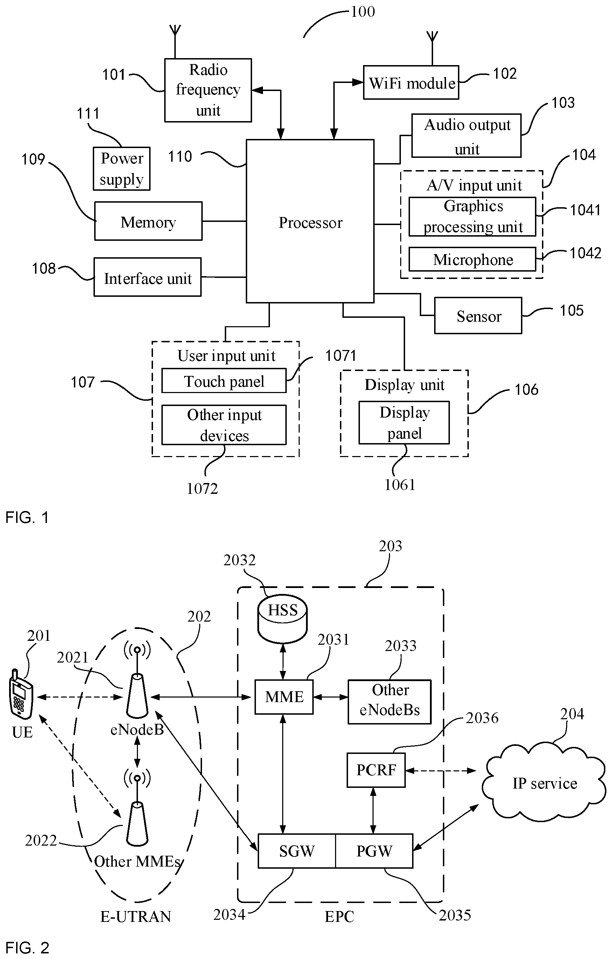

Please refer to FIG. 1, which is a schematic diagram of a hardware structure of a terminal device implementing embodiments of the present application. The terminal device 100 may include: an RF (Radio Frequency) unit 101, a WiFi module 102, an audio output unit 103, an A/V (audio/video) input unit 104, a sensor 105, a display unit 106, a user input unit 107, an interface unit 108, a memory 109, a processor 110, and a power supply 111 and other components. Those skilled in the art may understand that a structure of the terminal device shown in FIG. 1 does not constitute a limitation on the terminal device, and the terminal device may include more or less components than shown in the figure, or a combination of some components, or different components layout.

Each component of the terminal device will be introduced in detail in conjunction with FIG. 1 in the following.

The radio frequency unit 101 may be used for receiving and sending information, or receiving and sending signals during a call. Optionally, after receiving downlink information from a base station, the radio frequency unit 101 may pass the downlink information to the processor 110 for processing, and in addition, send uplink data to the base station. Generally, the radio frequency unit 101 includes, but is not limited to, an antenna, at least one amplifier, a transceiver, a coupler, a low noise amplifier, a duplexer, and the like. In addition, the radio frequency unit 101 may also communicate with a network and other devices through a wireless communication. The above wireless communication may use any of communication standards or protocols, including but not limited to GSM (Global System of Mobile communication), GPRS (General Packet Radio Service), CDMA2000 (Code Division Multiple Access 2000), WCDMA (Wideband Code Division Multiple Access), TD-SCDMA (Time Division-Synchronous Code Division Multiple Access), FDD-LTE (Frequency Division Duplexing-Long Term Evolution), TDD-LTE (Time Division Duplexing-Long Term Evolution) and 5G, etc.

WiFi belongs to a short distance wireless transmission technology. Through the WiFi module 102, the terminal device may help a user to send and receive emails, browse web pages, and access streaming media, etc. The WiFi module 102 provides users with wireless broadband Internet access. Although FIG. 1 shows the WiFi module 102, it can be understood that it is not a necessary component of the terminal device, and may be omitted as needed without changing the essence scope of the invention.

The audio output unit 103 may convert audio data received by the radio frequency unit 101 or the WiFi module 102, or stored in the memory 109 into an audio signal and output as a sound, when the terminal device 100 is in a call signal receiving mode, a call mode, a recording mode, a voice recognition mode, a broadcast receiving mode, or the like. Also, the audio output unit 103 may also provide audio output related to a specific function performed by the terminal device 100 (e.g., a call signal receiving sound, a message reception sound, etc.). The audio output unit 103 may include a speaker, a buzzer, and the like.

The A/V input unit 104 is used to receive an audio signal or a video signal. The A/V input unit 104 may include a graphics processing unit (GPU) 1041 and a microphone 1042. The graphics processing unit 1041 processes a static picture or image data of a video obtained by an image capture apparatus (i.e., camera) in an image capture mode or a video captured mode. The processed image frame may be displayed on the display unit 106. The image frame that has been processed by the graphics processor 1041 may be stored in the memory 109 (or other storage media) or sent via the radio frequency unit 101 or the WiFi module 102. The microphone 1042 may receive sound (audio data) via the microphone 1042 in a phone call mode, a recording mode, a voice recognition mode, and other operation modes, and can process such sound to generate audio data. The audio (voice) data obtained through the processing may be converted in a phone call mode into an output format that enables sending to a mobile communication base station via the radio frequency unit 101. The microphone 1042 may implement various types of noise elimination (or suppression) algorithms to eliminate (or suppress) noise or interference generated in a process of receiving and sending audio signals.

The terminal device 100 also includes at least one sensor 105, such as a light sensor, a motion sensor, and other sensors. Optionally, the light sensor includes an ambient light sensor and a proximity sensor. Optionally, the ambient light sensor may adjust a brightness of a display panel 1061 according to the brightness of the ambient light, and the proximity sensor may turn off the display panel 1061 and/or backlight when the terminal device 100 moves to an ear. As a kind of the motion sensor, an accelerometer sensor may detect a magnitude of an acceleration in various directions (generally in three axes), and may detect the magnitude and a direction of a gravity when the object is stationary, and may be used for identifying the application of a mobile phone posture (such as horizontal and vertical screen switching, related games, magnetometer posture calibration), and for vibration recognition related functions (such as pedometer, tap), etc.; as for other sensors that may be configured on mobile phones, such as fingerprint sensors, pressure sensors, iris sensors, molecular sensors, gyroscopes, barometers, hygrometers, thermometers, infrared sensors, etc., details are not be repeated here.

The display unit 106 is used to display information input by the user or information provided to the user. The display unit 106 may include the display panel 1061, and the display panel 1061 may be configured in the form of a liquid crystal display (LCD), an organic light-emitting diode (OLED), or the like.

The user input unit 107 may be used to receive input numbers or character information, and generate key signal input related to a user setting and a function control of the terminal device. Optionally, the user input unit 107 may include a touch panel 1071 and other input devices 1072. The touch panel 1071, also referred to as a touch screen, may collect touch operations of the user on it or near it (for example, operations on or near the touch panel 1071 generated by the user using any suitable object or accessory such as a finger or a stylus), and drive a corresponding connection apparatus according to a preset program. The touch panel 1071 may include two parts: a touch detection apparatus and a touch controller. Optionally, the touch detection apparatus detects a user's touch orientation, detects a signal brought by a touch operation, and transmits the signal to the touch controller; the touch controller receives touch information from the touch detection apparatus and converts it into contact coordinates, and then sends the contact coordinates to the processor 110, and can receive and execute a command sent by the processor 110. In addition, the touch panel 1071 may be implemented in various types such as resistive, capacitive, infrared, and surface acoustic wave. In addition to the touch panel 1071, the user input unit 107 may also include other input devices 1072. Optionally, the other input devices 1072 may include, but are not limited to, one or more of physical keyboards, function keys (such as volume control buttons, switch buttons, etc.), trackballs, mice, joysticks, etc., which are not specifically limited here.

Optionally, the touch panel 1071 may cover the display panel 1061. When the touch panel 1071 detects the touch operation on it or near it, it transmits the touch operation to the processor 110 to determine a type of a touch event, and then the processor 110 provides a corresponding visual output on the display panel 1061 according to the type of the touch event. Although in FIG. 1, the touch panel 1071 and the display panel 1061 are shown as two independent components to implement the input and output functions of the terminal device, in some embodiments, the touch panel 1071 and the display panel 1061 may be integrated to implement the input and output functions of the terminal device, which is not specifically limited here.

The interface unit 108 serves as an interface through which at least one external apparatus may be connected with the terminal device 100. For example, the external apparatus may include a wired or wireless headset port, an external power (or battery charger) port, a wired or wireless data port, a memory card port, a port for connecting an apparatus having an identification module, an audio input/output (I/O) port, a video I/O port, an earphone port, and the like. The interface unit 108 may be used to receive the input from the external apparatus (for example, data information, power, etc.) and transmit the received input to one or more elements in the terminal device 108, or the interface unit 108 may be used to transmit data between the terminal device 100 and the external apparatus.

The memory 109 may be used to store software programs and various data. The memory 109 may mainly include a program storage area and a data storage area. Optionally, the program storage area may store an operating system, an application program required by at least one function (such as a sound playback function, an image playback function, etc.) etc.; the data storage area may store data (such as audio data, phone book, etc.) created according to a use of the mobile phone. In addition, the memory 109 may include a high speed random access memory, and may also include a non-volatile memory, such as at least one magnetic disk storage device, flash memory device, or other volatile solid-state storage devices.

The processor 110 is a control center of the terminal device, uses various interfaces and circuits to connect various parts of the entire terminal device, runs or executes software programs and/or modules stored in the memory 109, and calls data stored in the memory 109, to execute various functions of the terminal device and process data, so as to implement overall monitor of the terminal device. The processor 110 may include one or more processing units; preferably, the processor 110 may integrate an application processor and a modem processor. Optionally, the application processor mainly processes an operating system, a user interface, and the application program, etc. The modem processor mainly processes a wireless communication. It can be understood that the above modem processor may not be integrated into the processor 110.

The terminal device 100 may also include a power supply 111 (such as a battery) for supplying power to various components. Preferably, the power supply 111 may be logically connected to the processor 110 through a power management system, so as to manage charging, discharging, and power consumption management and other functions through the power management system.

Although not shown in FIG. 1, the terminal device 100 may also include a Bluetooth module, etc., which will not be repeated here.

In order to facilitate understanding of the embodiments of the present application, the communication network system on which the terminal device of the present application is based will be described in the following.

Please refer to FIG. 2. FIG. 2 is a system architecture diagram of a communication network provided by an embodiment of the present application. The communication network system is an LTE system of a general mobile communication technology, and the LTE system includes a UE (User Equipment)) 201, an E-UTRAN (Evolved UMTS Terrestrial Radio Access Network) 202, an EPC (Evolved Packet Core) 203 and an operator's IP service 204 that are communicatively connected in sequence.

Optionally, the UE 201 may be the above terminal device 100, which will not be repeated here.

The E-UTRAN 202 includes an eNodeB 2021 and other eNodeBs 2022 and so on. Optionally, the eNodeB 2021 may be connected to other eNodeBs 2022 through a backhaul (for example, X2 interface), the eNodeB 2021 is connected to the EPC 203, and the eNodeB 2021 may provide an access from the UE 201 to the EPC 203.

The EPC 203 may include an MME (Mobility Management Entity) 2031, an HSS (Home Subscriber Server) 2032, other MMEs 2033, an SGW (Serving Gate Way) 2034, a PGW (PDN Gate Way, packet data network gateway) 2035 and a PCRF (Policy and Charging Rules Function) 2036, etc. Optionally, MME 2031 is a control node that processes signaling between the UE 201 and the EPC 203, and provides a bearer and a connection management. The HSS 2032 is used to provide some registers to manage functions such as home location register (not shown in the figure), and save some user specific information about service features, data rates, etc. All user data may be sent through the SGW 2034. The PGW 2035 may provide an IP address allocation of the UE 201 and other functions. The PCRF 2036 is a decision point for a policy and charging control policy of service data flow and an IP bearer resource, and selects and provides available a policy and charging control decision for a policy and charging execution functional unit (not shown in the figure).

The IP service 204 may include Internet, Intranet, IMS (IP Multimedia Subsystem, IP multimedia subsystem) or other IP services.

Although above description is given by using the LTE system as an example, those skilled in the art should know that the present application is not only applicable to the LTE system, but also applicable to other wireless communication systems, such as GSM, CDMA2000, WCDMA, TD-SCDMA and future new network systems (i.e., 5G), etc., which is not limited here.

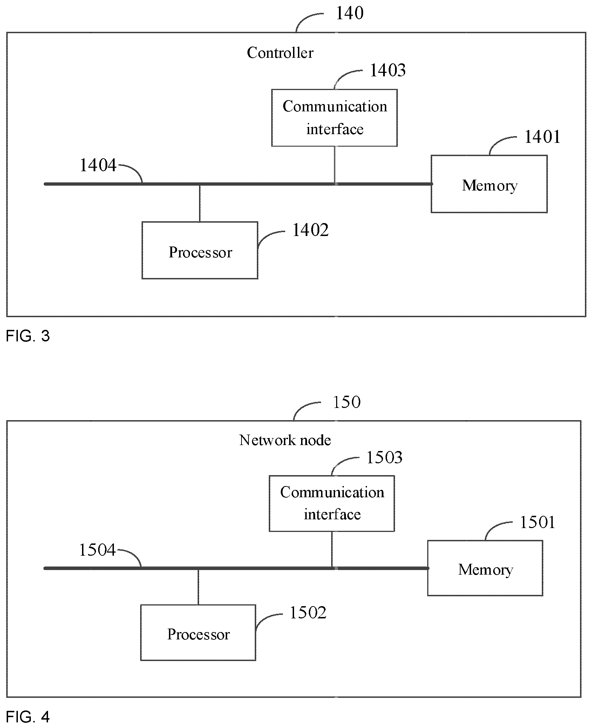

FIG. 3 is a schematic diagram of a hardware structure of a controller provided by an embodiment of the present application. The controller 140 includes: a memory 1401 and a processor 1402. The memory 1401 is configured to store program instructions, and the processor 1402 is configured to call the program instructions in the memory 1401 to execute the steps in the method embodiment. And the implementation principle and beneficial effects therebetween are similar, and will not be repeated here.

Optionally, the above controller 140 further includes a communication interface 1403, and the communication interface 1403 may be connected to the processor 1402 through a bus 1404. The processor 1402 may control the communication interface 1403 to implement receiving and sending functions of the controller 140.

FIG. 4 is a schematic diagram of a hardware structure of a network node provided by an embodiment of the present application. The network node 150 includes: a memory 1501 and a processor 1502. The memory 1501 is configured to store program instructions, and the processor 1502 is configured to call the program instructions in the memory 1501 to execute the steps in the method embodiment. And the implementation principle and beneficial effects therebetween are similar, and will not be repeated here.

Optionally, the above network node 150 further includes a communication interface 1503, and the communication interface 1503 may be connected to the processor 1502 through a bus 1504. The processor 1502 may control the communication interface 1503 to implement receiving and sending functions of the network node 150.

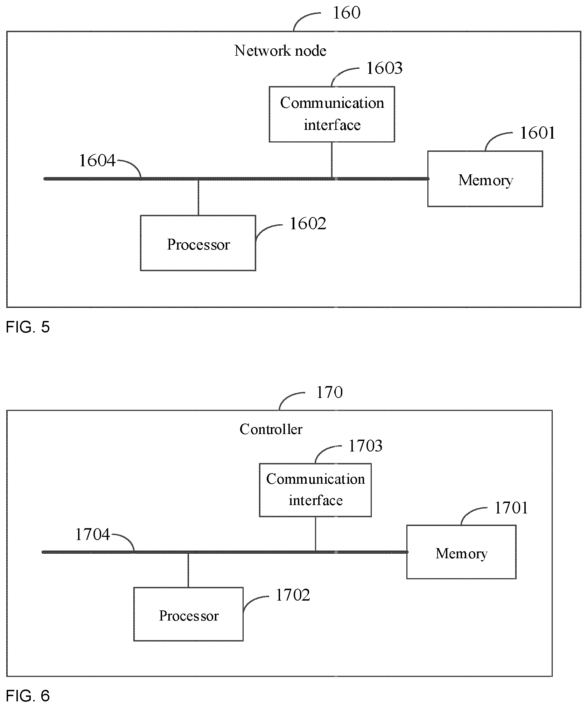

FIG. 5 is a schematic diagram of a hardware structure of a network node provided by an embodiment of the present application. The network node 160 includes: a memory 1601 and a processor 1602. The memory 1601 is configured to store program instructions, and the processor 1602 is configured to call the program instructions in the memory 1601 to execute the steps in the method embodiment. And the implementation principle and beneficial effects therebetween are similar, and will not be repeated here.

Optionally, the above network node 160 further includes a communication interface 1603, and the communication interface 1603 may be connected to the processor 1602 through a bus 1604. The processor 1602 may control the communication interface 1603 to implement receiving and sending functions of the network node 160.

FIG. 6 is a schematic diagram of a hardware structure of a controller provided by an embodiment of the present application. The controller 170 includes: a memory 1701 and a processor 1702. The memory 1701 is configured to store program instructions, and the processor 1702 is configured to call the program instructions in the memory 1701 to execute the steps in the method embodiment. And the implementation principle and beneficial effects therebetween are similar, and will not be repeated here.

Optionally, the above controller 170 further includes a communication interface 1703, and the communication interface 1703 may be connected to the processor 1702 through a bus 1704. The processor 1702 may control the communication interface 1703 to implement receiving and sending functions of the controller 170.

FIG. 7 is a schematic diagram of a hardware structure of a network node provided by an embodiment of the present application. The network node 180 includes: a memory 1801 and a processor 1802. The memory 1801 is configured to store program instructions, and the processor 1802 is configured to call the program instructions in the memory 1801 to execute the steps in the method embodiment. And the implementation principle and beneficial effects therebetween are similar, and will not be repeated here.

Optionally, the above network node 180 further includes a communication interface 1803, and the communication interface 1803 may be connected to the processor 1802 through a bus 1804. The processor 1802 may control the communication interface 1803 to implement receiving and sending functions of the network node 180.

The above integrated modules implemented in a form of software function modules may be stored in a computer readable storage medium. The above software function modules are stored in a storage medium, and include several instructions to enable a computer device (which may be a personal computer, a server, or a network device, etc.) or a processor to execute part of steps of the methods of the various embodiments of the present application.

The above embodiments may be implemented wholly or in part by software, hardware, firmware, or any combination thereof. When the above embodiments are implemented using software, all or part of them may be implemented in the form of computer program products. The computer program products include one or more computer instructions. When computer program instructions are loaded and executed on a computer, all or part of the processes or functions according to the embodiments of the present application are generated. The computer may be a general-purpose computer, a special-purpose computer, a computer network, or other programmable apparatuses. The computer instructions may be stored in a computer readable storage medium, or transmitted from one computer readable storage medium to another computer readable storage medium. For example, the computer instructions may be transmitted from one website site, computer, server, or data center via wired (such as a coaxial cable, a fiber optic, a digital user line (DSL)) or wireless (such as an infrared, a wireless, a microwave, etc.) to another website site, computer, server or data center. The computer readable storage medium may be any available medium that the computer can access, or a data storage device that includes one or more available media integrations such as a server or a data center. The available medium may be a magnetic medium (for example, a floppy disk, a hard disk, a magnetic tape), an optical medium (for example, a Digital Video Disc (DVD)), or a semiconductor medium (for example, a solid state disk (SSD)), etc.

Based on the above hardware structure of the terminal device and the communication network system, various embodiments of the present application are proposed.

FIG. 8 is a schematic signaling diagram 1 of a processing method provided by an embodiment of the present application. As shown in FIG. 8, the method includes:

S81, a network device sends configuration information and/or scheduling information for carriers in a same cell, where the configuration information and/or the scheduling information are(is) used to indicate a scheduling manner of the transport block transmitted on the carrier.

Optionally, the same cell is a same logical cell. A cell identifier (cell ID) corresponding to the carrier in the same cell is the same.

Optionally, a number of carriers in the same cell may be one or more, and the transport block may be transmitted on the carrier in the same cell.

Optionally, the scheduling information is used to indicate how to implement scheduling of the transport block transmitted on the carrier, and the configuration information of the carrier is used to indicate a frequency domain of the carrier. According to the scheduling information and/or configuration information, the scheduling manner of the transport block transmitted may be acquired.

Optionally, transmission of the transport block on the carrier may be that the network device sends the transport block to a terminal device on the carrier, that is, performs a physical downlink shared channel (PDSCH) transmission.

Optionally, the transmission of the transport block on the carrier may be that the terminal device sends the transport block to the network device on the carrier, that is, performs a physical uplink shared channel (PUSCH) transmission.

Optionally, the scheduling manner of the transport block transmitted on the carrier includes at least one of frequency domain resources, time domain resources, modulation schemes, transport block sizes, redundancy versions and code block groups of the transport block transmitted on the carrier.

S82, the terminal device receives the configuration information and/or the scheduling information of the carriers in the same cell.

After the network device sends the scheduling information and/or the configuration information of the carrier in the same cell to the terminal device, the terminal device may receive the scheduling information and/or the configuration information of the carrier in the same cell.

Optionally, the network device may send the scheduling information and/or the configuration information to the terminal device on the same carrier, and then the terminal device receives the scheduling information and/or the configuration information from the network device on the same carrier.

Optionally, the network device may send the scheduling information and/or the configuration information to the terminal device on different carriers, and then the terminal device receives the scheduling information and/or the configuration information from the network device on different carriers.

Optionally, the network device sends the configuration information to the terminal device on an anchor carrier, and then the terminal device receives the configuration information from the network device on the anchor carrier.

The network device sends the scheduling information to the terminal device on at least one target carrier of the carriers in the same cell, and then the terminal device receives the scheduling information from the network device on the at least one target carrier.

Optionally, the target carrier is the anchor carrier, and the anchor carrier is a carrier that carries the configuration information.

Optionally, the target carrier is a carrier whose reference signal receiving power (RSRP) meets a preset condition among the carrier in the cell.

Optionally, the target carrier is a carrier with a highest RSRP among the carrier in the cell, that is, the RSRP of the target carrier is greater than or equal to the RSRP of other carriers in the cell except the target carrier.

Optionally, the target carrier is a carrier whose RSRP is greater than or equal to a first threshold among the carrier in the cell.

Optionally, the first threshold may be a preset value, or a value configured by the network device for the terminal device. For example, the network device may configure the first threshold for the terminal device through a radio resource control (RRC) signaling. A value of the first threshold may be a fixed value or a dynamically adjusted value.

When the network device sends the scheduling information to the terminal device on the target carrier, since the target carrier is a carrier whose RSRP meets the preset condition, that is, the target carrier is the carrier with the highest RSRP in the cell, or the target carrier is the carrier whose RSRP is greater than or equal to the first threshold, a channel quality of the target carrier is better, which can improve a success rate of scheduling information transmission.

Optionally, the network device sends the scheduling information to the terminal device on at least two carriers in the same cell, and then the terminal device receives the scheduling information from the network device on the at least two carriers.

S83, the terminal device determines, according to the configuration information and/or the scheduling information, the scheduling manner of the transport block transmitted on the carrier.

After receiving the scheduling information and/or the configuration information from the network device, the terminal device may determine the scheduling manner of the transport block transmitted on the carrier according to the scheduling information and/or the configuration information.

Optionally, the scheduling manner of the transport block transmitted on the carrier includes at least one of frequency domain resources, time domain resources, modulation schemes, transport block sizes, redundancy versions and code block groups of the transport block transmitted on the carrier.

According to the scheduling manner of the transport block transmitted on the carrier, the transmission of the transport block between the terminal device and the network device can be implemented.

Optionally, the transmission of the transport block on the carrier may be that the network device sends the transport block to the terminal device on the carrier, that is, performs the PDSCH transmission.

Optionally, the transmission of the transport block on the carrier may be that the terminal device sends the transport block to the network device on the carrier, that is, performs the PUSCH transmission.

Before the transmission of the transport block between the terminal device and the network device, it is necessary to first determine the scheduling manner of the transport block transmitted on the carrier.

Optionally, the terminal device receives the scheduling information and/or the configuration information of the carrier in the same cell, and determines the scheduling manner of the transport block transmitted on the carrier in the cell according to the scheduling information and/or the configuration information.

Optionally, the network device sends the configuration information to the terminal device on the anchor carrier of the carrier in the cell, and the terminal device receives the configuration information on the anchor carrier.

The configuration information includes frequency points and/or bandwidths of the carrier.

The configuration information includes frequencies and/or bandwidths of all carriers in the cell, that is, the frequencies and/or bandwidths of carriers in the cell are all sent by the network device to the terminal device on the anchor carrier.

The cell includes one or more carriers. If the cell includes only one carrier, the network device sends the configuration information of the carrier to the terminal device on the carrier. If the cell includes multiple carriers, the network device sends the configuration information of the multiple carriers to the terminal device on the anchor carrier of the multiple carriers, and the configuration information includes the frequency point and/or bandwidth of each of the multiple carriers.

Optionally, the configuration information is carried in a system information block (SIB). The network device sends the SIB to the terminal device on the anchor carrier, and the terminal device receives the SIB on the anchor carrier, and acquires the configuration information of the carrier in the cell according to the SIB.

Optionally, the scheduling information is carried in downlink control information (DCI). Optionally, a number of carriers in the same cell is more than one, the network device sends the downlink control information to the terminal device on at least one target carrier of the more than one carrier, and the terminal device receives the downlink control information on the at least one target carrier, and acquires the scheduling information of the carrier in the cell according to the downlink control information.

The scheduling information transmitted on the target carrier includes at least a carrier indicator. Optionally, the scheduling information transmitted on the target carrier includes at least one of frequency domain resource assignment information, time domain resource assignment information, modulation and coding scheme, redundancy version information, and code block group transmission information.

The frequency domain resource assignment information includes a starting resource block (RB) and an available resource block for at least one carrier, and the frequency domain resource assignment information is used to indicate the frequency domain resources of the transport block transmitted on the at least one carrier.

The time domain resource assignment information includes a starting symbol position and a time domain symbol duration of at least one carrier, and the time domain resource assignment information is used to indicate the time domain resources of the transport block transmitted on the at least one carrier.

The modulation and coding scheme is used to indicate the modulation scheme and the transport block size of the transport block transmitted on at least one carrier. Optionally, the transport block size is a size after modulation according to the modulation scheme indicated by the modulation and coding scheme.

The redundancy version information includes redundancy version identifier of at least one carrier, and the redundancy version information is used to indicate the redundancy version of the transport block transmitted on the at least one carrier.

The carrier indicator is used to indicate the scheduling information of which carrier(s) is included in the downlink control information. When the downlink control information includes the scheduling information of multiple carriers, the carrier indicator is also used to indicate each bit in the downlink control information corresponds to the scheduling information of which carrier.

The code block group transmission information is used to indicate a code block group of the transport block transmitted on at least one carrier. When a number of carriers in the same cell is 1, the transport block may only be transmitted on this carrier in a complete transmission manner; when the number of the carriers in the same cell is more than one, the transport block may be transmitted on the more than one carrier in the complete transmission manner, or in a distributed transmission manner. When the transport block is transmitted in the distributed transmission manner, the transport block needs to be divided into different code block groups, and for each code block group, there is corresponding code block group transmission information, and the code block group transmission information corresponds to the code block group one to one. When the scheduling information of a certain carrier includes the code block group transmission information, it represents that the code block group corresponding to the code block group transmission information is transmitted on this carrier, or the code block group corresponding to the code block group transmission information is transmitted on the carrier corresponding to the carrier indicator.

Optionally, after the scheduling information and/or the configuration information are(is) acquired, the frequency domain resources of the transport block transmitted on the carrier may be determined according to the scheduling information and/or the configuration information.

For any target carrier, if the scheduling information transmitted on the target carrier includes the frequency domain resource assignment information, the frequency domain resource assignment information is used to indicate the frequency domain resources of the transport block transmitted on M carriers, or, the frequency domain resource assignment information is used to indicate the frequency domain resource for transmission on the target carrier. $M$ is greater than or equal to 1 and less than or equal to $N$, where $N$ is the amount of the more than one carrier in the cell, and the $M$ carriers include the target carrier.

Optionally, when the frequency domain resource assignment information is used to indicate the frequency domain resources of the transport block transmitted on the $M$ carriers, the frequency domain resource assignment information includes common frequency domain resource indication bits corresponding to the M carriers or M frequency domain resource indicator bits respectively corresponding to the $M$ carriers.

Optionally, in the carriers with different bandwidths, the number of RBs included in one resource block group (RBG) may be different. Table 1 illustrates the number of RBs included in one RBG within different bandwidth ranges.

Table 1

| Bandwidth size (RB) | The number of RBs included in one RBG (configuration 1) | The number of RBs included in one RBG (configuration 2) |
|---|---|---|
| 1-36 | 2 | 4 |
| 37-72 | 4 | 8 |
| 73-144 | 8 | 16 |
| 145-275 | 16 | 16 |

For example, if the bandwidth of a certain carrier is 100 RBs, and the bandwidth falls within a range of 73-144, the number of RBs included in each RBG of the carrier may be determined according to a configuration parameter. Optionally, the configuration parameter is a parameter pre-configured by high layers, and the network device and the terminal device may store the configuration parameter in advance. For example, if the configuration parameter indicates configuration 1, then each RBG in the carrier includes 8 RBs; if the configuration parameter indicates configuration 2, then each RBG in the carrier includes 16 RBs.

Optionally, a formula for calculating the number of RBGs in the carrier is:

$$N_{RBG} = \left\lceil (N_{BWP,i}^{size} + (N_{BWP,i}^{start} \bmod P))/P \right\rceil,$$

the size of the first RBG is: $RBG_0^{size} = P - N_{BWP,i}^{start} \bmod P$ ;

the size of the last RBG is: $RBG_{last}^{size} = (N_{BWP,i}^{start} + N_{BWP,i}^{size}) \bmod P$ , if $(N_{BWP,i}^{start} + N_{BWP,i}^{size}) \bmod P$ $>0$ , and P otherwise;

the size of all other RBGs is: P;

where P is the value shown in a second or third column of Table 1, that is, the number of RBs included in one RBG;

$N_{RBG}$ is the number of RBGs in the carrier, $N_{BWP,i}^{size}$ is carrier bandwidth, $N_{BWP,i}^{start}$ is starting RB position of the carrier, $RBG_0^{size}$ is the size of the first RBG in the carrier, $RBG_{last}^{size}$ is the size of the last RBG in the carrier.

The frequency domain resource assignment information may be used to indicate the frequency domain resource of one carrier, or the frequency domain resource of multiple carriers. When the frequency domain resource assignment information is used to indicate the frequency domain resource of multiple carriers, the frequency domain resource of the multiple carriers may have a same frequency domain as the carrier carrying the frequency domain resource assignment information or may be the frequency domain resource for a corresponding bit field of each carrier in the frequency domain resource assignment information. An available RBG in the corresponding carrier may be determined according to the frequency domain resource assignment information, and then the number of RBs included in each RBG in the corresponding carrier may be determined according to the bandwidth of the carrier and the relationship between the size of the RBG and the bandwidth of examples in Table 1, and then the frequency domain resource in the corresponding carrier may be determined as the RB included in the available RBG.

The number of bits for the frequency domain resource assignment information is related to frequency domain resource assignment type. Optionally, the frequency domain resource assignment type is type 0, type 1 or dynamic switching type ('*dynamicSwitch*')*.* When the frequency domain resource assignment type is type 0, the number of bits occupied by the frequency domain resource assignment information is related to the number of RBGs under each carrier bandwidth. When the frequency domain resource assignment type is type 1, the number of bits occupied by the frequency domain resource assignment information is related to the bandwidth size of the each carrier bandwidth. When the frequency domain resource assignment type is *'dynamicSwitch',* the number of bits occupied by the frequency domain resource assignment information is related to both a size of the each carrier bandwidth and the number of RBGs under the each carrier bandwidth. A specific calculation of the number of bits occupied by the frequency domain resource assignment information is as follows.

When the frequency domain resource assignment type is type 0, and the same frequency domain resource is adopted for each of multiple carriers scheduled through one carrier in a logical cell, the number of bits occupied by the frequency domain resource assignment information is $\max_j\{N_{RBGj}\}$, where $N_{RBGj}$ is the number of RBGs included in a *j*th carrier in the cell, *j* is greater than or equal to 1 and less than or equal to *n, n is* the number of carriers carried by the scheduling information, and $\max_j\{N_{RBGj}\}$ is the maximum number of RBG among the RBGs included in respective carriers carried by the scheduling information.

When the frequency domain resource assignment type is type 0, and multiple carriers scheduled by one carrier in one logical cell adopt different frequency domain resources, the number of bits occupied by the frequency domain resource assignment information is $\text{sum}_j\{N_{RBGj}\}$, where $N_{RBGj}$ is the number of RBGs included in a *j*th carrier in the cell, *j* is greater than or equal to 1 and less than or equal to *n, n is* the number of carriers carried by the scheduling information, and $\text{sum}_j\{N_{RBGj}\}$ is a sum of the number of RBGs included in the carriers carried by the scheduling information.

When the frequency domain resource assignment type is type 1, and the same frequency domain resource is adopted for each of the multiple carriers in the logical cell, the number of bits occupied by the frequency domain resource assignment information is $\max_j\left\{\left\lceil log_2(N_{RB}^{DL,BWPj}(N_{RB}^{DL,BWPj} + 1)/2)\right\rceil\right\}$ , where *j* is greater than or equal to 1 and less than or equal to *n, n is* the number of carriers carried by the scheduling information, and $N_{RB}^{DL,BWPj}$ is the number of available RBs within the bandwidth of the *j*th carrier.

When the frequency domain resource assignment type is type 1, and multiple carriers scheduled by one carrier in one logical cell adopt different frequency domain resources, the number of bits occupied by the frequency domain

resource assignment information $\mathrm{sum}_j\{\lceil log_2(N_{RB}^{DL,BWP_j}(N_{RB}^{DL,BWP_j}+1)/2)\rceil\}$ , where $\lceil log_2(N_{RB}^{DL,BWP_j}(N_{RB}^{DL,BWP_j}+1)/2)\rceil$ is the frequency resource size of the *j*th carrier in the cell, *j* is greater than or equal to 1 and less than or equal to *n, n* is the number of carriers carried by the scheduling information, $N_{RB}^{DL,BWP_j}$ is the number of available RBs within the bandwidth of the *j*th carrier.

When the frequency domain resource assignment type is *'dynamicSwitch'*, and multiple carriers scheduled by one carrier in one logical cell adopt the same frequency domain resource, the number of bits occupied by the frequency domain resource assignment information is $max_j\left(\lceil log_2(N_{RB}^{DL,BWP_j}(N_{RB}^{DL,BWP_j}+1)/2)\rceil,\ N_{RBG_j}\right)+1$, where *j* is greater than or equal to 1 and less than or equal to *n, n* is the number of carriers carried by the scheduling information, $N_{RB}^{DL,BWP_j}$ is the number of available RBs within the bandwidth of the *j*th carrier.

When the frequency domain resource assignment type is *'dynamicSwitch'*, and multiple carriers scheduled by one carrier in one logical cell adopt different frequency domain resources, the number of bits occupied by the frequency domain resource assignment information is $sum_j\left(\lceil log_2(N_{RB}^{DL,BWP_j}(N_{RB}^{DL,BWP_j}+1)/2)\rceil,\ N_{RBG_j}\right)+1$, where *j* is greater than or equal to 1 and less than or equal to *n, n* is the number of carriers carried by the scheduling information, $N_{RB}^{DL,BWP_j}$ is the number of available RBs within the bandwidth of the *j*th carrier.

Frequency domain resource assignment type being Type 0 is taken as an example in the following to introduce how to determine the frequency domain resources of the transport block transmitted on the carrier according to the frequency domain resource assignment information.

For example, if the frequency domain resource assignment information is used to indicate frequency domain resources of one carrier and the frequency domain resource assignment type is type 0, if the carrier includes 10 RBGs, the frequency domain resource assignment information may include 10 bits. And bit 0 indicates that the RBG is unavailable, and bit 1 indicates that the RBG is available. For example, if each of the third, fifth and sixth bits in the 10 bits for the frequency domain resource assignment information is 1, it is known that the third, fifth and sixth RBGs in the carrier are available. Then, combined with the number of RBs included in each RBG in the carrier, the available RBs in the carrier may be determined, and these available RBs are the frequency domain resources of the transport block transmitted on the carrier.

For example, if the frequency domain resource assignment information is used to indicate the frequency domain resource of multiple carriers and the frequency domain resource assignment type is type 0, if the multiple carriers carried by the scheduling information use the same frequency domain resource, then the maximum number of RBGs in each of the carriers is taken to be the maximum number of bits for the frequency domain resource assignment information. For example, if the frequency domain resource assignment information is used to indicate the frequency domain resources of 2 carriers, where carrier 0 includes 5 RBGs, and carrier 1 includes 8 RBGs, then the frequency domain resource assignment information may include max(5,8)=8 bits, these 8 bits are common frequency domain resource indication bits corresponding to the 2 carriers. For carrier 0, only the first 5 bits of the 8 bits for the frequency domain resource assignment information are valid; for carrier 1, all 8 bits for the frequency domain resource assignment information are valid bits, and bit 0 indicates that the corresponding RBG is unavailable, and bit 1 indicates that the corresponding RBG is available.

For example, the 8 bits of the frequency domain resource assignment information are 00101010, that is, the third, fifth and seventh bits of the 8 bits are 1, then for carrier 0, the third and fifth RBGs are available, and then combined with the number of RBs included in each RBG of carrier 0, the available RBs of carrier 0 may be determined, and the available RBs of carrier 0 are the frequency domain resources of the transport block transmitted on carrier 0. For carrier 1, the third and fifth and seventh RBGs are available, and then combined with the number of RBs included in each RBG of carrier 1, the available RBs of carrier 1 may be determined, and the available RBs of carrier 1 are the frequency domain resources of the transport block transmitted on carrier 1.

For example, if the frequency domain resource assignment information is used to indicate the frequency domain resource of multiple carriers and the frequency domain resource assignment type is type 0, if the multiple carriers carried by the scheduling information use different frequency domain resources respectively, then the number of bits occupied by the frequency domain resource assignment information is a sum of the frequency domain resource indication bits required by the carriers. For example, if the frequency domain resource assignment information is used to indicate the frequency domain resources of 2 carriers, where carrier 0 includes 5 RBGs, and carrier 1 includes 8 RBGs, then the frequency domain resource assignment information may include 5+8=13 bits, where the first 5 bits are frequency domain resource indication bits corresponding to carrier 0, and are used to indicate the frequency domain resources of the transport block transmitted on carrier 0; the last 8 bits correspond to carrier 1, are frequency domain resource indication bits corresponding to carrier 1, and are used to indicate the frequency domain resources of the transport block transmitted on carrier 1.

For example, the 13 bits for the frequency domain resource assignment information are 0010101010110, then for carrier 0, the first 5 bits 00101 indicate that the third and fifth RBGs are available, and then combined with the number of RBs included in each RBG of carrier 0, the available RBs of carrier 0 may be determined, and the available RBs of carrier 0 are the frequency domain resources of the transport block transmitted on carrier 0; for carrier 1, the last 8 bits 01010110 indicate that the second, fourth, sixth and seventh RBGs are available, and then combined with the number of RBs included in each RBG of carrier 1, the available RBs of carrier 1 may be determined, and the available RBs of carrier 1 are the frequency domain resources of the transport block transmitted on carrier 1.

Optionally, according to the scheduling information, at least one of the time domain resource, the modulation scheme, the transport block size, the redundancy version and the code block group of the transport block transmitted on the carrier may be determined.

Optionally, the time domain resource is the starting symbol position and the time domain symbol duration indicated in the time domain resource assignment information.

Optionally, the time domain resource assignment information may be used to indicate the time domain resource of one carrier, or the time domain resources of multiple carriers.

For any target carrier, if the scheduling information transmitted on the target carrier includes the time domain resource assignment information, the time domain resource assignment information is used to indicate the time domain resources of the transport block transmitted on M carriers, or, the time domain resource assignment information is used to indicate the time domain resources for transmission on the target carrier. $M$ is greater than or equal to 1 and less than or equal to $N$, $N$ is the number of the multiple carriers in the cell, and the $M$ carriers include the target carrier.

Optionally, when the time domain resource assignment information is used to indicate the time domain resources of the transport block transmitted on the M carriers, the time domain resource assignment information includes a group of common time domain resource indication bits corresponding to the $M$ carriers or M groups of time domain resource indication bits respectively corresponding to the $M$ carriers.

Optionally, when the time domain resource assignment information transmitted on the target carrier is used to indicate the time domain resources of multiple carriers, if same time domain resource assignment information is adopted for the multiple carriers carried by the scheduling information, then the number of bits occupied by the time domain resource assignment information of the multiple carriers is 4 bits, and these 4 bits are the common time domain resource indication bits corresponding to the multiple carriers in the time domain resource assignment information. For example, when the time domain resource assignment information is used to indicate the time domain resources of carrier 0 and carrier 1, the time domain resource assignment information includes the starting symbol position and time domain symbol duration, a time period may be determined according to the starting symbol position and time domain symbol duration, and within the time period, the transport block is transmitted on carrier 0 and carrier 1. Carrier 0 and carrier 1 have the same starting symbol position and time domain symbol duration, that is, the time domain resources of the transport block transmitted on carrier 0 and carrier 1 are the same.

Optionally, when the time domain resource assignment information transmitted on the target carrier is used to indicate the time domain resources of the $M$ carriers, if different time domain resource assignment information is adopted for the $M$ carriers carried by the scheduling information, then the number of bits occupied by the time domain resource assignment information transmitted on the target carrier is 4*M bits, where $M$ is a number of scheduled carriers (including its own scheduling information). For example, when the time domain resource assignment information transmitted on carrier 0 is used to indicate the time domain resources of carrier 0 and carrier 1, the number of bits occupied by the time domain resource assignment information is 4*2=8 bits, where the first 4 bits is the time domain resource indication bits corresponding to carrier 0, indicating the time domain resources of the transport block transmitted on carrier 0, that is, the starting symbol position and the time domain symbol duration of the transport block transmitted on carrier 0. And the last 4 bits are the time domain resource indication bits corresponding to carrier 1, indicating the time domain resources of the transport block transmitted on carrier 1, that is, the starting symbol position and the time domain symbol duration of the transport block transmitted on carrier 1.

Optionally, the modulation and coding scheme is used to indicate the modulation scheme and the transport block size of the transport block transmitted on the carrier.

Optionally, the modulation and coding scheme may be used to indicate the modulation scheme and the transport block size on one carrier, or the modulation scheme and the transport block size on multiple carriers.

For any target carrier, if scheduling information transmitted on the target carrier includes the modulation and coding scheme, the modulation and coding scheme is used to indicate the modulation and coding scheme of the transport block transmitted on M carriers, or the modulation and coding scheme is used to indicate the modulation and coding scheme for transmission on the target carrier. $M$ is greater than or equal to 1 and less than or equal to $N$, $N$ is the number of the multiple carriers in the cell, and the M carriers include the target carrier.

Optionally, when the modulation and coding scheme is used to indicate the modulation and coding scheme of the transport block transmitted on the $M$ carriers, the modulation and coding scheme includes a group of common modulation and coding scheme indication bits corresponding to the $M$ carriers or $M$ groups of modulation and coding scheme indication bits respectively corresponding to the $M$ carriers.

Optionally, when the modulation and coding scheme is used to indicate the modulation scheme and the transport block size on the $M$ carriers, if a same modulation and coding scheme is adopted for the multiple carriers carried by the scheduling information, the number of bits for the modulation and coding scheme is 5, and these 5 bits are the group of common modulation and coding scheme indication bits corresponding to the multiple carriers in the modulation and coding scheme. When different modulation and coding schemes are adopted for the multiple carriers carried by the scheduling information, the number of bits for the modulation and coding scheme is 5*M, including $M$ groups of modulation and coding scheme indication bits respectively corresponding to the $M$ carriers, where $M$ is the number of the scheduled carriers.

Optionally, the redundancy version information includes redundancy version identifier of at least one carrier, and the redundancy versions of the transport block transmitted on the at least one carrier may be determined according to the redundancy version information.

Optionally, when the number of bits for the redundancy version identifier is different, the value of the redundancy version transmitted by the transport block on the corresponding carrier may also be different.

Optionally, when the number of bits for the redundancy version identifier is 0, the redundancy version of the transport block transmitted on the corresponding carrier is 0.

Optionally, when the number of bits for the redundancy version identifier is 1, the redundancy version of the transport block transmitted on the corresponding carrier is 0 or 3.

Table 2 shows the value of the redundancy version of the transport block transmitted on the corresponding carrier when the number of bits for the redundancy version identifier is 1.

Table 2

| Redundancy version information | Redundancy version |
|---|---|
| 0 | 0 |
| 1 | 3 |

When the value of the redundancy version information is 0, the redundancy version of the transport block transmitted on the corresponding carrier is 0; when the value of the redundancy version information is 1, the redundancy version of the transport block transmitted on the corresponding carrier is 3.

Optionally, when the number of bits for the redundancy version identifier is 2, the redundancy version of the transport block transmitted on the corresponding carrier is any one of 0, 1, 2 and 3.

Table 3 shows the value of the redundancy version of the transport block transmitted on the corresponding carrier when the number of bits for the redundancy version identifier is 2.

Table 3

| Redundancy version information | Redundancy version |
|---|---|
| 00 | 0 |
| 01 | 1 |
| 10 | 2 |
| 11 | 3 |

When the value of the redundancy version information is 00, the redundancy version of the transport block transmitted on the corresponding carrier is 0; when the value of the redundancy version information is 01, the redundancy version of the transport block transmitted on the corresponding carrier is 1; when the value of the redundancy version information is 10, the redundancy versions of the transport block transmitted on the corresponding carrier is 2; when the value of the redundancy version information is 11, the redundancy version of the transport block transmitted on the corresponding carrier is 3.

For any target carrier, if the scheduling information transmitted on the target carrier includes the redundancy version information, the redundancy version information is used to indicate the redundancy versions of the transport block transmitted on $M$ carriers, or, the redundancy version information is used to indicate the redundancy version for transmission on the target carrier. $M$ is greater than or equal to 1 and less than or equal to $N$, where $N$ is the number of the multiple carriers in the cell, and the $M$ carriers include the target carrier.

Optionally, when the redundancy version information is used to indicate the redundancy versions of the transport block transmitted on the $M$ carriers, the redundancy version information includes a group of common redundancy version identifier corresponding to the $M$ carriers or $M$ groups of redundancy version identifiers respectively corresponding to the $M$ carriers.

Optionally, when the redundancy version information only indicates the redundancy version of one carrier, the number of bits occupied by the redundancy version information is 0, 1 or 2; when the redundancy version information indicates the redundancy versions of the $M$ carriers, if a same redundancy version is adopted for the $M$ carriers carried by the scheduling information or the redundancy versions of the $M$ carriers may be obtained based on one carrier as per rules, the number of bits occupied by the redundancy version information is 0, 1 or 2; if different redundancy versions are adopted for the $M$ carriers carried by the scheduling information, the number of bits occupied by the redundancy versions is {0, 1 or 2}*$M,$ where $M$ is the number of the scheduled carriers.

Optionally, the redundancy version information includes a group of common redundancy version identifier corresponding to the $M$ carriers, or $M$ groups of redundancy version identifiers respectively corresponding to the $M$ carriers.

When the scheduling information of at least two carriers in the same logical cell is carried in DCI of one carrier, the DCI includes carrier indicator, and the carrier indicator is used to indicate the scheduling information of which carriers is included in the DCI. If the DCI includes the scheduling information of at least two carriers, the carrier indicator is also used to implicitly indicate an order of partial scheduling information of the carriers.

Optionally, when the transport block is transmitted in the distributed transmission manner, the scheduling information also includes the code block group transmission information, and the code block group transmission information is used to indicate the code block group of the transport block transmitted on the corresponding carrier.

In the above embodiments, transmission manners of the configuration information and the scheduling information, and how to determine the scheduling manner of the transport block transmitted on the carrier according to the configuration information and the scheduling information are introduced. When the number of carriers in the same logical cell is more than one, and there is a situation where the more than one carrier is scheduled through one carrier (that is, the network device sends all or part of the scheduling information of the more than one carrier to the terminal device through one carrier), the same frequency domain resource or different frequency domain resources may be adopted for the more than one carrier; the same time domain resource or different time domain resources may be adopted for the more than one carrier; the same modulation and coding scheme or different modulation and coding schemes may be adopted for the more than one carrier; same redundancy version information or different redundancy version information may be adopted for the more than one carrier.

When all the scheduling information of the more than one carrier is transmitted through this one carrier, for example, carrier 0, carrier 1 and carrier 2 are scheduled through carrier 0, then the scheduling information transmitted on carrier 0 includes at least one of the frequency domain resource assignment information, the time domain resource assignment information, the modulation and coding scheme, the redundancy version information, the carrier indicator and the code block group transmission information. Same frequency domain resource or different frequency domain resources may be adopted for these three carriers of carrier 0, carrier 1, and carrier 2. Depending on whether the frequency domain resources of the carriers are the same, the number of bits included in the frequency domain resource assignment information is also different. Same time domain resource or different time domain resources may be adopted for these three carriers of carrier 0, carrier 1, and carrier 2. Depending on whether the time domain resources of the carriers are the same, the number of bits included in the time domain resource assignment information is also different. Same modulation and coding scheme or different modulation and coding schemes may be adopted for these three carriers of carrier 0, carrier 1, and carrier 2. Depending on whether the modulation and coding schemes of the carriers are the same, the number of bits included in the modulation and coding schemes is also different. Same redundancy version information or different redundancy version information may be adopted for these three carriers of carrier 0, carrier 1, and carrier 2. According to whether the redundancy version information of the carriers is the same, the number of bits included in the redundancy version information is also different.

When part of the scheduling information of the more than one carrier is transmitted through one carrier, for example, carrier 0, carrier 1 and carrier 2 are scheduled through carrier 0, then the scheduling information transmitted on carrier 0 includes at least one of the frequency domain resource assignment information, the time domain resource assignment information, the modulation and coding scheme, the redundancy version information, the carrier indicator and the code block group transmission information. Then, carrier 1 may be used to transmit remaining scheduling information of carrier 1, and carrier 2 may be used to transmit remaining scheduling information of carrier 2.

Optionally, carrier 0 is used to transmit all scheduling information of carrier 0, as well as the same scheduling information of carrier 0, carrier 1 and carrier 2. For example, when the same frequency domain resource and the same time domain resource are adopted for carrier 0, carrier 1, and carrier 2, the frequency domain resource assignment information

and the time domain resource assignment information of carrier 0, carrier 1 and carrier 2, as well as the redundancy version information and the modulation and coding scheme, etc. of carrier 0 may be transmitted on carrier 0. Then the redundancy version information and the modulation and coding scheme, etc., of carrier 1 are transmitted through carrier 1, the redundancy version information and the modulation and coding scheme, etc. of carrier 2 are transmitted through carrier 2.

Optionally, when the more than one carrier is scheduled through one carrier, any one or more of frequency domain resources, time domain resources, redundancy version information, and modulation and coding schemes of the more than one carrier may be the same or different. For example, when carrier 0, carrier 1 and carrier 2 are scheduled through carrier 0, the same time domain resource, the same redundancy version information, and different modulation and coding schemes and different frequency domain resources may be adopted for carrier 0, carrier 1 and carrier 2; the same time domain resource, different modulation and coding schemes, different frequency domain resources and different redundancy version information may be adopted for carrier 0, carrier 1 and carrier 2; the same time domain resource, same frequency domain resource, same redundancy version information, and different modulation and coding schemes, etc. may be adopted for carrier 0, carrier 1 and carrier 2. The network device determines the scheduling manner of the transport block transmitted on each carrier through the scheduling information transmitted on the carriers and the configuration information transmitted on the anchor carrier.

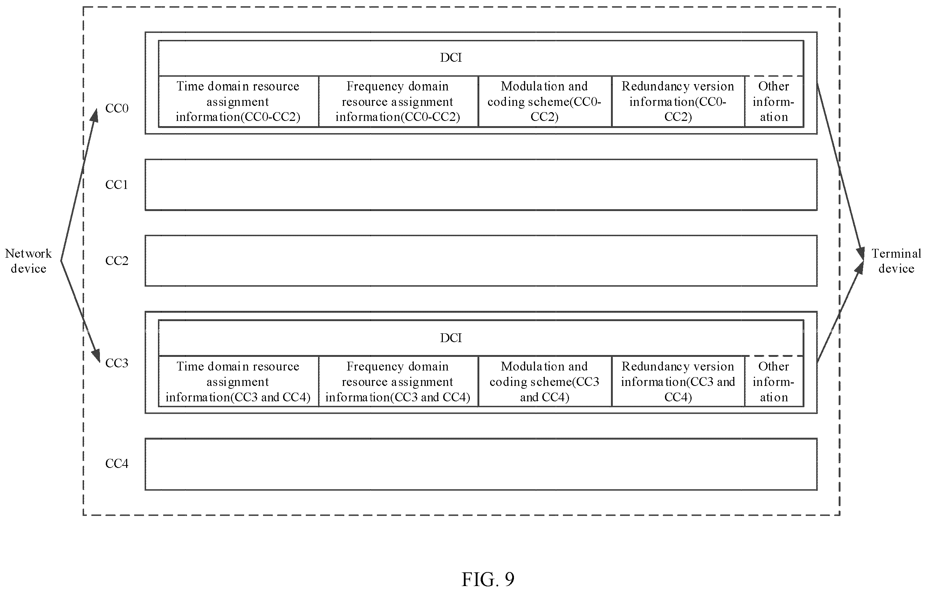

FIG. 9 is a schematic diagram 1 of scheduling information transmission provided by an embodiment of the present application. As shown in FIG. 9, a number of carriers in a same logical cell is 5, namely CC0, CC1, CC2, CC3 and CC4. CC0 carries all the scheduling information of CC0, CC1 and CC2. CC3 carries all the scheduling information of CC3 and CC4. In an example of FIG. 9, a target carrier includes CC0 and CC3.

According to time domain resource assignment information in a DCI on CC0, time domain resources of the transport block transmitted on CC0, CC1 and CC2 may be determined. If a same time domain resource is adopted for CC0, CC1 and CC2, a number of bits for the time domain resource assignment information in the DCI on CC0 is 4. If different time domain resources are adopted for CC0, CC1 and CC2, the number of bits for the time domain resource assignment information in the DCI on CC0 is 4*3=12. The time domain resources of the transport block transmitted on each carrier is determined according to a bit field corresponding to the time domain resource assignment information of the carrier.

According to the frequency domain resource assignment information in the DCI on CC0, the frequency domain resources of the transport block transmitted on CC0, CC1 and CC2 may be determined. When frequency domain resource assignment type is type 0, the number of frequency domain resource assignment information bits corresponding to CC0 is $N_{RBG_0}$, and $N_{RBG_0}$ is a number of RBGs included in CC0. Similarly, the number of frequency domain resource assignment information bits corresponding to CC1 is $N_{RBG_1}$, and the number of frequency domain resource assignment information bits corresponding to CC2 is $N_{RBG_2}$. If the same frequency domain resource is adopted for CC0, CC1 and CC2, the number of bits for the frequency domain resource assignment information in the DCI on CC0 is $\max_j\{N_{RBG_j}\}$, where $j=0,1,2$; If different frequency domain resources are adopted for CC0, CC1 and CC2, the number of bits for the frequency domain resource assignment information in the DCI on CC0 is $\mathrm{sum}_j\{N_{RBG_j}\}$, where $j=0,1,2$. When the frequency domain resource assignment type is other types, the number of bits for the frequency domain resource assignment information in the DCI on CC0 may be determined according to whether the same frequency domain resource is adopted for CC0, CC1 and CC2.

According to the modulation and coding scheme in the DCI on CC0, the modulation and coding scheme of the transport block transmitted on CC0, CC1 and CC2 may be determined. If a same modulation and coding scheme is adopted for CC0, CC1 and CC2, a number of bits for the modulation and coding scheme in the DCI on CC0 is 5. If different modulation and coding schemes are adopted for CC0, CC1 and CC2, the number of bits for the modulation and coding scheme in the DCI on CC0 is 5*3=15. The modulation and coding scheme of the transport block transmitted on each carrier is determined according to the bit field corresponding to the modulation and coding scheme of the carrier.

If the redundancy version of the transport block transmitted on CC0, CC1 and CC2 is same, a number of bits for the redundancy version information in the DCI on CC0 is {0, 1 or 2}. If the redundancy versions of the transport block transmitted on CC0, CC1 and CC2 is different, a possible implementation is that the number of bits for the redundancy version information in the DCI on CC0 is {0, 1 or 2}, which is used to indicate the redundancy versions of the transport block transmitted on CC0, and then the redundancy versions of the transport block transmitted on CC1 and CC2 is determined according to some rules; another possible implementation is that the number of bits for the redundancy version in the DCI on CC0 is 3*{0, 1 or 2}, and the redundancy versions of the transport block transmitted on each carrier is determined according to a bit field corresponding to the redundancy version information of the carrier.

For the target carrier CC0, the scheduling information transmitted on CC0 includes the frequency domain resource assignment information, and the frequency domain resource assignment information is used to indicate frequency domain resources of the transport block transmitted on $M$ carriers (that is, CC0, CC1 and CC2); the scheduling information transmitted on CC0 includes the time domain resource assignment information, and the time domain resource assignment information is used to indicate the time domain resources of the transport block transmitted on the $M$ carriers (that is, CC0, CC1 and CC2); the scheduling information transmitted on CC0 includes the modulation and coding scheme, and the modulation and coding scheme is used to indicate the modulation and coding scheme of the transport block transmitted on the $M$ carriers (that is, CC0, CC1 and CC2); the scheduling information transmitted on CC0 includes the redundancy version information, and the redundancy version information is used to indicate the redundancy version of the transport block transmitted on the $M$ carriers (that is, CC0, CC1 and CC2).

The number of bits of the DCI transmitted on CC0 at least includes a sum of the number of bits for the time domain resource assignment information, the frequency domain resource assignment information, the modulation and coding scheme, and the redundancy version information. For example, the same time domain resource is adopted for CC0, CC1, and CC2, so the number of bits for the time domain resource assignment information in the DCI on CC0 is 4; different frequency domain resource information is adopted for CC0, CC1, and CC2 and the frequency domain resource assignment type is type 0, so the number of bits for the frequency domain resource assignment information in the DCI on CC0 is $\text{sum}_j\{N_{RBGj}\}$, where $j=0,1,2$; the same redundancy version is adopted for CC0, CC1, and CC2, then the number of bits for the redundancy version information in the DCI on CC0 is {0, 1 or 2}; the same modulation and coding scheme is adopted for CC0, CC1, and CC2, then the number of bits for the modulation and coding scheme information in the DCI on CC0 is 5.

Therefore, the number of bits in the DCI on CC0 is at least $4+\text{sum}_j\{N_{RBGj}\}+\{0, 1 \text{ or } 2\}+5$. In addition to the frequency domain resource assignment information, the time domain resource assignment information, the modulation and coding scheme and the redundancy version information, the DCI transmitted on CC0 may also include other information, such as carrier indicator, code block group transmission information (for a situation when the transport block is transmitted in a distributed transmission manner, that is, the transport block is divided into multiple code block groups to transmit on the carrier) and the like.

For the target carrier CC3, the scheduling information transmitted on CC3 includes the frequency domain resource assignment information, and the frequency domain resource assignment information is used to indicate frequency domain resources of the transport block transmitted on $M$ carriers (that is, CC3 and CC4); the scheduling information transmitted on CC3 includes the time domain resource assignment information, and the time domain resource assignment information is used to indicate the time domain resources of the transport block transmitted on the $M$ carriers (that is, CC3 and CC4); the scheduling information transmitted on CC3 includes the modulation and coding scheme, and the modulation and coding scheme is used to indicate the modulation and coding scheme of the transport block transmitted on the $M$ carriers (that is, CC3 and CC4); the scheduling information transmitted on CC3 includes the redundancy version information, and the redundancy version information is used to indicate the redundancy version of the transport block transmitted on the $M$ carriers (that is, CC3 and CC4).

If time domain resources for CC3 and CC4 are different, but all of frequency domain resources (the frequency domain resource assignment type is type 0), redundancy version information, and modulation and coding schemes for CC3 and CC4 are same, then the number of bits of the DCI on CC3 is at least $4*2+\max_j\{N_{RBGj}\}+\{0, 1 \text{ or } 2\}+5$. Similarly, time domain resources, redundancy versions, etc. for CC0, CC1, and CC2 may be different, and a size of the scheduling information may be obtained according to the above solution. Similarly, in addition to the frequency domain resource assignment information, the time domain resource assignment information, the modulation and coding scheme and the redundancy version information, the DCI transmitted on CC3 may also include other information, such as the carrier indicator, code block group transmission information (for the situation when the transport block is transmitted in a distributed transmission manner, that is, the transport block is divided into multiple code block groups to transmit on the carrier) and the like.

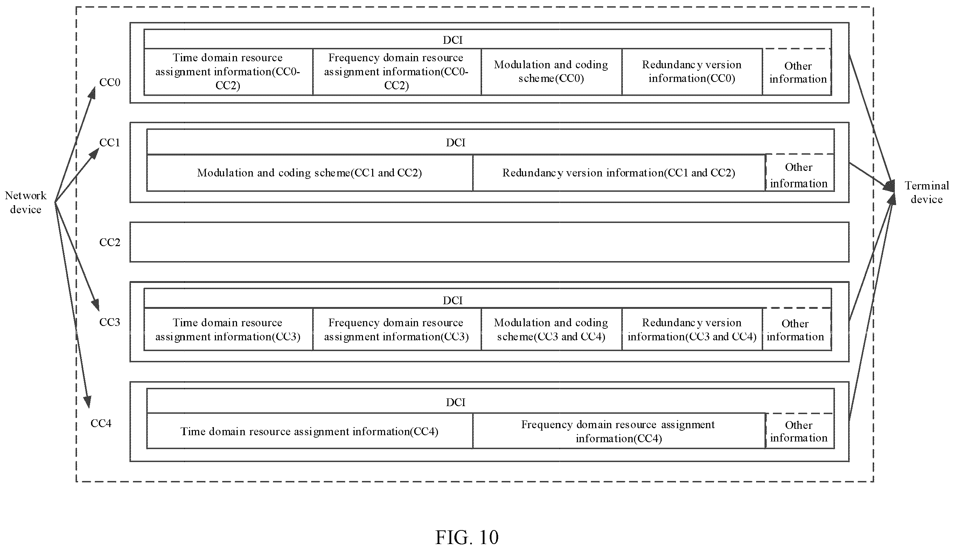

FIG. 10 is a schematic diagram 2 of scheduling information transmission provided by an embodiment of the present application. As shown in FIG. 10, a number of carriers in a same logical cell is 5, namely CC0, CC1, CC2, CC3 and CC4. CC0 carries all scheduling information of CC0 and part of scheduling information of CC1 and CC2, CC1 carries remaining scheduling information of CC1 and CC2. CC3 carries all the scheduling information of CC3 and part of the scheduling information of CC4. CC4 carries a remaining part of the scheduling information of CC4.

For example, time domain resource assignment information and frequency domain resource assignment information of CC1 and CC2 are carried on CC0, but remaining information such as redundancy version information and modulation and coding scheme are carried on CC1. CC3 carries the redundancy version information and the modulation and coding scheme of CC4, and CC4 carries the time domain resource assignment information and frequency domain resource assignment information of CC4, and so on.

Optionally, in addition to the frequency domain resource assignment information, the time domain resource assignment information, the modulation and coding scheme and the redundancy version information, a DCI transmitted on CC0 may also include other information, such as carrier indicator, the code block group transmission information (for the situation when the transport block is transmitted in a distributed transmission manner, that is, the transport block is divided into multiple code block groups to transmit on the carrier), and the like. The other information included in the DCI transmitted on CC1, CC3 and CC4 is similar to the other information included in the DCI transmitted on CC0, which will not be repeated here.

In an example of FIG. 10, a target carrier includes CC0, CC1, CC3 and CC4.

For the target carrier CC0, the scheduling information transmitted on CC0 includes the frequency domain resource assignment information, the time domain resource assignment information, the modulation and coding scheme and the redundancy version information. The frequency domain resource assignment information is used to indicate the frequency domain resources of the transport block transmitted on *M* carriers (that is, CC0, CC1 and CC2); the time domain resource assignment information is used to indicate the time domain resources of the transport block transmitted on the *M* carriers (that is, CC0, CC0, CC1 and CC2); the modulation and coding scheme is used to indicate the modulation and coding scheme of the transport block transmitted on the target carrier CC0; the redundancy version information is used to indicate redundancy versions of the transport block transmitted on the target carrier CC0.

For the target carrier CC1, the scheduling information transmitted on CC1 includes the modulation and coding scheme and the redundancy version information. The modulation and coding scheme is used to indicate the modulation and coding scheme of the transport block transmitted on *M* carriers (that is, CC1 and CC2); the redundancy version information is used to indicate the redundancy versions of the transport block transmitted on the *M* carriers (that is, CC1 and CC2).

For the target carrier CC3, the scheduling information transmitted on CC3 includes the frequency domain resource assignment information, the time domain resource assignment information, the modulation and coding scheme and the redundancy version information. The frequency domain resource assignment information is used to indicate the frequency domain resources of the transport block transmitted on the target carrier CC3; the time domain resource assignment information is used to indicate the time domain resources of the transport block transmitted on the target carrier CC3; the modulation and coding scheme is used to indicate the modulation and coding scheme of the transport block transmitted on *M* carriers (that is, CC3 and CC4); the redundancy version information is used to indicate the redundancy versions of the transport block transmitted on the *M* carriers (that is, CC3 and CC4).

For the target carrier CC4, the scheduling information transmitted on CC4 includes the frequency domain resource assignment information and the time domain resource assignment information. The frequency domain resource assignment information is used to indicate the frequency domain resources of the transport block transmitted on the target carrier CC4; the time domain resource assignment information is used to indicate the time domain resources of the transport block transmitted on the target carrier CC4.

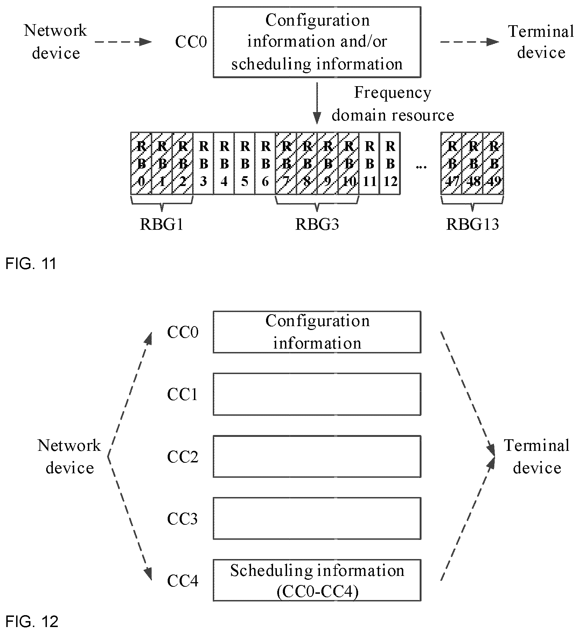

FIG. 11 is a schematic diagram 1 of transmission of scheduling information and/or configuration information provided by an embodiment of the present application. As shown in FIG. 11, an example is made for a situation where a number of carriers included in a same cell is 1, and the carrier in the cell is CC0.

When only one carrier is included in the cell, a network device sends the scheduling information and/or the configuration information of the carrier to a terminal device through the carrier. Optionally, the configuration information includes frequency points and/or bandwidths of the carrier, and the scheduling information includes at least one of frequency domain resource assignment information, time domain resource assignment information, modulation and coding scheme, and redundancy version information. Since in the implementation, only one carrier is included in the cell, carrier indicator and code block group transmission information may not be included in the scheduling information.

For example, in FIG. 11, the network device sends the scheduling information and/or the configuration information of CC0 to the terminal device through CC0.

Optionally, the configuration information of CC0 may be carried on a SIB (system information block) or on a RRC (Radio Resource control). The network device sends a SIB signaling or a RRC signaling to the terminal device on CC0, and after the terminal device receives the SIB signaling or the RRC signaling, the configuration information of CC0 is acquired according to the SIB signaling or RRC signaling, and frequency points and/or bandwidths of CC0 may be acquired according to the configuration information of CC0.

Optionally, the scheduling information of CC0 may be carried on a DCI. The network device sends the DCI to the terminal device on CC0. After receiving the DCI, the terminal device acquires the scheduling information of CC0 according to the DCI, and acquires the at least one of the frequency domain resource assignment information, the time domain resource assignment information, the modulation and coding scheme, and the redundancy version information of CC0 according to the scheduling information of CC0.

The frequency domain resource assignment information includes a starting resource block and an available resource block of CC0, and the frequency domain resources of the transport block transmitted on CC0 may be determined according to the starting resource block, the available resource block and the bandwidth of CC0.

For example, if the bandwidth of CC0 is $N_{\mathrm{BWP},i}^{\mathrm{size}}=50\mathrm{RBs}$, $N_{\mathrm{BWP},i}^{\mathrm{start}}=25$, a configuration parameter indicates configuration 1, and frequency domain resource assignment type is type 0, then it may be determined according to Table 1 that P=4. A number of RBGs contained in CC0 is

$$N_{\mathrm{RBG}} = \lceil (N_{\mathrm{BWP},i}^{\mathrm{size}} + (N_{\mathrm{BWP},i}^{\mathrm{start}} \bmod P))/P \rceil = \lceil ((50 + 25 \bmod 4/4) \rceil = 13$$. A number of RBs contained in a first RBG is $RBG_0^{size} = P - N_{\mathrm{BWP},i}^{\mathrm{start}} \bmod P = 4 - 25 \bmod 4 = 3$. A number of RBs contained in a last RBG is

$$RBG_{last}^{size} (N_{\mathrm{BWP},i}^{\mathrm{start}} + N_{\mathrm{BWP},i}^{\mathrm{size}}) \bmod 4 = (25 + 50) \bmod 4 = 3$$. There are 13-2=11 middle RBGs, and each middle RBG contains 4 RBs. Then the frequency domain resource assignment information may include 13 bits, and each bit is used to indicate whether a corresponding RBG is available.

For example, if the frequency domain resource assignment information is 1010000000001, then according to the frequency domain resource assignment information, it may be determined that the first, third, and thirteenth RBGs in CC0 are available. Therefore, frequency domain resources of CC0 are the 3 RBs included in the first RBG (i.e., RB0-RB2 in FIG. 11), the 4 RBs included in the third RBG (i.e., RB7-RB10 in FIG. 11), the 3 RBs included in the thirteenth RBG (i.e., RB47-RB49 in FIG. 11) as shown in an example of a shaded part in FIG. 11.

The time domain resource assignment information may include a starting symbol position and a time domain symbol duration, and then the time domain resources of the transport block transmitted on CC0 is a time period determined according to the starting symbol position and the time domain symbol duration.

The modulation and coding scheme may indicate a modulation scheme of the transport block transmitted on CC0. The modulation scheme may be, for example, any one of modulation schemes of quadrature phase shift keying (QPSK), 16 quadrature amplitude modulation (16QAM), 64QAM. After a corresponding modulation scheme is determined, the transport block size modulated according to the corresponding modulation scheme may be determined.

The redundancy version information may include redundancy version identifier of CC0, and the redundancy versions of the transport block transmitted on CC0 may be determined according to the redundancy version identifier of CC0.

Optionally, when a number of bits for the redundancy version identifier of CC0 is 0, the redundancy versions of the transport block transmitted on CC0 is 0.

Optionally, when the number of bits for the redundancy version identifier of CC0 is 1, if the redundancy version identifier is 0, the redundancy versions of the transport block transmitted on CC0 is 0. If the redundancy version identifier is 1, the redundancy versions of the transport block transmitted on CC0 is 3.

Optionally, when the number of bits for the redundancy version identifier of CC0 is 2, if the redundancy version identifier is 00, the redundancy versions of the transport block transmitted on CC0 is 0. If the redundancy version identifier is 01, the redundancy versions of the transport block transmitted on CC0 is 1. If the redundancy version identifier is 10, the redundancy versions of the transport block transmitted on CC0 is 2. If the redundancy version identifier is 11, the redundancy versions of the transport block transmitted on CC0 is 3.

In the above embodiments, the solution of determining the scheduling manner of the transport block transmitted on the carrier when the number of carriers in the cell is one is introduced. How to determine the scheduling manner of the transport block transmitted on the carrier when the number of carriers in the same cell is more than one will be introduced in the following. In the following embodiments, the number of carriers in the same cell being 5 is taken as an example for introduction. The solution for determining the scheduling manner of the transport block transmitted on the carrier when the number of carriers in the same cell is other values is similar to this example.

FIG. 12 is a schematic diagram 2 of transmission of scheduling information and/or configuration information provided by an embodiment of the present application. As shown in FIG. 12, an example is made for a situation where a number of carriers in a cell is 5, and these 5 carriers in the cell are CC0, CC1, CC2, CC3 and CC4 respectively.

A network device sends the configuration information of these 5 carriers to a terminal device through CC0, the configuration information includes frequency points and/or bandwidths of these 5 carriers, and CC0 is an anchor carrier of these 5 carriers.

In the example in FIG. 12, the network device sends the scheduling information to the terminal device on the target carrier, that is, the scheduling information of CC0, CC1, CC2, CC3, and CC4 is transmitted on the target carrier.

Optionally, the target carrier is an anchor carrier, i.e., CC0.

Optionally, the target carrier is the carrier with a highest RSRP among these 5 carriers, such as CC4. Since the carrier with the higher RSRP is of better channel quality, a probability of successfully receiving the scheduling information can be increased by selecting the carrier with the highest RSRP among the carriers. In FIG. 12, the target carrier being CC4 is taken as an example for introduction.

The network device selects CC4 to carry a DCI for these 5 carriers. In addition to commonly used bits in DCI format 1_0 (DCI format 1_0), DCI format 1_1 (DCI format 1_1), DCI format 1_2 (DCI format 1_2) or other DCI formats, the information bits contained in the DCI also needs to include at least one of frequency domain resource assignment information (that is, bits for frequency domain resource assignment), time domain resource assignment information (that is, bits for a domain resource assignment set), redundancy version information (that is, bits for redundancy version), carrier indicator (that is, bits used to indicate the scheduling information of which carriers are included in the DCI and an order of the scheduling information) and code block group transmission information (that is, bits used to indicate code block groups transmitted on the carriers).

The frequency domain resource corresponding to each carrier in the cell may be jointly determined through the frequency domain resource assignment information combined with the configuration information. For example, frequency domain resource assignment type is type 0, a configuration parameter indicates configuration 1, that is, a corresponding RBG size is as shown in a second column of Table 1. It is assumed that there are 5 carriers in a logical cell, and configured bandwidth of the carriers is {10RB, 50RB, 75RB, 100RB, 20RB}, $N_{BWP,i}^{start}$ of each carrier is {0RB, 25RB, 10RB, 50RB, 10RB}. The RBG numbers of the carriers may be calculated by a formula $N_{RBG} = \left\lceil (N_{BWP,i}^{size} + (N_{BWP,i}^{start} \bmod P))/P \right\rceil$ as {5, 13, 10, 13, 10}. The size of the first RBG of each carrier is calculated according to a formula $RBG_0^{size} = P - N_{BWP,i}^{start} \bmod P$. If $\left(N_{BWP,i}^{start} + N_{BWP,i}^{size}\right) \bmod P > 0$, then the size of the last RBG is calculated according to a formula $RBG_{last}^{size} (N_{BWP,i}^{start} + N_{BWP,i}^{size}) \bmod P$, otherwise, the size of the last RBG is a size of a RBG corresponding to a bandwidth in the second column of Table 1, and the size of intermediate RBG is a size of a RBG corresponding to the bandwidth in the second column of Table 1.

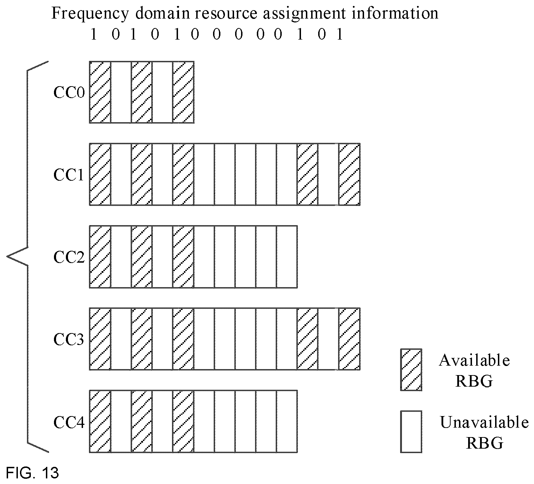

If these 5 carriers share same frequency domain information and the scheduling information is carried on one carrier, a number of bits occupied by the frequency domain resource assignment information is max{5,13,10,13,10}=13 bits, and the 13 bits are common frequency domain resource indication bits corresponding to these 5 carriers. FIG. 13 is a schematic diagram 1 of frequency domain resources of a carrier provided by an embodiment of the present application. Each small box represents an RBG, and a shaded part represents an available RBG, and other parts represent unavailable RBGs. As shown in FIG. 13, when bits for the frequency domain resource assignment information are 1010100000101, it represent that the first, third, fifth, eleventh and thirteenth RBGs are available. The available RBGs for each carrier are shown in the shaded parts of FIG. 13.

For CC0, it can be known from first 5 bits for the frequency domain resource assignment information that the first, the third and the fifth RBGs are available;

for CC1, it can be known from 13 bits for the frequency domain resource assignment information that the first, the third, the fifth, the eleventh and the thirteenth RBGs are available;

for CC2, it can be known from first 10 bits for the frequency domain resource assignment information that the first, the third and the fifth RBGs are available;

for CC3, it can be known from the 13 bits for the frequency domain resource assignment information that the first, the third, the fifth, the eleventh and the thirteenth RBGs are available;

for CC4, it can be known from the first 10 bits for the frequency domain resource assignment information that the first, the third and the fifth RBGs are available.

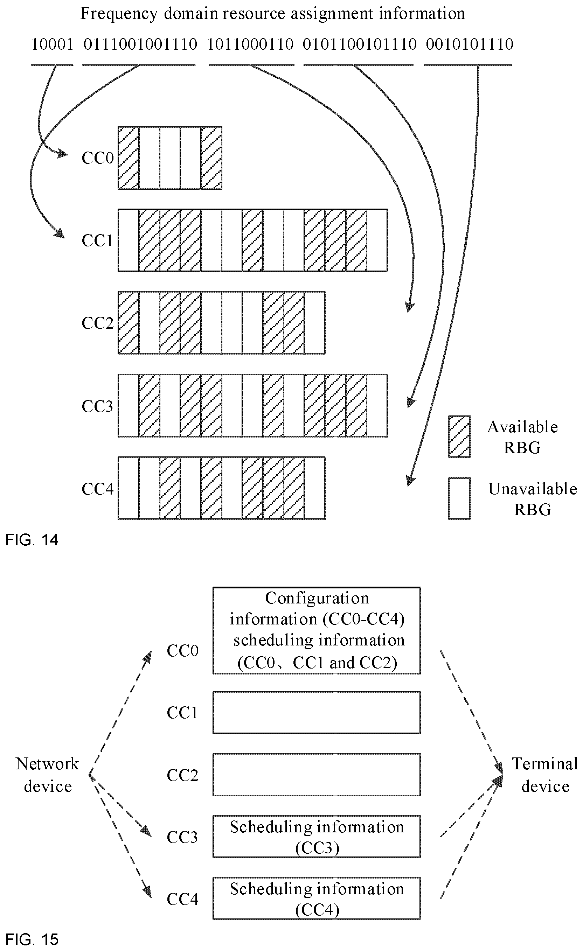

If different frequency domain information are adopted for these 5 carriers and the scheduling information is carried on one carrier, a number of bits occupied by the frequency domain resource assignment information is 5+13+10+13+10=51 bits. For each carrier, available frequency domain resource information is acquired according to the bits corresponding to the carrier. FIG. 14 is a schematic diagram 2 of frequency domain resources of a carrier provided by an embodiment of the present application. Each small box represents an RBG, and a shaded part represents an available RBG, and other parts represent unavailable RBGs.

When bits for the frequency domain resource assignment information are 10001 0111001001110 1011000110 0101100101110 0010101110, the frequency domain resource assignment information includes 5 bit fields, and each bit field corresponds to a different carrier.

For example, in FIG. 14, a carrier corresponding to the bit field 10001 is CC0. 10001 is frequency domain resource indication bits corresponding to CC0, and is used to indicate the available RBGs in CC0, that is, the first and fifth RBGs are available. Frequency domain resources of the transport block transmitted on CC0 are thus RBs in the first RBG and RBs in the fifth RBG.

The carrier corresponding to the bit field of 0111001001110 is CC1. 0111001001110 is the frequency domain resource indication bits corresponding to CC1, and is used to indicate the available RBGs in CC1, that is, the second, third, fourth, seventh, tenth, eleventh and twelfth RBGs are available. The frequency domain resources of the transport block transmitted on CC1 are thus RBs in the second RBG, RBs in the third RBG, RBs in the fourth RBG, RBs in the seventh RBG, RBs in the tenth RBG, RBs in the eleventh RBG and RBs in the twelfth RBG.

The carrier corresponding to the bit field of 1011000110 is CC2. 1011000110 is the frequency domain resource indication bits corresponding to CC2, and is used to indicate the available RBGs in CC2, that is, the first, third, fourth, eighth and ninth RBGs are available. The frequency domain resources of the transport block transmitted on CC2 are thus RBs in the first RBG, RBs in the third RBG, RBs in the fourth RBG, RBs in the eighth RBG, and RBs in the ninth RBG.

The carrier corresponding to the bit field of 0101100101110 is CC3. 0101100101110 is the frequency domain resource indication bits corresponding to CC3, that is, the second, fourth, fifth, eighth, tenth, eleventh and twelfth RBGs are available. The frequency domain resources of the transport block transmitted on CC3 are thus RBs in the second RBG, RBs in the fourth RBG, RBs in the fifth RBG, RBs in the eighth RBG,

EP 4 456 649 B1

RBs in the tenth RBG, RBs in the eleventh RBG and RBs in the twelfth RBG.

The carrier corresponding to the bit field of 0010101110 is CC4. 0010101110 is the frequency domain resource indication bits corresponding to CC4, and is used to indicate the available RBGs in CC4, that is, the third, fifth, seventh, eighth and ninth RBGs are available. The frequency domain resources of the transport block transmitted on CC4 are thus RBs in the third RBG, RBs in the fifth RBG, RBs in the seventh RBG, RBs in the eighth RBG and RBs in the ninth RBG.

When same frequency domain information is adopted for these 5 carriers and the scheduling information is carried on one carrier, the frequency domain resources of the transport block transmitted on each carrier may be determined according to the solution shown in FIG. 13. When different frequency domain information is adopted for these 5 carriers and the scheduling information is carried on one carrier, the frequency domain resources of the transport block transmitted on each carrier may be determined according to the solution shown in FIG. 14.

The number of bits for the time domain resource assignment information is equal to 4 bits or equal to the number of carriers * 4 bits. When at least one carrier of a logical cell shares same time domain resource assignment information and the time domain resource information of the at least one carrier is carried on one carrier, then the number of bits for the time domain resource assignment information is 4 bits, and these 4 bits are common time domain resource indication bits corresponding to these 5 carriers in the time domain resource assignment information transmitted on CC4. The 5 carriers in one logical cell in FIG. 12 is taken as an example, and the scheduling information of these 5 carriers is transmitted on one carrier (for example, the carrier on which the scheduling information is transmitted may be a target carrier), then these 5 carriers have a same starting symbol and a same time domain symbol duration. For example, in FIG. 12, the starting symbol and the time domain symbol duration in the time domain resource assignment information transmitted on CC4 indicate a certain time period, then all the time domain resources of the transport block transmitted on CC0, CC1, CC2, CC3 and CC4 are this time period.

When different time domain resource assignment information is adopted for the at least one carrier of the logical cell and the time domain resource information of the at least one carrier is carried on one carrier, the number of bits for the time domain resource assignment information is $4*M$ bits, where $M$ is the number of scheduled carriers. The 5 carriers in one logical cell in FIG. 12 is taken as an example, and the scheduling information of these 5 carriers is all transmitted on one carrier, the number of bits for the scheduling information=$4*5$=20 bits, that is, the time domain resource indicator bits corresponding to these 5 carriers. Combined with an order of the carriers in carrier indicator, information at corresponding bit positions of the corresponding carrier represents the time domain resource for the corresponding carrier. For example, in FIG. 12, the time domain resource assignment information transmitted on CC4 includes starting symbol 1 and time domain symbol duration 1 corresponding to CC0, starting symbol 2 and time domain symbol duration 2 corresponding to CC1, starting symbol 3 and time domain symbol duration 3 corresponding to CC2, starting symbol 4 and time domain symbol duration 4 corresponding to CC3, and starting symbol 5 and time domain symbol duration 5 corresponding to CC4. Then the time domain resources of the transport block transmitted on CC0 is time period 1 indicated by starting symbol 1 and time domain symbol duration 1, the time domain resources of the transport block transmitted on CC1 is time period 2 indicated by starting symbol 2 and time domain symbol duration 2, the time domain resources of the transport block transmitted on CC2 is time period 3 indicated by starting symbol 3 and time domain symbol duration 3, the time domain resources of the transport block transmitted on CC3 is time period 4 indicated by starting symbol 4 and time domain symbol duration 4, the time domain resources of the transport block transmitted on CC4 is time period 5 indicated by starting symbol 5 and time domain symbol duration 5.

The number of bits for the modulation and coding scheme is equal to 5 bits or equal to the number of carriers * 5 bits. When the at least one carrier of the logical cell shares same modulation and coding scheme and the modulation and coding scheme information of the at least one carrier is carried on one carrier, then the number of bits for the modulation and coding scheme is 5 bits, and these 5 bits are common modulation and coding scheme indication bits corresponding to multiple carriers in the modulation and coding scheme. The 5 carriers in one logical cell in FIG. 12 is taken as an example, and the scheduling information of these 5 carriers is transmitted on one carrier (for example, the carrier on which the scheduling information is transmitted may be the target carrier), then these 5 carriers have a same modulation and coding scheme. For example, in FIG. 12, modulation scheme indicated by the modulation and coding scheme transmitted on CC4 is the QPSK modulation scheme, then all the modulation schemes of the transport block transmitted on CC0, CC1, CC2, CC3 and CC4 are QPSK modulation scheme.

When different modulation and coding schemes are adopted for the at least one carrier of the logical cell and the modulation and coding scheme of the at least one carrier is carried on one carrier, the number of bits for the modulation and coding scheme is $5*M$ bits, where $M$ is the number of scheduled carriers. The 5 carriers in one logical cell in FIG. 12 is taken as an example, and the scheduling information of these 5 carriers are all transmitted on one carrier, the number of bits for the scheduling information =$5*5$=25 bits, including 5 groups of modulation and coding scheme indication bits respectively corresponding to these 5 carriers. Combined with the order of the carriers in the carrier indicator, information at the corresponding bit position of the corresponding carrier represents the modulation and coding scheme for the corresponding carrier.

Redundancy version information includes redundancy version identifier of the at least one carrier. For example, if only the redundancy version identifier of CC4 is included in the redundancy version information, then the redundancy versions of the transport block transmitted on CC4 may be determined.

Optionally, when a number of bits for the redundancy version identifier of CC4 is 0, the redundancy versions of the transport block transmitted on CC4 is 0.

Optionally, when the number of bits for the redundancy version identifier of CC4 is 1, if the redundancy version identifier is 0, the redundancy versions of the transport block transmitted on CC4 is 0; if the redundancy version identifier is 1, the redundancy versions of the transport block transmitted on CC4 is 3.

Optionally, when the number of bits for the redundancy version identifier of CC4 is 2, if the redundancy version identifier is 00, the redundancy versions of the transport block transmitted on CC4 is 0; if the redundancy version identifier is 01, the redundancy versions of the transport block transmitted on CC4 is 1; if the redundancy version identifier is 10, the redundancy versions of the transport block transmitted on CC4 is 2; if the redundancy version identifier is 11, the redundancy versions of the transport block transmitted on CC4 is 3.

When the redundancy version information only includes the redundancy version identifier of CC4, the redundancy versions of the transport block transmitted on CC0, CC1, CC2 and CC3 may be the same as the redundancy versions of the transport block transmitted on CC4. For example, the redundancy versions of the transport block transmitted on CC4 is 1, and all the redundancy versions of the transport block transmitted on CC0, CC1, CC2, and CC3 are also 1.

When the redundancy version information only includes the redundancy version identifier of CC4, the redundancy versions of the transport block transmitted on CC0, CC1, CC2 and CC3 may be derived from the redundancy versions of the transport block transmitted on CC4. For example, if a pdsch-AggregationFactor parameter is configured, the redundancy versions of the transport block transmitted on other carriers may be determined through the following rules:

$rv_{id}$=0, if n mod 4=0, then rv1 is 0; if n mod 4=1, then rv1 is 2; if n mod 4=2, then rv1 is 3; and if n mod 4=3, then rv1 is 1;

$rv_{id}$=2, if n mod 4=0, then rv1 is 2; if n mod 4=1, then rv1 is 3; if n mod 4=2, then rv1 is 1; if n mod 4=3, then rv1 is 0;

$rv_{id}$=3, if n mod 4=0, then rv1 is 3; if n mod 4=1, then rv1 is 1; if n mod 4=2, then rv1 is 0; if n mod 4=3, then rv1 is 2;

$rv_{id}$=1, if n mod 4=0, then rv1 is 1; if n mod 4=1, then rv1 is 0; if n mod 4=2, then rv1 is 2; if n mod 4=3, then rv1 is 3;

where $rv_{id}$ is the redundancy version identifier of a target carrier, mod is a modulo operation, n is a positive integer greater than or equal to 1 and less than or equal to *N, N* is a number of carriers in the cell, and rv1 is the redundancy versions of the transport block transmitted on carrier n.

The above rules may be represented in a form of Table 4.

Table 4

| Redundancy | Redundancy version for transmission of transport block | | | |
|---|---|---|---|---|
| version identifier $rv_{id}$ of a target carrier | on carrier *n* | | | |
| | n mod 4=0 | n mod 4=1 | n mod 4=2 | n mod 4=3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

Therefore, after the redundancy version identifier of CC4 is acquired, the redundancy versions of the transport block transmitted on these 5 carriers may be determined.

In the above two scenarios (the scheduling information of these 5 carriers in a same logical cell is all carried in carrier 4, and the redundancy versions of other carriers may be acquired according to the redundancy version given through the carrier 4 as per rules, or a same redundancy version is adopted for these 5 carriers), the number of bits for the redundancy version identifier is 0, 1, or 2 bits.

The scheduling information of the 5 carriers in the same logical cell is all carried on carrier 4, and the redundancy versions of other carriers are different from each other, then the number of bits for the redundancy version identifier is {0, 1, or 2 bits}*N, where N is the number of carriers.

If a higher layer parameter codeBlockGroupTransmission is configured to indicate that the transport block is transmitted in a distributed transmission manner, the scheduling information includes code block group transmission information, and the code block group transmission information includes code block group transmission information bits corresponding to each carrier. An arrangement order of the code block group transmission information bits is determined according to the carrier indicator. The code block group for transmission on each carrier may be determined through the code block group transmission information bits corresponding to each carrier. Optionally, a code block included in each code block group may be determined according to protocol 38.214.

When it is determined that the transmission is performed in a distributed transmission manner, and the number of bits for the code block group transmission information may be 0, then an index of the code block group for transmission on each carrier may be determined according to a corresponding rule.

Optionally, when $M$ is greater than $N$ and $n \in \{0,1,..., T_1 - 1\}$, the index of the code block group for transmission on carrier $n$ is $n * N_1 + k_1$, $k_1 = 0, 1, ..., N_1-1$; when $n \in \{T_1, T_1 + 1,...,N - 1\}$, the index of the code block group for transmission on carrier $n$ is $T_1 * N_1 + (n - T_1)N_2 + k_2$, $k_2 = 0,1,..., N_2-1$, where n is greater than or equal to 0 and less than $N$; and/or,

when $M$ is less than or equal to $N$, the index of the code block group for transmission on carrier $n$ is $n$, and $n$ is greater than or equal to 0 and less than $M$;

where $M$ is the number of code block groups included in the transport block, $M$ is a positive integer greater than or equal to 1, $N$ is the number of carriers, $N$ is a positive integer greater than or equal to 2, $T_1 = M \mod N$,

$N_1 = \lceil M/N \rceil$, $N_2 = \lfloor M/N \rfloor$, $\lceil M/N \rceil$ represents to round (M/N) up to the nearest integer, and $\lfloor M/N \rfloor$ represents to round (M/N) down to the nearest integer.

In the examples shown in FIG. 12 to FIG. 14, the solution of carrying all the scheduling information of these 5 carriers CC0-CC4 through CC4 is introduced. Optionally, CC4 may also carry part of the scheduling information of the 4 carriers CC0-CC3 and all scheduling information of CC4. Optionally, for the 5 carriers, the same frequency domain resource or different frequency domain resources may be adopted; same time domain resource or different time domain resources may be adopted; same modulation and coding scheme or different modulation and coding schemes may be adopted; same redundancy version information or different redundancy version information may be adopted.

FIG. 15 is a schematic diagram 3 of transmission of scheduling information and/or configuration information provided by an embodiment of the present application. As shown in FIG. 15, an example is given for a situation where a number of carriers in a cell is 5, and these 5 carriers in the cell are CC0, CC1, CC2, CC3 and CC4 respectively.

A network device sends the configuration information of these 5 carriers to a terminal device through CC0. The configuration information includes frequency points and/or bandwidths of these 5 carriers, and CC0 is an anchor carrier in these 5 carriers.

In an example in FIG. 15, the network device sends scheduling information to the terminal device on at least two carriers, that is, the scheduling information of CC0, CC1, and CC2 is transmitted on CC0, the scheduling information of CC3 is transmitted on CC3, and the scheduling information of CC4 is transmitted on CC4.

The network device selects CC0 to carry the DCI for the first 3 carriers, and the last two carriers are used to carry its own DCI. In addition to commonly used bits in DCI format 1_0, DCI format 1_1, DCI format 1_2 or other DCI format, the information bits contained in the DCI also needs to include at least one of frequency domain resource assignment information (that is, bits for frequency domain resource assignment), time domain resource assignment information (that is, bits for a domain resource assignment set), redundancy version information (that is, bits for redundancy version), carrier indicator (that is, bits used to indicate the scheduling information of which carriers are included in the DCI and an order of the scheduling information) and code block group transmission information (that is, bits used to indicate code block groups for transmission on each carrier).

The frequency domain resource corresponding to each carrier in the cell may be jointly determined through the frequency domain resource assignment information combined with the configuration information. For example, frequency domain resource assignment type is type 0, a configuration parameter indicates configuration 1, that is, a corresponding RBG size is as shown in a second column of Table 1. It is assumed that there are 5 carriers in a logical cell, and configured bandwidth of the carriers is {10RB, 50RB, 75RB, 100RB, 20RB}, $N_{BWP,i}^{start}$ of each carrier is {0RB, 25RB, 10RB, 50RB, 10RB}. The RBG numbers of the carriers may be calculated by a formula $N_{RBG} = \lceil (N_{BWP,i}^{size} + (N_{BWP,i}^{start} \bmod P))/P \rceil$ as {5, 13, 10, 13, 10}. The size of the first RBG of each carrier is calculated according to a formula $RBG_0^{size} = P - N_{BWP,i}^{start} \bmod P$. If $\left(N_{BWP,i}^{start} + N_{BWP,i}^{size}\right) \bmod P > 0$, then the size of the last RBG is calculated according to a formula $RBG_{last}^{size}(\mathrm{N}_{\mathrm{BWP,i}}^{\mathrm{start}} + \mathrm{N}_{\mathrm{BWP,i}}^{\mathrm{size}}) \bmod \mathrm{P}$, otherwise, the size of the last RBG is a size of a RBG corresponding to a bandwidth in the second column of Table 1, and the size of intermediate RBG is a size of a RBG corresponding to the bandwidth in the second column of Table 1.

Since the scheduling information of CC0, CC1 and CC2 is carried by CC0, these three carriers of CC0, CC1 and CC2 may share same frequency domain information or different frequency domain information may be adopted for these three carriers.

When these three carriers CC0, CC1 and CC2 may share the same frequency domain information, a number of bits occupied by the frequency domain resource assignment information carried on CC0 is max{5,13,10}=13 bits, and the 13 bits are common frequency domain resource indication bits corresponding to these 3 carriers.

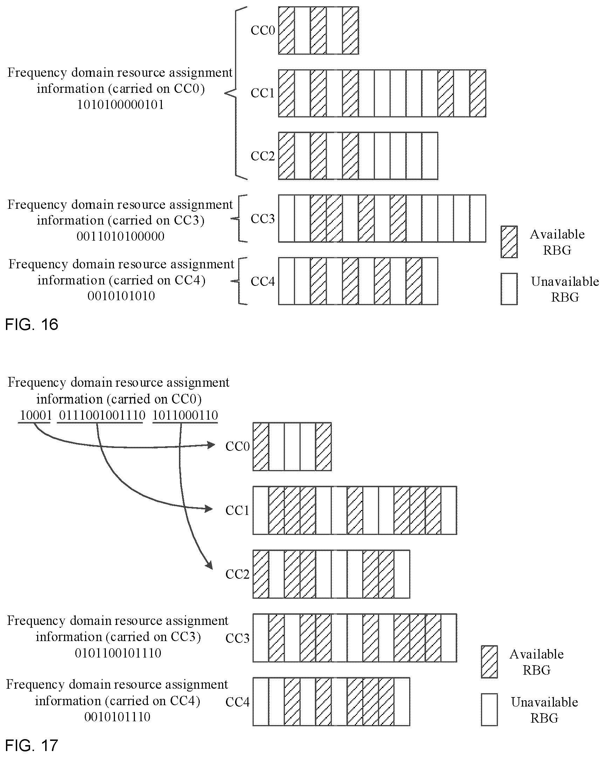

FIG. 16 is a schematic diagram 3 of frequency domain resources of a carrier provided by an embodiment of the present application. Each small box represents an RBG, and a shaded part represents an available RBG, and other parts represent unavailable RBGs. As shown in FIG. 16, when bits for the frequency domain resource assignment information are 1010100000101, they represent that the first, third, fifth, eleventh and thirteenth RBGs are available. The available RBGs for these three carriers CC0, CC1 and CC2 are shown in the shaded parts of FIG. 16.

For CC0, it can be known from first 5 bits for the frequency domain resource assignment information that the first, the third and the fifth RBGs are available;

for CC1, it can be known from 13 bits for the frequency domain resource assignment information that the first, the third, the fifth, the eleventh and the thirteenth RBGs are available;
for CC2, it can be known from first 10 bits for the frequency domain resource assignment information that the first, the third and the fifth RBGs are available.

For CC3, it can be known from the 13 bits (0011010100000) for the frequency domain resource assignment information carried on CC3 that the third, fourth, sixth and eighth RBGs are available.

For CC4, it can be known from the 10 bits (0010101010) for the frequency domain resource assignment information carried on CC4 that the third, fifth, seventh and ninth RBGs are available.

When different frequency domain information is adopted for these three carriers CC0, CC1 and CC2, a number of bits occupied by the frequency domain resource assignment information carried on CC0 is 5+13+10=28 bits. For each carrier, available frequency domain resource information is acquired according to the bits corresponding to the carrier.

FIG. 17 is a schematic diagram 4 of frequency domain resources of a carrier provided by an embodiment of the present application. Each small box represents an RBG, and a shaded part represents an available RBG, and other parts represent unavailable RBGs.

When the bits for the frequency domain resource assignment information carried on CC0 are 10001 0111001001110 1011000110, the frequency domain resource assignment information includes 3 bit fields, and each bit field corresponds to a different carrier.

For example, in FIG. 17, a carrier corresponding to the bit field 10001 is CC0. 10001 is frequency domain resource indication bits corresponding to CC0, and is used to indicate the available RBGs in CC0, that is, the first and fifth RBGs are available. Frequency domain resources of the transport block transmitted on CC0 are thus RBs in the first RBG and RBs in the fifth RBG;

the carrier corresponding to the bit field of 0111001001110 is CC1. 0111001001110 is the frequency domain resource indication bits corresponding to CC1, and is used to indicate the available RBGs in CC1, that is, the second, third, fourth, seventh, tenth, eleventh and twelfth RBGs are available. The frequency domain resources of the transport block transmitted on CC1 are thus RBs in the second RBG, RBs in the third RBG, RBs in the fourth RBG, RBs in the seventh RBG, RBs in the tenth RBG, RBs in the eleventh RBG and RBs in the twelfth RBG;

the carrier corresponding to the bit field of 1011000110 is CC2. 1011000110 is the frequency domain resource indication bits corresponding to CC2, and is used to indicate the available RBGs in CC2, that is, the first, third, fourth, eighth and ninth RBGs are available. The frequency domain resources of the transport block transmitted on CC2 are thus RBs in the first RBG, RBs in the third RBG, RBs in the fourth RBG, RBs in the eighth RBG, and RBs in the ninth RBG.

For the frequency domain resource assignment information carried on CC3 and CC4, the frequency domain resource assignment information carried on CC3 is used to indicate the frequency domain resources of the transport block transmitted on CC3, and the frequency domain resource assignment information carried on CC4 is used to indicate the frequency domain resources of the transport block transmitted on CC4. Still taking the frequency domain resource assignment type being type 0 as an example, when CC3 includes 13 RBGs, the number of bits for the frequency domain resource assignment information carried on CC3 is 13; when CC4 includes 10 RBGs, the number of bits for the frequency domain resource assignment information carried on CC4 is 10.

For example, as shown in FIG. 17, the bits for the frequency domain resource assignment information carried on CC3 are 0101100101110. 0101100101110 is the frequency domain resource indication bits corresponding to CC3, and is used to indicate the available RBGs in CC3, that is, the second, fourth, fifth, eighth, tenth, eleventh and twelfth RBGs are available. The frequency domain resources of the transport block transmitted on CC3 are thus RBs in the second RBG, RBs in the fourth RBG, RBs in the fifth RBG, RBs in the eighth RBG, RBs in the tenth RBG, RBs in the eleventh RBG, and RBs in the twelfth RBG;

the bits for the frequency domain resource assignment information carried on CC4 are 0010101110. 0010101110 is the frequency domain resource indication bits corresponding to CC4, and is used to indicate the available RBGs in CC4, that is, the third, fifth, seventh, eighth and ninth RBGs are available. The frequency domain resources of the transport block transmitted on CC4 are thus RBs in the third RBG, RBs in the fifth RBG, RBs in the seventh RBG, RBs in the eighth RBG and RBs in the ninth RBG.

The number of bits for the time domain resource assignment information is equal to 4 bits or equal to the number of carriers * 4 bits. Optionally, time domain resource assignment bits for each carrier is 4 bits, and these 4 bits are common time domain resource indication bits corresponding to these 5 carriers in the time domain resource assignment information transmitted on CC4. For the time domain resource assignment information transmitted on CC0, since the three carriers CC0, CC1 and CC2 are scheduled, when these three carriers share the same time domain resource assignment information, the number of bits for the time domain resource assignment information transmitted on CC0 is 4 bits, and all the time domain resources of the transport block transmitted on CC0, CC1 and CC2 are a time period determined by a starting symbol and a time domain symbol duration in the time domain resource assignment information; when different time domain resource assignment information is adopted for these three carriers, the number of bits for the time domain resource assignment information transmitted on CC0 is 12 bits. An arrangement order of the time domain resource assignment bits of these three carriers is determined according to carrier indicator, and then, according to a starting symbol position and the time domain symbol duration in each group of time domain resource assignment bits, the time domain resources of the transport block transmitted on CC0, CC1 and CC2 may be determined respectively.

For the time domain resource assignment information transmitted on CC3, since CC3 is to be scheduled, the number of bits for the time domain resource assignment information transmitted on CC3 is 4 bits. Then, according to the starting symbol position and the time domain symbol duration in the time domain resource assignment bits, the time domain resources of the transport block transmitted on CC3 may be determined.

For the time domain resource assignment information transmitted on CC4, since CC4 is to be scheduled, the number of bits for the time domain resource assignment information transmitted on CC4 is 4 bits. Then, according to the starting symbol position and the time domain symbol duration in the time domain resource assignment bits, the time domain resources of the transport block transmitted on CC4 may be determined.

The number of bits for the modulation and coding scheme is equal to 5 bits or equal to the number of carriers * 5 bits. Optionally, modulation and coding scheme bits of each carrier is 5 bits, and these 5 bits are common modulation and coding scheme indication bits corresponding to multiple carriers in modulation and coding scheme. For the modulation and coding scheme transmitted on CC0, since these three carriers CC0, CC1 and CC2 are to be scheduled, when these three carriers have same modulation and coding scheme, the number of bits for the modulation and coding scheme is 5 bits. The modulation scheme and a transport block size of the transport block transmitted on CC0, CC1 and CC2 may be determined according to the modulation and coding scheme. When these 3 carriers have different modulation and coding schemes, the number of bits for the modulation and coding scheme transmitted on CC0 is 15 bits, including 3 groups of modulation and coding scheme indication bits respectively corresponding to these 3 carriers. An arrangement order of the modulation and coding scheme bits of these 3 carriers is determined according to the carrier indicator, and then, according to each group of modulation and coding scheme bits, a modulation scheme of the transport block transmitted on CC0, CC1 and CC2 may be determined respectively, and the transport block size after modulation according to a corresponding modulation scheme may be determined.

For the modulation and coding scheme transmitted on CC3, since CC3 is to be scheduled, the number of bits for the modulation and coding scheme is 5 bits, and these 5 bits are the modulation and coding scheme bits corresponding to CC3, and are used to indicate the modulation and encoding scheme of the transport block transmitted on CC3. Then, according to the modulation and coding scheme, the modulation scheme of the transport block transmitted transmitted on CC3 may be determined, and the transport block size after modulation according to a corresponding modulation scheme may be determined.

For the modulation and coding scheme transmitted on CC4, since CC4 is to be scheduled, the number of bits for the modulation and coding scheme is 5 bits, and these 5 bits are the modulation and coding scheme bits corresponding to CC4, and are used to indicate the modulation and encoding scheme of the transport block transmitted on CC4. Then, according to the modulation and coding scheme, the modulation scheme of the transport block transmitted on CC4 may be determined, and the transport block size after modulation according to a corresponding modulation scheme may be determined.

Redundancy version information includes redundancy version identifier of at least one carrier. For example, if the redundancy version information in a DCI transmitted on CC0 only includes the redundancy version identifier of CC0, then the redundancy versions of the transport block transmitted on CC0 may be determined.

Optionally, when a number of bits for the redundancy version identifier of CC0 is 0, the redundancy versions of the transport block transmitted on CC0 is 0.

Optionally, when the number of bits for the redundancy version identifier of CC0 is 1, if the redundancy version identifier is 0, the redundancy versions of the transport block transmitted on CC0 is 0; if the redundancy version identifier is 1, the redundancy versions of the transport block transmitted on CC0 is 3.

Optionally, when the number of bits for the redundancy version identifier of CC0 is 2, if the redundancy version identifier is 00, the redundancy versions of the transport block transmitted on CC0 is 0; if the redundancy version identifier is 01, the redundancy versions of the transport block transmitted on CC0 is 1; if the redundancy version identifier is 10, the redundancy versions of the transport block transmitted on CC0 is 2; if the redundancy version identifier is 11, the redundancy versions of the transport block transmitted on CC0 is 3.

When the redundancy version information in the DCI transmitted on CC0 only includes the redundancy version identifier of CC0, the redundancy versions of the transport block transmitted on CC1 and CC2 may be the same as the redundancy versions of the transport block transmitted on CC0. For example, the redundancy versions of the transport block transmitted on CC0 is 1, and the redundancy versions of the transport block transmitted on CC1 and CC2 are also 1.

When the redundancy version information in the DCI transmitted on CC0 only includes the redundancy version identifier of CC0, the redundancy versions of the transport block transmitted on CC1 and CC2 may be derived from the redundancy versions of the transport block transmitted on CC0. A derivation method may be obtained according to Table 4.

When the redundancy version information in the DCI transmitted on CC0 includes the redundancy version identifiers of CC0, CC1 and CC2, the redundancy versions of the transport block transmitted on CC0 may be determined according to the redundancy version identifier of CC0, the redundancy versions of the transport block transmitted on CC1 may be determined according to the redundancy version identifier of CC1, and the redundancy versions of the transport block transmitted on CC2 may be determined according to the redundancy version identifier of CC2.

Similarly, the number of bits for the redundancy version identifier of CC1 may be 0, 1 or 2. Optionally, when the number of bits for the redundancy version identifier of CC1 is 0, the redundancy versions of the transport block transmitted on CC1 is 0. Optionally, when the number of bits for the redundancy version identifier of CC1 is 1, if the redundancy version identifier is 0, the redundancy versions of the transport block transmitted on CC1 is 0, and if the redundancy version identifier is 1, the redundancy versions of the transport block transmitted on CC1 is 3. Optionally, when the number of bits for the redundancy version identifier of CC1 is 2, if the redundancy version identifier is 00, the redundancy versions of the transport block transmitted on CC1 is 0; if the redundancy version identifier is 01, the redundancy versions of the transport block transmitted on CC1 is 1; if the redundancy version identifier is 10, the redundancy versions of the transport block transmitted on CC1 is 2; if the redundancy version identifier is 11, the redundancy versions of the transport block transmitted on CC1 is 3.

Similarly, the number of bits for the redundancy version identifier of CC2 may be 0, 1 or 2. Optionally, when the number of bits for the redundancy version identifier of CC2 is 0, the redundancy versions of the transport block transmitted on CC2 is 0. Optionally, when the number of bits for the redundancy version identifier of CC2 is 1, if the redundancy version identifier is 0, the redundancy versions of the transport block transmitted on CC2 is 0, and if the redundancy version identifier is 1, the redundancy versions of the transport block transmitted on CC2 is 3. Optionally, when the number of bits for the redundancy version identifier of CC2 is 2, if the redundancy version identifier is 00, the redundancy versions of the transport block transmitted on CC2 is 0; if the redundancy version identifier is 01, the redundancy versions of the transport block transmitted on CC2 is 1; if the redundancy version identifier is 10, the redundancy versions of the transport block transmitted on CC2 is 2; if the redundancy version identifier is 11, the redundancy versions of the transport block transmitted on CC2 is 3.

When the redundancy version information in the DCI transmitted on CC3 includes the redundancy version identifier of CC3, the redundancy versions of the transport block transmitted on CC3 may be determined. When the redundancy version information in the DCI transmitted on CC4 includes the redundancy version identifier of CC4, the redundancy versions of the transport block transmitted on CC4 may be determined.

If a higher layer parameter codeBlockGroupTransmission is configured to indicate that the transport block is transmitted in a distributed transmission manner, the scheduling information includes a code block group transmission information, and the code block group transmission information includes code block group transmission information bits corresponding to each carrier. An arrangement order of the code block group transmission information bits is determined according to the carrier indicator. The code block group for transmission on each carrier may be determined through the code block group transmission information bits corresponding to each carrier. Optionally, a code block included in each code block group may be determined according to protocol 38.214.

When a target carrier carries the scheduling information of all carriers, the number of bits for the code block group transmission information may be 0, and then an index of the code block group for transmission on each carrier may be determined according to a corresponding rule.

Optionally, when $M$ is greater than $N$ and $n \in \{0,1,..., T_1 - 1\}$, the index of the code block group for transmission on carrier $n$ is $n * N_1 + k_1$, $k_1=0, 1, ..., N_1-1$; when $n \in \{T_1, T_1 + 1,..., N - 1\}$, the index of the code block group for transmission on carrier $n$ is $T_1 * N_1 + (n - T_1)N_2 + k_2$, $k_2=0,1,..., N_2-1$, $n$ is greater than or equal to 0 and less than $N$; and/or,

when $M$ is less than or equal to $N$, the index of the code block group for transmission on carrier $n$ is $n$, and $n$ is greater than or equal to 0 and less than $M$;

where $M$ is the number of code block groups included in the transport block, $M$ is a positive integer greater than or equal to 1, $N$ is the number of carriers, N is a positive integer greater than or equal to 2, $T_1 = M \bmod N$, $N_1 = \lceil M/N \rceil$, $N_2 = \lfloor M/N \rfloor$, $\lceil M/N \rceil$ represents to round (M/N) up to the nearest integer, and $\lfloor M/N \rfloor$ represents to round (M/N) down to the nearest integer.

In the examples shown in FIG. 15 to FIG. 17, the solution of carrying all the scheduling information of these three carriers CC0-CC2 through CC0 is introduced. Optionally, CC0 may also carry part of the scheduling information of these two carriers CC1 and CC2 and all scheduling information of CC0. Optionally, for these three carriers, same frequency domain resource or different frequency domain resources may be adopted; same time domain resource or different time domain resources may be adopted; same modulation and coding scheme or different modulation and coding schemes may be adopted; same redundancy version information or different redundancy version information may be adopted.

In a processing method provided by an embodiment of the present application, scheduling information and/or configuration information of at least one carrier in a same logical cell are(is) received firstly, and then a scheduling manner of the transport block transmitted on the carrier is determined according to the configuration information and/or the scheduling information, thus implementing a scheduling of the transport block transmitted on the at least one carrier in the same logical cell. Further, in the embodiment of the present application, the scheduling information may be carried on a target carrier or at least two carriers, so that a solution of scheduling the at least one carrier in the same cell through one carrier in the same cell is achieved, which saves the number of bits for scheduling information and reduces signaling overhead.

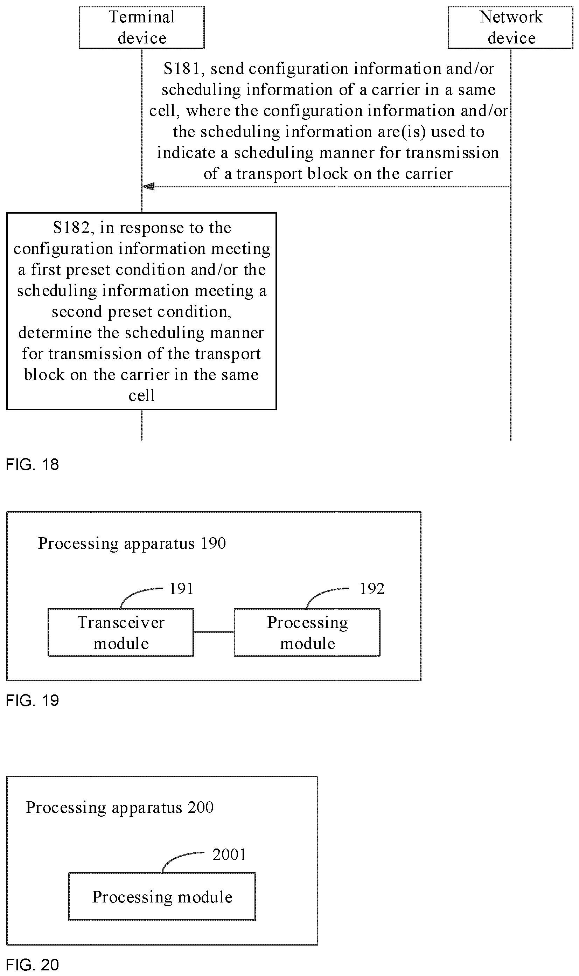

FIG. 18 is a schematic signaling diagram 2 of a processing method provided by an embodiment of the present application. As shown in FIG. 18, the method includes:

S181, a network device sends configuration information and/or scheduling information for carriers in a same cell, where the configuration information and/or the scheduling information are(is) used to indicate a scheduling manner of the transport block transmitted on the carrier.

Optionally, the same cell is a same logical cell. Cell identifiers (cell IDs) corresponding to all carriers in the same cell are the same.

Optionally, a number of carriers in the same cell may be one or more, and the transport block may be transmitted on the carriers in the same cell.

Optionally, the scheduling information is used to indicate how to implement scheduling of the transport block transmitted on the carrier, and the configuration information of the carrier is used to indicate a frequency domain of the carrier. According to the scheduling information and/or configuration information, the scheduling manner of the transport block transmitted on the carrier may be acquired.

Optionally, transmission of the transport block on the carrier may be that the network device sends the transport block to a terminal device on the carrier, that is, performs PDSCH transmission.

Optionally, the transmission of the transport block on the carrier may be that the terminal device sends the transport block to the network device on the carrier, that is, performs PUSCH transmission.

Optionally, the scheduling manner of the transport block transmitted on the carrier includes at least one of frequency domain resources, time domain resources, modulation schemes, transport block sizes, redundancy versions and code block groups of the transport block transmitted on the carrier.

S182, in response to the configuration information meeting a first preset condition and/or the scheduling information meeting a second preset condition, the terminal device determines the scheduling manner of the transport block transmitted on the carrier in the same cell.

After the network device sends the configuration information and/or scheduling information of the carriers in the same cell to the terminal device, the terminal device may receive the configuration information and/or scheduling information of the carriers in the same cell.

Optionally, the configuration information meeting the first preset condition includes at least one of the following: the configuration information includes frequency points and/or bandwidths of the carrier; the configuration information is transmitted on an anchor carrier of the carrier in the cell; the configuration information is carried in a system information block.

Optionally, the scheduling information meeting the second preset condition includes: the scheduling information is transmitted on at least one target carrier in the cell; and/or, the scheduling information is carried in downlink control information.

Optionally, the network device may send the configuration information and/or the scheduling information to the terminal device on the same carrier, and the terminal device receives the configuration information and/or the scheduling information from the network device on the same carrier.

Optionally, the network device may send the configuration information and/or the scheduling information to the terminal device on different carriers, and then the terminal device receives the configuration information and/or the scheduling information from the network device on different carriers.

Optionally, the network device sends the configuration information to the terminal device on an anchor carrier, and then the terminal device receives the configuration information from the network device on the anchor carrier.

Optionally, the network device sends the scheduling information to the terminal device on at least one target carrier of the carriers in the same cell, and then the terminal device receives the scheduling information from the network device on the at least one target carrier.

Optionally, the target carrier is the anchor carrier, and the anchor carrier is a carrier that carries configuration information.

Optionally, the target carrier is a carrier whose RSRP meets a preset condition among the carriers in the cell.

Optionally, the target carrier is the carrier with a highest RSRP among the carriers in the cell, that is, the RSRP of the target carrier is greater than or equal to the RSRP of other carriers in the cell except the target carrier.

Optionally, the target carrier is a carrier whose RSRP is greater than or equal to the first threshold among the carriers in the cell.

Optionally, the first threshold may be a preset value, or a value configured by the network device for the terminal device. For example, the network device may configure the first threshold for the terminal device through a RRC signaling. A value of the first threshold may be a fixed value or a dynamically adjusted value.

When the network device sends the scheduling information to the terminal device on the target carrier, since the target carrier is a carrier whose RSRP meets the preset condition, that is, the target carrier is the carrier with the highest RSRP in the cell, or the target carrier is the carrier whose RSRP is greater than or equal to the first threshold, a channel quality of the target carrier is better, which can improve a success rate of scheduling information transmission.

After receiving the scheduling information and/or the configuration information from the network device, the terminal device may determine the scheduling manner of the transport block transmitted on the carrier according to the scheduling information and/or the configuration information.

Optionally, the scheduling manner of the transport block transmitted on the carrier includes at least one of frequency domain resources, time domain resources, modulation schemes, transport block sizes, redundancy versions and code block groups of the transport block transmitted on the carrier.

According to the scheduling manner of the transport block transmitted on the carrier, the transmission of the transport block between the terminal device and the network device may be implemented.

Optionally, the transmission of the transport block on the carrier may be that the network device sends the transport block to the terminal device on the carrier, that is, performs the PDSCH transmission.

Optionally, the transmission of the transport block on the carrier may be that the terminal device sends the transport block to the network device on the carrier, that is, performs the PUSCH transmission.

Before transmission of the transport block between the terminal device and the network device, it is necessary to determine the scheduling manner of the transport block transmitted on the carrier first.

Optionally, the terminal device receives the scheduling information and/or the configuration information of the carrier of the same cell, and determines the scheduling manner of the transport block transmitted on the carrier of the cell according to the scheduling information and/or the configuration information.

Optionally, the network device sends the configuration information to the terminal device on the anchor carrier among the carriers of the cell, and the terminal device receives the configuration information on the anchor carrier.

Optionally, the configuration information includes frequency points and/or bandwidths of the carrier.

The configuration information includes frequencies and/or bandwidths of all carriers in the cell, that is, the frequencies and/or bandwidths of carriers in the cell are all sent by the network device to the terminal device on the anchor carrier.

The cell includes one or more carriers. If the cell includes only one carrier, the network device sends the configuration information of the carrier to the terminal device on that carrier. If the cell includes multiple carriers, the network device sends the configuration information of the multiple carriers to the terminal device on the anchor carrier of the multiple carriers, and the configuration information includes the frequency point and/or bandwidth of each of the multiple carriers.

Optionally, the configuration information is carried in a SIB. The network device sends the SIB to the terminal device on the anchor carrier, and the terminal device receives the SIB on the anchor carrier, and acquires the configuration information of the carrier in the cell according to the SIB.

Optionally, the scheduling information is carried in downlink control information. Optionally, a number of carriers in the same cell is more than one, the network device sends the downlink control information to the terminal device on at least one target carrier of the more than one carrier, and the terminal device receives the downlink control information on the at least one target carrier, and acquires the scheduling information of the carrier in the cell according to the downlink control information.

Optionally, the scheduling information transmitted on the target carrier includes at least one of frequency domain resource assignment information, time domain resource assignment information, modulation and coding scheme, redundancy version information, carrier indicator, and code block group transmission information.

The frequency domain resource assignment information includes a starting resource block and an available resource block of at least one carrier, and the frequency domain resource assignment information is used to indicate the frequency domain resources of the transport block transmitted on the at least one carrier.

The time domain resource assignment information includes a starting symbol position and a time domain symbol duration of at least one carrier, and the time domain resource assignment information is used to indicate the time domain resources of the transport block transmitted on the at least one carrier.

The modulation and coding scheme is used to indicate the modulation scheme and the transport block size for transmission the transport block on at least one carrier. Optionally, the transport block size is a size after modulation according to the modulation scheme indicated by the modulation and coding scheme.

The redundancy version information includes redundancy version identifier of at least one carrier, and the redundancy version information is used to indicate the redundancy version of the transport block transmitted on the at least one carrier.

The carrier indicator is used to represent the scheduling information of which carriers are included in the downlink control information. When the downlink control information includes the scheduling information of at least one carrier, the carrier indicator is also used to indicate each groups of bit in the downlink control information corresponds to the scheduling information of which carrier.

The code block group transmission information is used to indicate a code block group of the transport block transmitted on at least one carrier. When the number of carriers in the same cell is 1, the transport block may only be transmitted in a complete transmission manner on this carrier; when the number of carriers in the same cell is more than one, the transport block may be transmitted in the complete transmission manner on the more than one carrier, or may be transmitted in a distributed transmission manner on the more than one carrier. When the transport block is transmitted in the distributed transmission manner, the transport block needs to be divided into different code block groups, and for each code block group, there is corresponding code block group transmission information, and the code block group transmission information corresponds to the code block group one to one. When the scheduling information of a certain carrier includes the code block group transmission information, it represents that the code block group corresponding to the code block group transmission information is transmitted on this carrier. Therefore, only when the number of carriers in the same cell is greater than 1 and the transport block is transmitted on the carriers in the distributed transmission manner, the scheduling information includes the code block group transmission information. When the transport block is transmitted on the carrier in the complete transmission manner, the scheduling information does not include the code block group transmission information.

Optionally, after the scheduling information and/or the configuration information are(is) acquired, the frequency domain resources of the transport block transmitted on the carrier may be determined according to the scheduling information and/or the configuration information.

For any target carrier, if the scheduling information transmitted on the target carrier includes the frequency domain resource assignment information, the frequency domain resource assignment information is used to indicate the frequency domain resources of the transport block transmitted on $M$ carriers, or, the frequency domain resource assignment information is used to indicate the frequency domain resource for transmission on the target carrier. $M$ is greater than or equal to 1 and less than or equal to $N$, where N is the number of multiple carriers in the cell, and the $M$ carriers include the target carrier.

Optionally, when the frequency domain resource assignment information is used to indicate the frequency domain resources of the transport block transmitted on the $M$ carriers, the frequency domain resource assignment information includes common frequency domain resource indication bits corresponding to the $M$ carriers or $M$ frequency domain resource indicator bits respectively corresponding to the $M$ carriers.

Optionally, in the carriers with different bandwidths, the number of RBs included in one resource block group may be different. The number of RBs included in one RBG within different bandwidth ranges meets rules shown in Table 1.

For example, if the bandwidth of a certain carrier is 100 RBs, and the bandwidth falls within a range of 73-144, the number of RBs included in each RBG of the carrier may be determined according to a configuration parameter. Optionally, the configuration parameter is a parameter pre-configured by high layers, and the network device and the terminal device may store the configuration parameter in advance. For example, if the configuration parameter indicates configuration 1, then each RBG in the carrier includes 8 RBs; if the configuration parameter indicates configuration 2, then each RBG in the carrier includes 16 RBs

Optionally, a formula for calculating the number of RBGs in the carrier is:

$$N_{RBG} = \lceil (N_{BWP,i}^{size} + (N_{BWP,i}^{start} \bmod P))/P \rceil,$$

the size of the first RBG is: $RBG_0^{size} = P - N_{BWP,i}^{start} \bmod P$ ;

the size of the last RBG is: $RBG_{last}^{size} = (N_{BWP,i}^{start} + N_{BWP,i}^{size}) \bmod P$ , if $(N_{BWP,i}^{start} + N_{BWP,i}^{size}) \bmod P > 0$ , and P otherwise;

the size of all other RBGs is: P;

where P is the value shown in the second or third column of Table 1, that is, the number of RBs included in one RBG;

$N_{RBG}$ is the number of RBGs in the carrier, $N_{BWP,i}^{size}$ is carrier bandwidth, $N_{BWP,i}^{start}$ is starting RB position of the carrier, $RBG_0^{size}$ is the size of the first RBG in the carrier, $RBG_{last}^{size}$ is the size of the last RBG in the carrier.

The frequency domain resource assignment information may be used to indicate the frequency domain resource of one carrier, or the frequency domain resource of multiple carriers. When the frequency domain resource assignment information is used to indicate the frequency domain resource of multiple carriers, the frequency domain resource of the multiple carriers may have a same frequency domain as the carrier carrying the frequency domain resource assignment information or may be the frequency domain resource for a corresponding bit field of each carrier in the frequency domain resource assignment information. An available RBG in the corresponding carrier may be determined according to the frequency domain resource assignment information, and then the number of RBs included in each RBG in the corresponding carrier may be determined according to the bandwidth of the carrier and the relationship between the size of the RBG and the bandwidth of examples in Table 1, and then the frequency domain resource in the corresponding carrier may be determined as the RB included in the available RBG.

The number of bits for the frequency domain resource assignment information is related to frequency domain resource assignment type. Optionally, the frequency domain resource assignment type is type 0, type 1 or *'dynamicSwitch'*. When the frequency domain resource assignment type is type 0, the number of bits occupied by the frequency domain resource assignment information is related to the number of RBGs under each carrier bandwidth; when the frequency domain resource assignment type is type 1, the number of bits occupied by the frequency domain resource assignment information is related to the bandwidth size of the each carrier bandwidth. When the frequency domain resource assignment type is *'dynamicSwitch',* the number of bits occupied by the frequency domain resource assignment information is related to both a size of the each carrier bandwidth and the number of RBGs under the each carrier bandwidth. A specific calculation of the number of bits occupied by the frequency domain resource assignment information is as follows.

When the frequency domain resource assignment type is type 0, and the same frequency domain resource is adopted for each of multiple carriers scheduled through one carrier in a logical cell, the number of bits occupied by the frequency domain resource assignment information is *max_j{N_{RBG_j}}*, where $N_{RBG_j}$ is the number of RBGs included in a *j*th carrier in the cell, *j* is greater than or equal to 1 and less than or equal to *n, n is* the number of carriers carried by the scheduling information, and max_j{N_{RBG_j}} is the maximum number of RBG among RBGs included in the carriers carried by the scheduling information.

When the frequency domain resource assignment type is type 0, and multiple carriers scheduled by one carrier in one logical cell adopt different frequency domain resources, the number of bits occupied by the frequency domain resource assignment information is sum_j{N_{RBG_j}}, where $N_{RBG_j}$ is the number of RBGs included in a *j*th carrier in the cell, *j* is greater than or equal to 1 and less than or equal to *n, n* is the number of carriers carried by the scheduling information, and sum_j{N_{RBG_j}} is a sum of the number of RBGs included in the carriers carried by the scheduling information.

When the frequency domain resource assignment type is type 1, and the same frequency domain resource is adopted for each of the multiple carriers in the logical cell, the number of bits occupied by the frequency domain resource assignment information is $\max_j\{\lceil log_2(N_{RB}^{DL,BWP_j}(N_{RB}^{DL,BWP_j} + 1)/2) \rceil\}$ , where *j* is greater than or equal to 1 and less than or equal to *n, n* is the number of carriers carried by the scheduling information, and $N_{RB}^{DL,BWP_j}$ is the number of available RBs within the bandwidth of the *j*th carrier.

When the frequency domain resource assignment type is type 1, and multiple carriers scheduled by one carrier in one logical cell adopt different frequency domain resources, the number of bits occupied by the frequency domain resource assignment information is $\text{sum}_j\{\lceil log_2(N_{RB}^{DL,BWP_j}(N_{RB}^{DL,BWP_j}+1)/2)\rceil\}$ , where

$\lceil log_2(N_{RB}^{DL,BWP_j}(N_{RB}^{DL,BWP_j}+1)/2)\rceil$ is the frequency resource size of the *j*th carrier in the cell, *j* is greater than or equal to 1 and less than or equal to *n, n* is the number of carriers carried by the scheduling information, $N_{RB}^{DL,BWP_j}$ is the number of available RBs within the bandwidth of the *j*th carrier.

When the frequency domain resource assignment type is *'dynamicSwitch',* and multiple carriers scheduled by one carrier in one logical cell adopt the same frequency domain resource, the number of bits occupied by the frequency domain resource assignment information is $max_j\left(\lceil log_2(N_{RB}^{DL,BWP_j}(N_{RB}^{DL,BWP_j}+1)/2)\rceil, N_{RBG_j}\right)+1$, where is greater than or equal to 1 and less than or equal to *n, n* is the number of carriers carried by the scheduling information, $N_{RB}^{DL,BWP_j}$ is the number of available RBs within the bandwidth of the *j*th carrier.

When the frequency domain resource assignment type is *'dynamicSwitch',* and multiple carriers scheduled by one carrier in one logical cell adopt different frequency domain resources, the number of bits occupied by the frequency domain resource assignment information is $sum_j\left(\lceil log_2(N_{RB}^{DL,BWP_j}(N_{RB}^{DL,BWP_j}+1)/2)\rceil, N_{RBG_j}\right)+1$, where is greater than or equal to 1 and less than or equal to *n, n is* the number of carriers carried by the scheduling information, $N_{RB}^{DL,BWP_j}$ is the number of available RBs within the bandwidth of the *j*th carrier.

Frequency domain resource assignment type being Type 0 is taken as an example in the following to introduce how to determine the frequency domain resources of the transport block transmitted on the carrier according to the frequency domain resource assignment information.

For example, if the frequency domain resource assignment information is used to indicate frequency domain resource of one carrier and the frequency domain resource assignment type is type 0, if the carrier includes 10 RBGs, the frequency domain resource assignment information may include 10 bits. And bit 0 indicates that the RBG is unavailable, and bit 1 indicates that the RBG is available. For example, if each of the third, fifth and sixth bits in the 10 bits for the frequency domain resource assignment information is 1, it is known that the third, fifth and sixth RBGs in the carrier are available. Then, combined with the number of RBs included in each RBG in the carrier, the available RBs in the carrier may be determined, and these available RBs are the frequency domain resources of the transport block transmitted on the carrier.

For example, if the frequency domain resource assignment information is used to indicate the frequency domain resource of multiple carriers and the frequency domain resource assignment type is type 0, if the multiple carriers carried by the scheduling information use the same frequency domain resource, then the maximum number of RBGs in each of the carriers is taken to be the maximum number of bits for the frequency domain resource assignment information. For example, if the frequency domain resource assignment information is used to indicate the frequency domain resources of 2 carriers, where carrier 0 includes 5 RBGs, and carrier 1 includes 8 RBGs, then the frequency domain resource assignment information may include max(5,8)=8 bits, these 8 bits are common frequency domain resource indication bits corresponding to the 2 carriers. For carrier 0, only the first 5 bits of the 8 bits for the frequency domain resource assignment information are valid; for carrier 1, all 8 bits for the frequency domain resource assignment information are valid bits, and bit 0 indicates that the corresponding RBG is unavailable, and bit 1 indicates that the corresponding RBG is available.

For example, the 8 bits of the frequency domain resource assignment information are 00101010, that is, the third, fifth and seventh bits of the 8 bits are 1, then for carrier 0, the third and fifth RBGs are available, and then combined with the number of RBs included in each RBG of carrier 0, the available RBs of carrier 0 may be determined, and the available RBs of carrier 0 are the frequency domain resources of the transport block transmitted on carrier 0. For carrier 1, the third and fifth and seventh RBGs are available, and then combined with the number of RBs included in each RBG of carrier 1, the available RBs of carrier 1 may be determined, and the available RBs of carrier 1 are the frequency domain resources of the transport block transmitted on carrier 1.

For example, if the frequency domain resource assignment information is used to indicate the frequency domain resource of multiple carriers and the frequency domain resource assignment type is type 0, if the multiple carriers carried by the scheduling information use different frequency domain resources respectively, then the number of bits occupied by the frequency domain resource assignment information is a sum of the frequency domain resource indication bits required by the carriers. For example, if the frequency domain resource assignment information is used to indicate the frequency domain resources of 2 carriers, where carrier 0 includes 5 RBGs, and carrier 1 includes 8 RBGs, then the frequency domain resource assignment information may include 5+8=13 bits, where the first 5 bits are frequency domain resource indication bits corresponding to carrier 0, and are used to indicate the frequency domain resources of the transport block transmitted on carrier 0; the last 8 bits correspond to carrier 1, are frequency domain resource indication bits corresponding to carrier 1, and are used to indicate the frequency domain resources of the transport block transmitted on carrier 1.

For example, the 13 bits for the frequency domain resource assignment information are 0010101010110, then for carrier 0, the first 5 bits 00101 indicate that the third and fifth RBGs are available, and then combined with the number of RBs included in each RBG of carrier 0, the available RBs of carrier 0 may be determined, and the available RBs of carrier 0 are the frequency domain resources of the transport block transmitted on carrier 0; for carrier 1, the last 8 bits 01010110 indicate that the second, fourth, sixth and seventh RBGs are available, and then combined with the number of RBs included in each RBG of carrier 1, the available RBs of carrier 1 may be determined, and the available RBs of carrier 1 are the frequency domain resources of the transport block transmitted on carrier 1.

Optionally, according to the scheduling information, at least one of the time domain resource, the modulation scheme, the transport block size, the redundancy version and the code block group of the transport block transmitted on the carrier may be determined.

Optionally, the time domain resource is the starting symbol position and the time domain symbol duration indicated in the time domain resource assignment information.

Optionally, the time domain resource assignment information may be used to indicate the time domain resource of one carrier, or the time domain resources of multiple carriers.

For any target carrier, if the scheduling information transmitted on the target carrier includes the time domain resource assignment information, the time domain resource assignment information is used to indicate the time domain resources of the transport block transmitted on $M$ carriers, or, the time domain resource assignment information is used to indicate the time domain resources for transmission on the target carrier. $M$ is greater than or equal to 1 and less than or equal to $N$, $N$ is the number of the multiple carriers in the cell, and the $M$ carriers include the target carrier.

Optionally, when the time domain resource assignment information is used to indicate the time domain resources of the transport block transmitted on the $M$ carriers, the time domain resource assignment information includes a group of common time domain resource indication bits corresponding to the $M$ carriers or $M$ groups of time domain resource indication bits respectively corresponding to the $M$ carriers.

Optionally, when the time domain resource assignment information transmitted on the target carrier is used to indicate the time domain resources of multiple carriers, if same time domain resource assignment information is adopted for the multiple carriers carried by the scheduling information, then the number of bits occupied by the time domain resource assignment information of the multiple carriers is 4 bits, and these 4 bits are the common time domain resource indication bits corresponding to the multiple carriers in the time domain resource assignment information. For example, when the time domain resource assignment information is used to indicate the time domain resources of carrier 0 and carrier 1, the time domain resource assignment information includes the starting symbol position and time domain symbol duration, a time period may be determined according to the starting symbol position and time domain symbol duration, and within the time period, the transport block is transmitted on carrier 0 and carrier 1. Carrier 0 and carrier 1 have the same starting symbol position and time domain symbol duration, that is, the time domain resources of the transport block transmitted on carrier 0 and carrier 1 are the same.

Optionally, when the time domain resource assignment information transmitted on the target carrier is used to indicate the time domain resources of the M carriers, if different time domain resource assignment information is adopted for the M carriers carried by the scheduling information, then the number of bits occupied by the time domain resource assignment information transmitted on the target carrier is 4*M bits, where M is a number of scheduled carriers (including its own scheduling information). For example, when the time domain resource assignment information transmitted on carrier 0 is used to indicate the time domain resources of carrier 0 and carrier 1, the number of bits occupied by the time domain resource assignment information is 4*2=8 bits, where the first 4 bits is the time domain resource indication bits corresponding to carrier 0, indicating the time domain resources of the transport block transmitted on carrier 0, that is, the starting symbol position and the time domain symbol duration of the transport block transmitted on carrier 0. And the last 4 bits are the time domain resource indication bits corresponding to carrier 1, indicating the time domain resources of the transport block transmitted on carrier 1, that is, the starting symbol position and the time domain symbol duration of the transport block transmitted on carrier 1.

Optionally, the modulation and coding scheme is used to indicate the modulation scheme of the transport block transmitted on the carrier and the transport block size after the transport block is modulated according to the corresponding modulation scheme.

Optionally, the modulation and coding scheme may be used to indicate the modulation scheme for the transport block on one carrier and the transport block size after modulation, or may be used to indicate the modulation scheme for the transport block on multiple carriers and the transport block size after modulation.

For any target carrier, if scheduling information transmitted on the target carrier includes the modulation and coding scheme, the modulation and coding scheme is used to indicate the modulation and coding scheme of the transport block transmitted on $M$ carriers, or the modulation and coding scheme is used to indicate the modulation and coding scheme for transmission on the target carrier. $M$ is greater than or equal to 1 and less than or equal to $N$, $N$ is the number of the multiple carriers in the cell, and the M carriers include the target carrier.

Optionally, when the modulation and coding scheme is used to indicate the modulation and coding scheme of the transport block transmitted on the $M$ carriers, the modulation and coding scheme includes common modulation and coding scheme indication bits corresponding to the $M$ carriers or $M$ modulation and coding scheme indication bits respectively corresponding to the $M$ carriers.

Optionally, when the modulation and coding scheme is used to indicate the modulation scheme for the transport block on the $M$ carriers and the transport block size after modulation, if a same modulation and coding scheme is adopted for the multiple carriers carried by the scheduling information, the number of bits for the modulation and coding scheme is 5, and these 5 bits are the common modulation and coding scheme indication bits corresponding to the multiple carriers in the modulation and coding scheme. When different modulation and coding schemes are adopted for the multiple carriers carried by the scheduling information, the number of bits for the modulation and coding scheme is 5*M, including $M$ modulation and coding scheme indication bits respectively corresponding to the $M$ carriers, where $M$ is the number of the scheduled carriers.

Optionally, the redundancy version information includes redundancy version identifier of at least one carrier, and the redundancy versions of the transport block transmitted on the at least one carrier may be determined according to the redundancy version information.

Optionally, when the number of bits for the redundancy version identifier is different, the value of the redundancy version transmitted by the transport block on the corresponding carrier may also be different.

Optionally, when the number of bits for the redundancy version identifier is 0, the redundancy version of the transport block transmitted on the corresponding carrier is 0.

Optionally, when the number of bits for the redundancy version identifier is 1, the redundancy version of the transport block transmitted on the corresponding carrier is 0 or 3.

When the number of bits for the redundancy version identifier is 1, the value of the redundancy versions of the transport block transmitted on the corresponding carrier may be determined according to Table 2.

When the value of the redundancy version information is 0, the redundancy version of the transport block transmitted on the corresponding carrier is 0; when the value of the redundancy version information is 1, the redundancy version of the transport block transmitted on the corresponding carrier is 3.

Optionally, when the number of bits for the redundancy version identifier is 2, the redundancy version of the transport block transmitted on the corresponding carrier is any one of 0, 1, 2 and 3.

When the number of bits for the redundancy version identifier is 2, the value of the redundancy versions of the transport block transmitted on the corresponding carrier may be determined according to Table 3.

When the value of the redundancy version information is 00, the redundancy version of the transport block transmitted on the corresponding carrier is 0; when the value of the redundancy version information is 01, the redundancy version of the transport block transmitted on the corresponding carrier is 1; when the value of the redundancy version information is 10, the redundancy versions of the transport block transmitted on the corresponding carrier is 2; when the value of the redundancy version information is 11, the redundancy version of the transport block transmitted on the corresponding carrier is 3.

For any target carrier, if the scheduling information transmitted on the target carrier includes the redundancy version information, the redundancy version information is used to indicate the redundancy versions of the transport block transmitted on $M$ carriers, or, the redundancy version information is used to indicate the redundancy version for transmission on the target carrier. $M$ is greater than or equal to 1 and less than or equal to $N$, where $N$ is the number of the multiple carriers in the cell, and the $M$ carriers include the target carrier.

Optionally, when the redundancy version information is used to indicate the redundancy versions of the transport block transmitted on the $M$ carriers, the redundancy version information includes a common redundancy version identifier corresponding to the $M$ carriers or $M$ redundancy version identifiers respectively corresponding to the $M$ carriers.

Optionally, when the redundancy version information only indicates the redundancy version of one carrier, the number of bits occupied by the redundancy version information is 0, 1 or 2; when the redundancy version information indicates the redundancy versions of the $M$ carriers, if a same redundancy version is adopted for the $M$ carriers carried by the scheduling information or the redundancy versions of the $M$ carriers may be obtained based on one carrier as per rules, the number of bits occupied by the redundancy version information is 0, 1 or 2; if different redundancy versions are adopted for the $M$ carriers carried by the scheduling information, the number of bits occupied by the redundancy versions is {0, 1 or 2}*$M$, where $M$ is the number of the scheduled carriers.

Optionally, the redundancy version information includes a common redundancy version identifier corresponding to the $M$ carriers, or $M$ redundancy version identifiers respectively corresponding to the $M$ carriers.

Optionally, when the scheduling information of at least two carriers in the same logical cell is carried in DCI of one carrier, the DCI includes carrier indicator, and the carrier indicator is used to indicate the scheduling information of which carriers is included in the DCI. If the DCI includes the scheduling information of at least two carriers, the carrier indicator is also used to implicitly indicate an order of partial scheduling information of the carriers.

Optionally, partial scheduling information may include at least one of the time domain resource assignment information, the modulation and coding scheme and the redundancy version information.

Optionally, when the transport block is transmitted in the distributed transmission manner, the scheduling information also includes the code block group transmission information, and the code block group transmission information is used to indicate the code block group of the transport block transmitted on the corresponding carrier.

In the above embodiments, transmission manners of the configuration information and the scheduling information, and how to determine the scheduling manner of the transport block transmitted on the carrier according to the configuration information and the scheduling information are introduced. When the number of carriers in the same logical cell is more than one, and there is a situation where the more than one carrier is scheduled through one carrier (that is, the network device sends all or part of the scheduling information of the more than one carrier to the terminal device through one carrier), the same frequency domain resource or different frequency domain resources may be adopted for the more than one carrier; the same time domain resource or different time domain resources may be adopted for the more than one carrier; the same modulation and coding scheme or different modulation and coding schemes may be adopted for the more than one carrier; same redundancy version information or different redundancy version information may be adopted for the more than one carrier.

When all the scheduling information of the more than one carrier is transmitted through this one carrier, for example, carrier 0, carrier 1 and carrier 2 are scheduled through carrier 0, then the scheduling information transmitted on carrier 0 includes at least one of the frequency domain resource assignment information, the time domain resource assignment information, the modulation and coding scheme, the redundancy version information, the carrier indicator and the code block group transmission information. Same frequency domain resource or different frequency domain resources may be adopted for these three carriers of carrier 0, carrier 1, and carrier 2. Depending on whether the frequency domain resources of the carriers are the same, the number of bits included in the frequency domain resource assignment information is also different. Same time domain resource or different time domain resources may be adopted for these three carriers of carrier 0, carrier 1, and carrier 2. Depending on whether the time domain resources of the carriers are the same, the number of bits included in the time domain resource assignment information is also different. Same modulation and coding scheme or different modulation and coding schemes may be adopted for these three carriers of carrier 0, carrier 1, and carrier 2. Depending on whether the modulation and coding schemes of the carriers are the same, the number of bits included in the modulation and coding schemes is also different. Same redundancy version information or different redundancy version information may be adopted for these three carriers of carrier 0, carrier 1, and carrier 2. According to whether the redundancy version information of the carriers is the same, the number of bits included in the redundancy version information is also different.

When part of the scheduling information of the more than one carrier is transmitted through one carrier, for example, carrier 0, carrier 1 and carrier 2 are scheduled through carrier 0, then the scheduling information transmitted on carrier 0 includes at least one of the frequency domain resource assignment information, the time domain resource assignment information, the modulation and coding scheme, the redundancy version information, the carrier indicator and the code block group transmission information. Then, carrier 1 may be used to transmit remaining scheduling information of carrier 1, and carrier 2 may be used to transmit remaining scheduling information of carrier 2.

Optionally, carrier 0 is used to transmit all scheduling information of carrier 0, as well as the same scheduling information of carrier 0, carrier 1 and carrier 2. For example, when the same frequency domain resource and the same time domain resource are adopted for carrier 0, carrier 1, and carrier 2, the frequency domain resource assignment information and the time domain resource assignment information of carrier 0, carrier 1 and carrier 2, as well as the redundancy version information and the modulation and coding scheme, etc. of carrier 0 may be transmitted on carrier 0. Then the redundancy version information and the modulation and coding scheme, etc., of carrier 1 are transmitted through carrier 1, the redundancy version information and the modulation and coding scheme, etc. of carrier 2 are transmitted through carrier 2.

Optionally, when the more than one carrier is scheduled through one carrier, any one or more of frequency domain resources, time domain resources, redundancy version information, and modulation and coding schemes of the more than one carrier may be the same or different. For example, when carrier 0, carrier 1 and carrier 2 are scheduled through carrier 0, the same time domain resource, the same redundancy version information, and different modulation and coding schemes and different frequency domain resources may be adopted for carrier 0, carrier 1 and carrier 2; the same time domain resource, different modulation and coding schemes, different frequency domain resources and different redundancy version information may be adopted for carrier 0, carrier 1 and carrier 2; the same time domain resource, same frequency domain resource, same redundancy version information, and different modulation and coding schemes, etc.

may be adopted for carrier 0, carrier 1 and carrier 2. The network device determines the scheduling manner of the transport block transmitted on each carrier through the scheduling information transmitted on the carriers and the configuration information transmitted on the anchor carrier.

For example, it is shown in FIG. 9 that a number of carriers in a same logical cell is 5, namely CC0, CC1, CC2, CC3 and CC4. CC0 carries all the scheduling information of CC0, CC1 and CC2. CC3 carries all the scheduling information of CC3 and CC4. In an example of FIG. 9, a target carrier includes CC0 and CC3.

According to time domain resource assignment information in a DCI on CC0, time domain resources of the transport block transmitted on CC0, CC1 and CC2 may be determined. If a same time domain resource is adopted for CC0, CC1 and CC2, a number of bits for the time domain resource assignment information in the DCI on CC0 is 4. If different time domain resources are adopted for CC0, CC1 and CC2, the number of bits for the time domain resource assignment information in the DCI on CC0 is 4*3=12. The time domain resources of the transport block transmitted on each carrier is determined according to a bit field corresponding to the time domain resource assignment information of the carrier.

According to the frequency domain resource assignment information in the DCI on CC0, the frequency domain resources of the transport block transmitted on CC0, CC1 and CC2 may be determined. When frequency domain resource assignment type is type 0, the number of frequency domain resource assignment information bits corresponding to CC0 is $N_{RBG_0}$, and $N_{RBG_0}$ is a number of RBGs included in CC0. Similarly, the number of frequency domain resource assignment information bits corresponding to CC1 is $N_{RBG_1}$, and the number of frequency domain resource assignment information bits corresponding to CC2 is $N_{RBG_2}$. If the same frequency domain resource is adopted for CC0, CC1 and CC2, the number of bits for the frequency domain resource assignment information in the DCI on CC0 is $\max_j\{N_{RBG_j}\}$, where $j$=0,1, 2; If different frequency domain resources are adopted for CC0, CC1 and CC2, the number of bits for the frequency domain resource assignment information in the DCI on CC0 is $\text{sum}_j\{N_{RBG_j}\}$, where j=0,1,2. When the frequency domain resource assignment type is other types, the number of bits for the frequency domain resource assignment information in the DCI on CC0 may be determined according to whether the same frequency domain resource is adopted for CC0, CC1 and CC2.

According to modulation and coding scheme in the DCI on CC0, the modulation and coding scheme of the transport block transmitted on CC0, CC1 and CC2 may be determined. If a same modulation and coding scheme is adopted for CC0, CC1 and CC2, a number of bits for the modulation and coding scheme in the DCI on CC0 is 5. If different modulation and coding schemes are adopted for CC0, CC1 and CC2, the number of bits for the modulation and coding scheme in the DCI on CC0 is 5*3=15. The modulation and coding scheme of the transport block transmitted on each carrier is determined according to the bit field corresponding to the modulation and coding scheme of the carrier.

If redundancy version of the transport block transmitted on CC0, CC1 and CC2 is same, a number of bits for the redundancy version information in the DCI on CC0 is {0, 1 or 2}. If the redundancy versions of the transport block transmitted on CC0, CC1 and CC2 is different, a possible implementation is that the number of bits for the redundancy version information in the DCI on CC0 is {0, 1 or 2}, which is used to indicate the redundancy versions of the transport block transmitted on CC0, and then the redundancy versions of the transport block transmitted on CC1 and CC2 is determined according to some rules; another possible implementation is that the number of bits for the redundancy version in the DCI on CC0 is 3*{0, 1 or 2}, and the redundancy versions of the transport block transmitted on each carrier is determined according to a bit field corresponding to the redundancy version information of the carrier.

For the target carrier CC0, the scheduling information transmitted on CC0 includes the frequency domain resource assignment information, and the frequency domain resource assignment information is used to indicate frequency domain resources of the transport block transmitted on *M* carriers (that is, CC0, CC1 and CC2); the scheduling information transmitted on CC0 includes the time domain resource assignment information, and the time domain resource assignment information is used to indicate the time domain resources of the transport block transmitted on the *M* carriers (that is, CC0, CC1 and CC2); the scheduling information transmitted on CC0 includes the modulation and coding scheme, and the modulation and coding scheme is used to indicate the modulation and coding scheme of the transport block transmitted on the *M* carriers (that is, CC0, CC1 and CC2); the scheduling information transmitted on CC0 includes the redundancy version information, and the redundancy version information is used to indicate the redundancy version of the transport block transmitted on the *M* carriers (that is, CC0, CC1 and CC2).

The number of bits of the DCI transmitted on CC0 at least includes a sum of the number of bits for the time domain resource assignment information, the frequency domain resource assignment information, the modulation and coding scheme, and the redundancy version information. For example, the same time domain resource is adopted for CC0, CC1, and CC2, so the number of bits for the time domain resource assignment information in the DCI on CC0 is 4; different frequency domain resource information is adopted for CC0, CC1, and CC2 and the frequency domain resource assignment type is type 0, so the number of bits for the frequency domain resource assignment information in the DCI on CC0 is $\text{sum}_j\{N_{RBG_j}\}$, where j=0,1,2; the same redundancy version is adopted for CC0, CC1, and CC2, then the number of bits for the redundancy version information in the DCI on CC0 is {0, 1 or 2}; the same modulation and coding scheme is adopted for CC0, CC1, and CC2, then the number of bits for the modulation and coding scheme information in the DCI on CC0 is 5. Therefore, the number of bits in the DCI on CC0 is at least 4+$\text{sum}_j\{N_{RBG_j}\}$+{0, 1 or 2}+5. In addition to the frequency domain resource assignment information, the time domain resource assignment information, the modulation and coding scheme

and the redundancy version information, the DCI transmitted on CC0 may also include other information, such as carrier indicator, code block group transmission information (for a situation when the transport block is transmitted in a distributed transmission manner, that is, the transport block is divided into multiple code block groups to transmit on the carrier) and the like.

For the target carrier CC3, the scheduling information transmitted on CC3 includes the frequency domain resource assignment information, and the frequency domain resource assignment information is used to indicate frequency domain resources of the transport block transmitted on $M$ carriers (that is, CC3 and CC4); the scheduling information transmitted on CC3 includes the time domain resource assignment information, and the time domain resource assignment information is used to indicate the time domain resources of the transport block transmitted on the $M$ carriers (that is, CC3 and CC4); the scheduling information transmitted on CC3 includes the modulation and coding scheme, and the modulation and coding scheme is used to indicate the modulation and coding scheme of the transport block transmitted on the $M$ carriers (that is, CC3 and CC4); the scheduling information transmitted on CC3 includes the redundancy version information, and the redundancy version information is used to indicate the redundancy version of the transport block transmitted on the $M$ carriers (that is, CC3 and CC4).

If time domain resources for CC3 and CC4 are different, but all of frequency domain resources (the frequency domain resource assignment type is type 0), redundancy version information, and modulation and coding schemes for CC3 and CC4 are same, then the number of bits of the DCI on CC3 is at least $4*2+\max_j\{N_{RBG_j}\}+\{0, 1 \text{ or } 2\}+5$. Similarly, time domain resources, redundancy versions, etc. for CC0, CC1, and CC2 may be different, and a size of the scheduling information may be obtained according to the above solution. Similarly, in addition to the frequency domain resource assignment information, the time domain resource assignment information, the modulation and coding scheme and the redundancy version information, the DCI transmitted on CC3 may also include other information, such as the carrier indicator, code block group transmission information (for the situation when the transport block is transmitted in a distributed transmission manner, that is, the transport block is divided into multiple code block groups to transmit on the carrier) and the like.

For example, in FIG. 10, a number of carriers in a same logical cell is 5, namely CC0, CC1, CC2, CC3 and CC4. CC0 carries all scheduling information of CC0 and part of scheduling information of CC1 and CC2. CC3 carries all the scheduling information of CC3 and part of the scheduling information of CC4. CC4 carries a remaining part of the scheduling information of CC4.

For example, time domain resource assignment information and frequency domain resource assignment information of CC1 and CC2 are carried on CC0, but remaining information such as redundancy version information and modulation and coding scheme are carried on CC1. CC3 carries the redundancy version information and the modulation and coding scheme of CC4, and CC4 carries the time domain resource assignment information and frequency domain resource assignment information of CC4, and so on.

Optionally, in addition to the frequency domain resource assignment information, the time domain resource assignment information, the modulation and coding scheme and the redundancy version information, a DCI transmitted on CC0 may also include other information, such as carrier indicator, the code block group transmission information (for the situation when the transport block is transmitted in a distributed transmission manner, that is, the transport block is divided into multiple code block groups to transmit on the carrier), and the like. The other information included in the DCI transmitted on CC1, CC3 and CC4 is similar to the other information included in the DCI transmitted on CC0, which will not be repeated here.

In an example of FIG. 10, a target carrier includes CC0, CC1, CC3 and CC4.

For the target carrier CC0, the scheduling information transmitted on CC0 includes the frequency domain resource assignment information, the time domain resource assignment information, the modulation and coding scheme and the redundancy version information. The frequency domain resource assignment information is used to indicate the frequency domain resources of the transport block transmitted on $M$ carriers (that is, CC0, CC1 and CC2); the time domain resource assignment information is used to indicate the time domain resources of the transport block transmitted on the $M$ carriers (that is, CC0, CC0, CC1 and CC2); the modulation and coding scheme is used to indicate the modulation and coding scheme of the transport block transmitted on the target carrier CC0; the redundancy version information is used to indicate redundancy versions of the transport block transmitted on the target carrier CC0.

For the target carrier CC1, the scheduling information transmitted on CC1 includes the modulation and coding scheme and the redundancy version information. The modulation and coding scheme is used to indicate the modulation and coding scheme of the transport block transmitted on $M$ carriers (that is, CC1 and CC2); the redundancy version information is used to indicate the redundancy versions of the transport block transmitted on the $M$ carriers (that is, CC1 and CC2).

For the target carrier CC3, the scheduling information transmitted on CC3 includes the frequency domain resource assignment information, the time domain resource assignment information, the modulation and coding scheme and the redundancy version information. The frequency domain resource assignment information is used to indicate the frequency domain resources of the transport block transmitted on the target carrier CC3; the time domain resource assignment information is used to indicate the time domain resources of the transport block transmitted on the target carrier CC3; the modulation and coding scheme is used to indicate the modulation and coding scheme of the transport block transmitted on *M* carriers (that is, CC3 and CC4); the redundancy version information is used to indicate the redundancy versions of the transport block transmitted on the *M* carriers (that is, CC3 and CC4).

For the target carrier CC4, the scheduling information transmitted on CC4 includes the frequency domain resource assignment information and the time domain resource assignment information. The frequency domain resource assignment information is used to indicate the frequency domain resources of the transport block transmitted on the target carrier CC4; the time domain resource assignment information is used to indicate the time domain resources of the transport block transmitted on the target carrier CC4.

The solution of the present application will be introduced below with reference to specific examples.

As shown in FIG. 11, an example is made for a situation where a number of carriers included in a same cell is 1, and the carrier in the cell is CC0. When only one carrier is included in the cell, a network device sends the scheduling information and/or the configuration information of the carrier to a terminal device through the carrier. Optionally, the configuration information includes frequency points and/or bandwidths of the carrier, and the scheduling information includes at least one of frequency domain resource assignment information, time domain resource assignment information, modulation and coding scheme, and redundancy version information. Since in the implementation, only one carrier is included in the cell, carrier indicator and code block group transmission information may not be included in the scheduling information.

For example, in FIG. 11, the network device sends the scheduling information and/or the configuration information of CC0 to the terminal device through CC0. Optionally, a chronological order of sending the scheduling information and/or the configuration information may be that the scheduling information is sent earlier than the configuration information, or that the scheduling information is sent later than the configuration information, or that the scheduling information and configuration information are sent at the same time, which is not limited in the embodiments of the present application.

Optionally, the configuration information of CC0 may be carried on a SIB or on a RRC. The network device sends a SIB signaling or a RRC signaling to the terminal device on CC0, and after the terminal device receives the SIB signaling or the RRC signaling, the configuration information of CC0 is acquired according to the SIB signaling or RRC signaling, and frequency points and/or bandwidths of CC0 may be acquired according to the configuration information of CC0.

Optionally, the scheduling information of CC0 may be carried on a DCI. The network device sends the DCI to the terminal device on CC0. After receiving the DCI, the terminal device acquires the scheduling information of CC0 according to the DCI, and acquires the at least one of the frequency domain resource assignment information, the time domain resource assignment information, the modulation and coding scheme, and the redundancy version information of CC0 according to the scheduling information of CC0.

The frequency domain resource assignment information includes a starting resource block and an available resource block of CC0, and the frequency domain resources of the transport block transmitted on CC0 may be determined according to the starting resource block, the available resource block and the bandwidth of CC0.

For example, if the bandwidth of CC0 is $N_{BWP,i}^{size}=50RBs$, $N_{BWP,i}^{start}=25$, a configuration parameter indicates configuration 1, and frequency domain resource assignment type is type 0, then it may be determined according to Table 1 that P=4. A number of RBGs contained in CC0 is

$$N_{RBG} = \left\lceil (N_{BWP,i}^{size} + (N_{BWP,i}^{start} \bmod P))/P \right\rceil = \left\lceil ((50 + 25 \bmod 4/4) \right\rceil = 13$$. A number of RBs contained in a first RBG is $RBG_0^{size} = P - N_{BWP,i}^{start} \bmod P = 4 - 25 \bmod 4 = 3$. A number of RBs contained in a last RBG is

$$RBG_{last}^{size} (N_{BWP,i}^{start} + N_{BWP,i}^{size}) \bmod P = (25 + 50) \bmod 4 = 3$$. There are 13-2=11 middle RBGs, and each middle RBG contains 4 RBs. Then the frequency domain resource assignment information may include 13 bits, and each bit is used to indicate whether a corresponding RBG is available.

For example, if the frequency domain resource assignment information is 1010000000001, then according to the frequency domain resource assignment information, it may be determined that the first, third, and thirteenth RBGs in CC0 are available. Therefore, frequency domain resources of CC0 are the 3 RBs included in the first RBG (i.e., RB0-RB2 in FIG. 11), the 4 RBs included in the third RBG (i.e., RB7-RB10 in FIG. 11), the 3 RBs included in the thirteenth RBG (i.e., RB47-RB49 in FIG. 11) as shown in an example of a shaded part in FIG. 11.

The time domain resource assignment information may include a starting symbol position and a time domain symbol duration, and then the time domain resources of the transport block transmitted on CC0 is a time period determined according to the starting symbol position and the time domain symbol duration.

The modulation and coding scheme may indicate a modulation scheme of the transport block transmitted is on CC0. The modulation scheme may be, for example, any one of modulation schemes of QPSK, 16QAM, 64QAM. After a corresponding modulation scheme is determined, a transport block size modulated according to the corresponding modulation scheme may be determined.

The redundancy version information may include redundancy version identifier of CC0, and the redundancy versions of the transport block transmitted on CC0 may be determined according to the redundancy version identifier of CC0.

Optionally, when a number of bits for the redundancy version identifier of CC0 is 0, the redundancy versions of the transport block transmitted on CC0 is 0.

Optionally, when the number of bits for the redundancy version identifier of CC0 is 1, if the redundancy version identifier is 0, the redundancy versions of the transport block transmitted on CC0 is 0. If the redundancy version identifier is 1, the redundancy versions of the transport block transmitted on CC0 is 3.

Optionally, when the number of bits for the redundancy version identifier of CC0 is 2, if the redundancy version identifier is 00, the redundancy versions of the transport block transmitted on CC0 is 0. If the redundancy version identifier is 01, the redundancy versions of the transport block transmitted on CC0 is 1. If the redundancy version identifier is 10, the redundancy versions of the transport block transmitted on CC0 is 2. If the redundancy version identifier is 11, the redundancy versions of the transport block transmitted on CC0 is 3.

In the above embodiments, the solution of determining the scheduling manner of the transport block transmitted on the carrier when the number of carriers in the cell is one is introduced. How to determine the scheduling manner of the transport block transmitted on the carrier when the number of carriers in the same cell is more than one will be introduced in the following. In the following embodiments, the number of carriers in the same cell being 5 is taken as an example for introduction. The solution for determining the scheduling manner of the transport block transmitted on the carrier when the number of carriers in the same cell is other values is similar to this example.

As shown in FIG. 12, an example is made for a situation where a number of carriers in a cell is 5, and these 5 carriers in the cell are CC0, CC1, CC2, CC3 and CC4 respectively.

A network device sends the configuration information of these 5 carriers to a terminal device through CC0, the configuration information includes frequency points and/or bandwidths of these 5 carriers, and CC0 is an anchor carrier of these 5 carriers.

In the example in FIG. 12, the network device sends the scheduling information to the terminal device on the target carrier, that is, the scheduling information of CC0, CC1, CC2, CC3, and CC4 is transmitted on the target carrier.

Optionally, the target carrier is an anchor carrier, i.e., CC0.

Optionally, the target carrier is the carrier with a highest RSRP among these 5 carriers, such as CC4. Since the carrier with the higher RSRP is of better channel quality, a probability of successfully receiving the scheduling information can be increased by selecting the carrier with the highest RSRP among the carriers. In FIG. 12, the target carrier being CC4 is taken as an example for introduction.

The network device selects CC4 to carry a DCI for these 5 carriers. In addition to commonly used bits in DCI format 1_0, DCI format 1_1, DCI format 1_2 or other DCI formats, the information bits contained in the DCI also needs to include at least one of frequency domain resource assignment information (that is, bits for frequency domain resource assignment), time domain resource assignment information (that is, bits for a domain resource assignment set), redundancy version information (that is, bits for redundancy version), carrier indicator (that is, bits used to indicate the scheduling information of which carriers are included in the DCI and an order of the scheduling information) and code block group transmission information (that is, bits used to indicate code block groups transmitted on the carriers).

The frequency domain resource corresponding to each carrier in the cell may be jointly determined through the frequency domain resource assignment information combined with the configuration information. For example, frequency domain resource assignment type is type 0, a configuration parameter indicates configuration 1, that is, a corresponding RBG size is as shown in a second column of Table 1. It is assumed that there are 5 carriers in a logical cell, and configured bandwidth of the carriers is {10RB, 50RB, 75RB, 100RB, 20RB}, $N_{BWP,i}^{start}$ of each carrier is {0RB, 25RB, 10RB, 50RB, 10RB}. The RBG numbers of the carriers may be calculated by a formula $N_{RBG} = \left\lceil (N_{BWP,i}^{size} + (N_{BWP,i}^{start} \bmod P))/P \right\rceil$ as {5, 13, 10, 13, 10}. The size of the first RBG of each carrier is calculated according to a formula $RBG_0^{size} = P - N_{BWP,i}^{start} \bmod P$. If $(N_{BWP,i}^{start} + N_{BWP,i}^{size}) \bmod P > 0$, then the size of the last RBG is calculated according to a formula $RBG_{last}^{size} (N_{BWP,i}^{start} + N_{BWP,i}^{size}) \bmod P$, otherwise, the size of the last RBG is a size of a RBG corresponding to a bandwidth in the second column of Table 1, and the size of intermediate RBG is a size of a RBG corresponding to the bandwidth in the second column of Table 1.

If these 5 carriers share same frequency domain information and the scheduling information is carried on one carrier, a number of bits occupied by the frequency domain resource assignment information is max{5,13,10,13,10}=13 bits, and the 13 bits are common frequency domain resource indication bits corresponding to these 5 carriers. For example, in FIG. 13, each small box represents an RBG, and a shaded part represents an available RBG, and other parts represent unavailable RBGs. As shown in FIG. 13, when bits for the frequency domain resource assignment information are 1010100000101, it represent that the first, third, fifth, eleventh and thirteenth RBGs are available. The available RBGs for each carrier are shown in the shaded parts of FIG. 13.

For CC0, it can be known from first 5 bits for the frequency domain resource assignment information that the first, the third and the fifth RBGs are available;

for CC1, it can be known from 13 bits for the frequency domain resource assignment information that the first, the third, the fifth, the eleventh and the thirteenth RBGs are available;

for CC2, it can be known from first 10 bits for the frequency domain resource assignment information that the first, the third and the fifth RBGs are available;

for CC3, it can be known from the 13 bits for the frequency domain resource assignment information that the first, the third, the fifth, the eleventh and the thirteenth RBGs are available;

for CC4, it can be known from the first 10 bits for the frequency domain resource assignment information that the first, the third and the fifth RBGs are available.

If different frequency domain information are adopted for these 5 carriers and the scheduling information is carried on one carrier, a number of bits occupied by the frequency domain resource assignment information is 5+13+10+13+10=51 bits. For each carrier, available frequency domain resource information is acquired according to the bits corresponding to the carrier. For example, in FIG. 14, each small box represents an RBG, and a shaded part represents an available RBG, and other parts represent unavailable RBGs.

When bits for the frequency domain resource assignment information are 10001 0111001001110 1011000110 0101100101110 0010101110, the frequency domain resource assignment information includes 5 bit fields, and each bit field corresponds to a different carrier.

For example, in FIG. 14, a carrier corresponding to the bit field 10001 is CC0. 10001 is frequency domain resource indication bits corresponding to CC0, and is used to indicate the available RBGs in CC0, that is, the first and fifth RBGs are available. Frequency domain resources of the transport block transmitted on CC0 are thus RBs in the first RBG and RBs in the fifth RBG.

The carrier corresponding to the bit field of 0111001001110 is CC1. 0111001001110 is the frequency domain resource indication bits corresponding to CC1, and is used to indicate the available RBGs in CC1, that is, the second, third, fourth, seventh, tenth, eleventh and twelfth RBGs are available. The frequency domain resources of the transport block transmitted on CC1 are thus RBs in the second RBG, RBs in the third RBG, RBs in the fourth RBG, RBs in the seventh RBG, RBs in the tenth RBG, RBs in the eleventh RBG and RBs in the twelfth RBG.

The carrier corresponding to the bit field of 1011000110 is CC2. 1011000110 is the frequency domain resource indication bits corresponding to CC2, and is used to indicate the available RBGs in CC2, that is, the first, third, fourth, eighth and ninth RBGs are available. The frequency domain resources of the transport block transmitted on CC2 are thus RBs in the first RBG, RBs in the third RBG, RBs in the fourth RBG, RBs in the eighth RBG, and RBs in the ninth RBG.

The carrier corresponding to the bit field of 0101100101110 is CC3. 0101100101110 is the frequency domain resource indication bits corresponding to CC3, and is used to indicate the available RBGs in CC3, that is, the second, fourth, fifth, eighth, tenth, eleventh and twelfth RBGs are available. The frequency domain resources of the transport block transmitted on CC3 are thus RBs in the second RBG, RBs in the fourth RBG, RBs in the fifth RBG, RBs in the eighth RBG, RBs in the tenth RBG, RBs in the eleventh RBG and RBs in the twelfth RBG.

The carrier corresponding to the bit field of 0010101110 is CC4. 0010101110 is the frequency domain resource indication bits corresponding to CC4, and is used to indicate the available RBGs in CC4, that is, the third, fifth, seventh, eighth and ninth RBGs are available. The frequency domain resources of the transport block transmitted on CC4 are thus RBs in the third RBG, RBs in the fifth RBG, RBs in the seventh RBG, RBs in the eighth RBG and RBs in the ninth RBG.

When same frequency domain information is adopted for these 5 carriers and the scheduling information is carried on one carrier, the frequency domain resources of the transport block transmitted on each carrier may be determined according to the solution shown in FIG. 13. When different frequency domain information is adopted for these 5 carriers and the scheduling information is carried on one carrier, the frequency domain resources of the transport block transmitted on each carrier may be determined according to the solution shown in FIG. 14.

The number of bits for the time domain resource assignment information is equal to 4 bits or equal to the number of carriers * 4 bits. When multiple carriers of a logical cell shares same time domain resource assignment information and the time domain resource information of the multiple carriers is carried on one carrier, then the number of bits for the time domain resource assignment information is 4 bits, and these 4 bits are common time domain resource indication bits corresponding to these 5 carriers in the time domain resource assignment information transmitted on CC4. The 5 carriers in one logical cell in FIG. 12 is taken as an example, and the scheduling information of these 5 carriers is transmitted on one carrier (for example, the carrier on which the scheduling information is transmitted may be a target carrier), then these 5 carriers have a same starting symbol and a same time domain symbol duration. For example, in FIG. 12, the starting symbol and the time domain symbol duration in the time domain resource assignment information transmitted on CC4 indicate a certain time period, then all the time domain resources of the transport block transmitted on CC0, CC1, CC2, CC3 and CC4 are this time period.

When different time domain resource assignment information is adopted for the multiple carriers of the logical cell and the time domain resource information of the multiple carriers is carried on one carrier, the number of bits for the time domain resource assignment information is 4*M bits, where M is the number of scheduled carriers. The 5 carriers in one logical cell in FIG. 12 is taken as an example, and the scheduling information of these 5 carriers is all transmitted on one carrier, the number of bits for the scheduling information=4*5=20 bits, that is, the time domain resource indicator bits corresponding to these 5 carriers. Combined with an order of the carriers in carrier indicator, information at corresponding bit positions of the corresponding carrier represents the time domain resource for the corresponding carrier. For example, in FIG. 12, the time domain resource assignment information transmitted on CC4 includes starting symbol 1 and time domain symbol duration 1 corresponding to CC0, starting symbol 2 and time domain symbol duration 2 corresponding to CC1, starting symbol 3 and time domain symbol duration 3 corresponding to CC2, starting symbol 4 and time domain symbol duration 4 corresponding to CC3, and starting symbol 5 and time domain symbol duration 5 corresponding to CC4. Then the time domain resources of the transport block transmitted on CC0 is time period 1 indicated by starting symbol 1 and time domain symbol duration 1, the time domain resources of the transport block transmitted on CC1 is time period 2 indicated by starting symbol 2 and time domain symbol duration 2, the time domain resources of the transport block transmitted on CC2 is time period 3 indicated by starting symbol 3 and time domain symbol duration 3, the time domain resources of the transport block transmitted on CC3 is time period 4 indicated by starting symbol 4 and time domain symbol duration 4, the time domain resources of the transport block transmitted on CC4 is time period 5 indicated by starting symbol 5 and time domain symbol duration 5.

The number of bits for the modulation and coding scheme is equal to 5 bits or equal to the number of carriers * 5 bits. When the multiple carriers of the logical cell shares same modulation and coding scheme and the modulation and coding scheme information of the multiple carriers is carried on one carrier, then the number of bits for the modulation and coding scheme is 5 bits, and these 5 bits are common modulation and coding scheme indication bits corresponding to multiple carriers in the modulation and coding scheme. The 5 carriers in one logical cell in FIG. 12 is taken as an example, and the scheduling information of these 5 carriers is transmitted on one carrier (for example, the carrier on which the scheduling information is transmitted may be the target carrier), then these 5 carriers have a same modulation and coding scheme. For example, in FIG. 12, a modulation scheme indicated by the modulation and coding scheme transmitted on CC4 is the QPSK modulation scheme, then all the modulation schemes of the transport block transmitted on CC0, CC1, CC2, CC3 and CC4 are QPSK modulation scheme.

When different modulation and coding schemes are adopted for the multiple carriers of the logical cell and the modulation and coding scheme of the multiple carriers is carried on one carrier, the number of bits for the modulation and coding scheme is 5*$M$ bits, where $M$ is the number of scheduled carriers. The 5 carriers in one logical cell in FIG. 12 is taken as an example, and the scheduling information of these 5 carriers are all transmitted on one carrier, the number of bits for the scheduling information =5*5=25 bits, including 5 groups of modulation and coding scheme indication bits respectively corresponding to these 5 carriers. Combined with the order of the carriers in the carrier indicator, information at the corresponding bit position of the corresponding carrier represents the modulation and coding scheme for the corresponding carrier.

Redundancy version information includes redundancy version identifier of the at least one carrier. For example, if only the redundancy version identifier of CC4 is included in the redundancy version information, then the redundancy versions of the transport block transmitted on CC4 may be determined.

Optionally, when a number of bits for the redundancy version identifier of CC4 is 0, the redundancy versions of the transport block transmitted on CC4 is 0.

Optionally, when the number of bits for the redundancy version identifier of CC4 is 1, if the redundancy version identifier is 0, the redundancy versions of the transport block transmitted on CC4 is 0; if the redundancy version identifier is 1, the redundancy versions of the transport block transmitted on CC4 is 3.

Optionally, when the number of bits for the redundancy version identifier of CC4 is 2, if the redundancy version identifier is 00, the redundancy versions of the transport block transmitted on CC4 is 0; if the redundancy version identifier is 01, the redundancy versions of the transport block transmitted on CC4 is 1; if the redundancy version identifier is 10, the redundancy versions of the transport block transmitted on CC4 is 2; if the redundancy version identifier is 11, the redundancy versions of the transport block transmitted on CC4 is 3.

When the redundancy version information only includes the redundancy version identifier of CC4, the redundancy versions of the transport block transmitted on CC0, CC1, CC2 and CC3 may be the same as the redundancy versions of the transport block transmitted on CC4. For example, the redundancy versions of the transport block transmitted on CC4 is 1, and all the redundancy versions of the transport block transmitted on CC0, CC1, CC2, and CC3 are also 1.

When the redundancy version information only includes the redundancy version identifier of CC4, the redundancy versions of the transport block transmitted on CC0, CC1, CC2 and CC3 may be derived from the redundancy versions of the transport block transmitted on CC4. For example, if a pdsch-AggregationFactor parameter is configured, the redundancy versions of the transport block transmitted on other carriers may be determined through the following rules:

$rv_{id}$=0, if n mod 4=0, then rv1 is 0; if n mod 4=1, then rv1 is 2; if n mod 4=2, then rv1 is 3; and if n mod 4=3, then rv1 is 1;

$rv_{id}$=2, if n mod 4=0, then rv1 is 2; if n mod 4=1, then rv1 is 3; if n mod 4=2, then rv1 is 1; if n mod 4=3, then rv1 is 0;

$rv_{id}$=3, if n mod 4=0, then rv1 is 3; if n mod 4=1, then rv1 is 1; if n mod 4=2, then rv1 is 0; if n mod 4=3, then rv1 is 2;

$rv_{id}$=1, if n mod 4=0, then rv1 is 1; if n mod 4=1, then rv1 is 0; if n mod 4=2, then rv1 is 2; if n mod 4=3, then rv1 is 3;

where $rv_{id}$ is the redundancy version identifier of a target carrier, mod is a modulo operation, *n* is a positive integer greater than or equal to 1 and less than or equal to *N, N* is a number of carriers in the cell, and rv1 is the redundancy versions of the transport block transmitted on carrier n.

Therefore, after the redundancy version identifier of CC4 is acquired, the redundancy versions of the transport block transmitted on these 5 carriers may be determined.

In the above two scenarios (the scheduling information of these 5 carriers in a same logical cell is all carried in carrier 4, and the redundancy versions of other carriers may be acquired according to the redundancy version given through the carrier 4 as per rules, or a same redundancy version is adopted for these 5 carriers), the number of bits for the redundancy version identifier is 0, 1, or 2 bits.

The scheduling information of the 5 carriers in the same logical cell is all carried on carrier 4, and the redundancy versions of other carriers are different from each other, then the number of bits for the redundancy version identifier is {0, 1, or 2 bits}*$N$, where $N$ is the number of carriers.

If a higher layer parameter codeBlockGroupTransmission is configured to indicate that the transport block is transmitted in a distributed transmission manner, the scheduling information includes a code block group transmission information, and the code block group transmission information includes code block group transmission information bits corresponding to each carrier. An arrangement order of the code block group transmission information bits is determined according to the carrier indicator. The code block group for transmission on each carrier may be determined through the code block group transmission information bits corresponding to each carrier. Optionally, a code block included in each code block group may be determined according to protocol 38.214.

When it is determined that the transmission is performed in a distributed transmission manner, and the number of bits for the code block group transmission information may be 0, then an index of the code block group for transmission on each carrier may be determined according to a corresponding rule.

Optionally, when $M$ is greater than $N$ and $n \in \{0,1,...,T_1 - 1\}$, the index of the code block group for transmission on carrier $n$ is $n * N_1 + k_1$, $k_1$=0, 1, ..., $N_1$-1; when $n \in \{T_1, T_1 + 1,...,N - 1\}$, the index of the code block group for transmission on carrier $n$ is $T_1 * N_1 + (n - T_1)N_2 + k_2$, $k_2$=0,1,..., $N_2$-1, where $n$ is greater than or equal to 0 and less than $N$; and/or,

when $M$ is less than or equal to $N$, the index of the code block group for transmission on carrier $n$ is $n$, and $n$ is greater than or equal to 0 and less than $M$;

where $M$ is the number of code block groups included in the transport block, $M$ is a positive integer greater than or equal to 1, $N$ is the number of carriers, $N$ is a positive integer greater than or equal to 2, $T_1$ = M modN,

$N_1 = \lceil M/N \rceil$, $N_2 = \lfloor M/N \rfloor$, $\lceil M/N \rceil$ represents to round (M/N) up to the nearest integer, and $\lfloor M/N \rfloor$ represents to round (M/N) down to the nearest integer.

In the examples shown in FIG. 12 to FIG. 14, the solution of carrying all the scheduling information of these 5 carriers CC0-CC4 through CC4 is introduced. Optionally, CC4 may also carry part of the scheduling information of the 4 carriers CC0-CC3 and all scheduling information of CC4. Optionally, for the 5 carriers, the same frequency domain resource or different frequency domain resources may be adopted; same time domain resource or different time domain resources may be adopted; same modulation and coding scheme or different modulation and coding schemes may be adopted; same redundancy version information or different redundancy version information may be adopted.

As shown in FIG. 15, an example is given for a situation where a number of carriers in a cell is 5, and these 5 carriers in the cell are CC0, CC1, CC2, CC3 and CC4 respectively.

A network device sends the configuration information of these 5 carriers to a terminal device through CC0. The configuration information includes frequency points and/or bandwidths of these 5 carriers, and CC0 is an anchor carrier in these 5 carriers.

In an example in FIG. 15, the network device sends scheduling information to the terminal device on at least two carriers, that is, the scheduling information of CC0, CC1, and CC2 is transmitted on CC0, the scheduling information of CC3 is transmitted on CC3, and the scheduling information of CC4 is transmitted on CC4.

The network device selects CC0 to carry the DCI for the first 3 carriers, and the last two carriers are used to carry its own DCI. In addition to commonly used bits in DCI format 1_0, DCI format 1_1, DCI format 1_2 or other DCI format, the information bits contained in the DCI also needs to include at least one of frequency domain resource assignment information (that is, bits for frequency domain resource assignment), time domain resource assignment information (that is, bits for a domain resource assignment set), redundancy version information (that is, bits for redundancy version), carrier indicator (that is, bits used to indicate the scheduling information of which carriers are included in the DCI and an order of the scheduling information) and code block group transmission information (that is, bits used to indicate code block groups for transmission on each carrier).

The frequency domain resource corresponding to each carrier in the cell may be jointly determined through the frequency domain resource assignment information combined with the configuration information. For example, frequency domain resource assignment type is type 0, a configuration parameter indicates configuration 1, that is, a corresponding RBG size is as shown in a second column of Table 1. It is assumed that there are 5 carriers in a logical cell, and configured bandwidth of the carriers is {10RB, 50RB, 75RB, 100RB, 20RB}, $N_{BWP,i}^{start}$ of each carrier is {0RB, 25RB, 10RB, 50RB, 10RB}. The RBG numbers of the carriers may be calculated by a formula $N_{RBG} = \lceil (N_{BWP,i}^{size} + (N_{BWP,i}^{start} \bmod P))/P \rceil$ as {5, 13, 10, 13, 10}. The size of the first RBG of each carrier is calculated according to a formula $RBG_0^{size} = P - N_{BWP,i}^{start} \bmod P$. If $(N_{BWP,i}^{start} + N_{BWP,i}^{size}) \bmod P > 0$, then the size of the last RBG is calculated according to a formula $RBG_{last}^{size} (N_{BWP,i}^{start} + N_{BWP,i}^{size}) \bmod P$, otherwise, the size of the last RBG is a size of a RBG corresponding to a bandwidth in the second column of Table 1, and the size of intermediate RBG is a size of a RBG corresponding to the bandwidth in the second column of Table 1.

Since the scheduling information of CC0, CC1 and CC2 is carried by CC0, these three carriers of CC0, CC1 and CC2 may share same frequency domain information or different frequency domain information may be adopted for these three carriers.

When these three carriers CC0, CC1 and CC2 may share the same frequency domain information, a number of bits occupied by the frequency domain resource assignment information carried on CC0 is max{5,13,10}=13 bits, and the 13 bits are common frequency domain resource indication bits corresponding to these 3 carriers. As shown in FIG. 16, each small box represents an RBG, and a shaded part represents an available RBG, and other parts represent unavailable RBGs. As shown in FIG. 16, when bits for the frequency domain resource assignment information are 1010100000101, they represent that the first, third, fifth, eleventh and thirteenth RBGs are available. The available RBGs for these three carriers CC0, CC1 and CC2 are shown in the shaded parts of FIG. 16.

For CC0, it can be known from first 5 bits for the frequency domain resource assignment information that the first, the third and the fifth RBGs are available;

for CC1, it can be known from 13 bits for the frequency domain resource assignment information that the first, the third, the fifth, the eleventh and the thirteenth RBGs are available;

for CC2, it can be known from first 10 bits for the frequency domain resource assignment information that the first, the third and the fifth RBGs are available.

For CC3, it can be known from the 13 bits (0011010100000) for the frequency domain resource assignment information carried on CC3 that the third, fourth, sixth and eighth RBGs are available.

For CC4, it can be known from the 10 bits (0010101010) for the frequency domain resource assignment information carried on CC4 that the third, fifth, seventh and ninth RBGs are available.

When different frequency domain information is adopted for these three carriers CC0, CC1 and CC2, a number of bits occupied by the frequency domain resource assignment information carried on CC0 is 5+13+10=28 bits. For each carrier, available frequency domain resource information is acquired according to the bits corresponding to the carrier. As shown in FIG. 17, each small box represents an RBG, and a shaded part represents an available RBG, and other parts represent unavailable RBGs.

When the bits for the frequency domain resource assignment information carried on CC0 are 10001 0111001001110 1011000110, the frequency domain resource assignment information includes 3 bit fields, and each bit field corresponds to a different carrier.

For example, in FIG. 17, a carrier corresponding to the bit field 10001 is CC0. 10001 is frequency domain resource indication bits corresponding to CC0, and is used to indicate the available RBGs in CC0, that is, the first and fifth RBGs are available. Frequency domain resources of the transport block transmitted on CC0 are thus RBs in the first RBG and RBs in the fifth RBG;

the carrier corresponding to the bit field of 0111001001110 is CC1. 0111001001110 is the frequency domain resource indication bits corresponding to CC1, and is used to indicate the available RBGs in CC1, that is, the second, third, fourth, seventh, tenth, eleventh and twelfth RBGs are available. The frequency domain resources of the transport block transmitted on CC1 are thus RBs in the second RBG, RBs in the third RBG, RBs in the fourth RBG, RBs in the seventh RBG, RBs in the tenth RBG, RBs in the eleventh RBG and RBs in the twelfth RBG;

the carrier corresponding to the bit field of 1011000110 is CC2. 1011000110 is the frequency domain resource indication bits corresponding to CC2, and is used to indicate the available RBGs in CC2, that is, the first, third, fourth, eighth and ninth RBGs are available. The frequency domain resources of the transport block transmitted on CC2 are thus RBs in the first RBG, RBs in the third RBG, RBs in the fourth RBG, RBs in the eighth RBG, and RBs in the ninth RBG.

For the frequency domain resource assignment information carried on CC3 and CC4, the frequency domain resource assignment information carried on CC3 is used to indicate the frequency domain resources of the transport block transmitted on CC3, and the frequency domain resource assignment information carried on CC4 is used to indicate the frequency domain resources of the transport block transmitted on CC4. Still taking the frequency domain resource assignment type being type 0 as an example, when CC3 includes 13 RBGs, the number of bits for the frequency domain resource assignment information carried on CC3 is 13; when CC4 includes 10 RBGs, the number of bits for the frequency domain resource assignment information carried on CC4 is 10.

For example, as shown in FIG. 17, the bits for the frequency domain resource assignment information carried on CC3 are 0101100101110. 0101100101110 is the frequency domain resource indication bits corresponding to CC3, and is used to indicate the available RBGs in CC3, that is, the second, fourth, fifth, eighth, tenth, eleventh and twelfth RBGs are available. The frequency domain resources of the transport block transmitted on CC3 are thus RBs in the second RBG, RBs in the fourth RBG, RBs in the fifth RBG, RBs in the eighth RBG, RBs in the tenth RBG, RBs in the eleventh RBG, and RBs in the twelfth RBG;

the bits for the frequency domain resource assignment information carried on CC4 are 0010101110. 0010101110 is the frequency domain resource indication bits corresponding to CC4, and is used to indicate the available RBGs in CC4, that is, the third, fifth, seventh, eighth and ninth RBGs are available. The frequency domain resources of the transport block transmitted on CC4 are thus RBs in the third RBG, RBs in the fifth RBG, RBs in the seventh RBG, RBs in the eighth RBG and RBs in the ninth RBG.

The number of bits for the time domain resource assignment information is equal to 4 bits or equal to the number of carriers * 4 bits. Optionally, time domain resource assignment bits for each carrier is 4 bits, and these 4 bits are common time domain resource indication bits corresponding to these 5 carriers in the time domain resource assignment information transmitted on CC4. For the time domain resource assignment information transmitted on CC0, since the three carriers CC0, CC1 and CC2 are scheduled, when these three carriers share the same time domain resource assignment information, the number of bits for the time domain resource assignment information transmitted on CC0 is 4 bits, and all the time domain resources of the transport block transmitted on CC0, CC1 and CC2 are a time period determined by a starting symbol and a time domain symbol duration in the time domain resource assignment information; when different time domain resource assignment information is adopted for these three carriers, the number of bits for the time domain resource assignment information transmitted on CC0 is 12 bits. An arrangement order of the time domain resource assignment bits of these three carriers is determined according to carrier indicator, and then, according to a starting symbol position and the time domain symbol duration in each group of time domain resource assignment bits, the time domain resources of the transport block transmitted on CC0, CC1 and CC2 may be determined respectively.

For the time domain resource assignment information transmitted on CC3, since CC3 is to be scheduled, the number of bits for the time domain resource assignment information transmitted on CC3 is 4 bits. Then, according to the starting symbol position and the time domain symbol duration in the time domain resource assignment bits, the time domain resources of the transport block transmitted on CC3 may be determined.

For the time domain resource assignment information transmitted on CC4, since CC4 is to be scheduled, the number of bits for the time domain resource assignment information transmitted on CC4 is 4 bits. Then, according to the starting symbol position and the time domain symbol duration in the time domain resource assignment bits, the time domain resources of the transport block transmitted on CC4 may be determined.

The number of bits for the modulation and coding scheme is equal to 5 bits or equal to the number of carriers * 5 bits. Optionally, modulation and coding scheme bits of each carrier is 5 bits, and these 5 bits are common modulation and coding scheme indication bits corresponding to multiple carriers in modulation and coding scheme. For the modulation and coding scheme transmitted on CC0, since these three carriers CC0, CC1 and CC2 are to be scheduled, when these three carriers have same modulation and coding scheme, the number of bits for the modulation and coding scheme is 5 bits. The modulation scheme and a transport block size of the transport block transmitted on CC0, CC1 and CC2 may be determined according to the modulation and coding scheme. When these 3 carriers have different modulation and coding schemes, the number of bits for the modulation and coding scheme transmitted on CC0 is 15 bits, including 3 groups of modulation and coding scheme indication bits respectively corresponding to these 3 carriers. An arrangement order of the modulation and coding scheme bits of these 3 carriers is determined according to the carrier indicator, and then, according to each group of modulation and coding scheme bits, a modulation scheme of the transport block transmitted on CC0, CC1 and CC2 may be determined respectively, and the transport block size after modulation according to a corresponding modulation scheme may be determined.

For the modulation and coding scheme transmitted on CC3, since CC3 is to be scheduled, the number of bits for the modulation and coding scheme is 5 bits, and these 5 bits are the modulation and coding scheme bits corresponding to CC3, and are used to indicate the modulation and encoding scheme of the transport block transmitted on CC3. Then, according to the modulation and coding scheme, the modulation scheme of the transport block transmitted transmitted on CC3 may be determined, and the transport block size after modulation according to a corresponding modulation scheme may be determined.

For the modulation and coding scheme transmitted on CC4, since CC4 is to be scheduled, the number of bits for the modulation and coding scheme is 5 bits, and these 5 bits are the modulation and coding scheme bits corresponding to CC4, and are used to indicate the modulation and encoding scheme of the transport block transmitted on CC4. Then, according to the modulation and coding scheme, the modulation scheme of the transport block transmitted on CC4 may be determined, and the transport block size after modulation according to a corresponding modulation scheme may be determined.

Redundancy version information includes redundancy version identifier of at least one carrier. For example, if the redundancy version information in a DCI transmitted on CC0 only includes the redundancy version identifier of CC0, then the redundancy versions of the transport block transmitted on CC0 may be determined.

Optionally, when a number of bits for the redundancy version identifier of CC0 is 0, the redundancy versions of the transport block transmitted on CC0 is 0.

Optionally, when the number of bits for the redundancy version identifier of CC0 is 1, if the redundancy version identifier is 0, the redundancy versions of the transport block transmitted on CC0 is 0; if the redundancy version identifier is 1, the redundancy versions of the transport block transmitted on CC0 is 3.

Optionally, when the number of bits for the redundancy version identifier of CC0 is 2, if the redundancy version identifier is 00, the redundancy versions of the transport block transmitted on CC0 is 0; if the redundancy version identifier is 01, the redundancy versions of the transport block transmitted on CC0 is 1; if the redundancy version identifier is 10, the redundancy versions of the transport block transmitted on CC0 is 2; if the redundancy version identifier is 11, the redundancy versions of the transport block transmitted on CC0 is 3.

When the redundancy version information in the DCI transmitted on CC0 only includes the redundancy version identifier of CC0, the redundancy versions of the transport block transmitted on CC1 and CC2 may be the same as the redundancy versions of the transport block transmitted on CC0. For example, the redundancy versions of the transport block transmitted on CC0 is 1, and the redundancy versions of the transport block transmitted on CC1 and CC2 are also 1.

When the redundancy version information in the DCI transmitted on CC0 only includes the redundancy version identifier of CC0, the redundancy versions of the transport block transmitted on CC1 and CC2 may be derived from the redundancy versions of the transport block transmitted on CC0. A derivation method may be obtained according to Table 4.

When the redundancy version information in the DCI transmitted on CC0 includes the redundancy version identifiers of CC0, CC1 and CC2, the redundancy versions of the transport block transmitted on CC0 may be determined according to the redundancy version identifier of CC0, the redundancy versions of the transport block transmitted on CC1 may be determined according to the redundancy version identifier of CC1, and the redundancy versions of the transport block transmitted on CC2 may be determined according to the redundancy version identifier of CC2.

Similarly, the number of bits for the redundancy version identifier of CC1 may be 0, 1 or 2. Optionally, when the number of bits for the redundancy version identifier of CC1 is 0, the redundancy versions of the transport block transmitted on CC1 is 0. Optionally, when the number of bits for the redundancy version identifier of CC1 is 1, if the redundancy version identifier is 0, the redundancy versions of the transport block transmitted on CC1 is 0, and if the redundancy version identifier is 1, the redundancy versions of the transport block transmitted on CC1 is 3. Optionally, when the number of bits for the redundancy version identifier of CC1 is 2, if the redundancy version identifier is 00, the redundancy versions of the transport block transmitted on CC1 is 0; if the redundancy version identifier is 01, the redundancy versions of the transport block transmitted on CC1 is 1; if the redundancy version identifier is 10, the redundancy versions of the transport block transmitted on CC1 is 2; if the redundancy version identifier is 11, the redundancy versions of the transport block transmitted on CC1 is 3.

When the redundancy version information in the DCI transmitted on CC3 includes the redundancy version identifier of CC3, the redundancy versions of the transport block transmitted on CC3 may be determined. When the redundancy version information in the DCI transmitted on CC4 includes the redundancy version identifier of CC4, the redundancy versions of the transport block transmitted on CC4 may be determined.

If a higher layer parameter codeBlockGroupTransmission is configured to indicate that the transport block is transmitted in a distributed transmission manner, the scheduling information includes code block group transmission information, and the code block group transmission information includes code block group transmission information bits corresponding to each carrier. An arrangement order of the code block group transmission information bits is determined according to the carrier indicator. The code block group for transmission on each carrier may be determined through the code block group transmission information bits corresponding to each carrier. Optionally, a code block included in each code block group may be determined according to protocol 38.214.

When a target carrier carries the scheduling information of all carriers, the number of bits for the code block group transmission information may be 0, and then an index of the code block group for transmission on each carrier may be determined according to a corresponding rule.

Optionally, when $M$ is greater than $N$ and $n \in \{0,1,..., T_1 - 1\}$, the index of the code block group for transmission on carrier $n$ is $n * N_1 + k_1, k_1 = 0, 1, ..., N_1 - 1$; when $n \in \{T_1, T_1 + 1,..., N - 1\}$, the index of the code block group for transmission on carrier $n$ is $T_1 * N_1 + (n - T_1)N_2 + k_2, k_2 = 0,1,..., N_2 - 1$, $n$ is greater than or equal to 0 and less than $N$; and/or,

when $M$ is less than or equal to $N$, the index of the code block group for transmission on carrier $n$ is $n$, and $n$ is greater than or equal to 0 and less than $M$;

where $M$ is the number of code block groups included in the transport block, $M$ is a positive integer greater than or equal to 1, $N$ is the number of carriers, N is a positive integer greater than or equal to 2, $T_1 = M \bmod N$, $N_1 = \lceil M/N \rceil$, $N_2 = \lfloor M/N \rfloor$, $\lceil M/N \rceil$ represents to round (M/N) up to the nearest integer, and $\lfloor M/N \rfloor$ represents to round (M/N) down to the nearest integer.

In the examples shown in FIG. 15 to FIG. 17, the solution of carrying all the scheduling information of these three carriers CC0-CC2 through CC0 is introduced. Optionally, CC0 may also carry part of the scheduling information of these two carriers CC1 and CC2 and all scheduling information of CC0. Optionally, for these three carriers, same frequency domain resource or different frequency domain resources may be adopted; same time domain resource or different time domain resources may be adopted; same modulation and coding scheme or different modulation and coding schemes may be adopted; same redundancy version information or different redundancy version information may be adopted.

In the processing method provided by embodiments of the present application, configuration information and/or scheduling information for carriers in a same cell are(is) received firstly, and then a scheduling manner of the transport block transmitted on the carrier is determined according to the configuration information and/or the scheduling information. When a number of carriers in the cell is one, the configuration information and/or the scheduling information are(is) received through this carrier, and when the number of the carriers in the cell is more than one, the configuration information is received through an anchor carrier and the scheduling information is received through at least one target carrier, thereby scheduling the carriers in the same cell, so as to guide the transmission of the transport block on the carrier in the cell. A solution of scheduling at least one carrier in the same cell through one carrier in the same cell is thus achieved, which saves the number of bits for scheduling information and reduces signaling overhead.

FIG. 19 is a schematic structural diagram of a processing apparatus provided by an embodiment of the present application. As shown in FIG. 19, the processing apparatus 190 includes:

a transceiver module 191, configured to receive configuration information and/or scheduling information of at least one carrier in a same cell;

a processing module 192, configured to determine, according to the scheduling information and/or the configuration information, a scheduling manner of the transport block transmitted on the carrier.

Optionally, at least one of the following is met:

the configuration information includes frequency points and/or bandwidths of the carrier;

the configuration information is carried in a system information block;

the scheduling information is carried in downlink control information.

Optionally, a number of carriers in the same cell is more than one, where
the configuration information is transmitted on an anchor carrier of the more than one carriers; and/or, the scheduling information is transmitted on at least one target carrier in the cell.
Optionally, the scheduling information transmitted on the target carrier includes at least one of the following:

frequency domain resource assignment information;

time domain resource assignment information;

modulation and coding scheme;

redundancy version information;

carrier indicator;

code block group transmission information.

Optionally, wherein:

the frequency domain resource assignment information is used to indicate frequency domain resources of the transport block transmitted on $M$ carriers, or used to indicate frequency domain resources for transmission on the target carrier;

the time domain resource assignment information is used to indicate time domain resources of the transport block transmitted on the $M$ carriers, or used to indicate the time domain resources for transmission on the target carrier;

the modulation and coding scheme is used to indicate the modulation and coding scheme of the transport block transmitted on the $M$ carriers, or used to indicate the modulation and coding scheme for transmission on the target carrier;

the redundancy version information is used to indicate redundancy versions of the transport block transmitted on the $M$ carriers, or used to indicate redundancy versions for transmission on the target carrier;

$M$ is greater than or equal to 1 and less than or equal to $N$, $N$ is a number of multiple carriers, and the $M$ carriers include the target carrier.

Optionally, at least one of the following is included:

when the frequency domain resource assignment information is used to indicate the frequency domain resources of the transport block transmitted on the $M$ carriers, the frequency domain resource assignment information includes a group of common frequency domain resource indication bits corresponding to the $M$ carriers or $M$ groups of frequency domain resource indication bits respectively corresponding to the $M$ carriers;

when the time domain resource assignment information is used to indicate the time domain resources of the transport block transmitted on the $M$ carriers, the time domain resource assignment information includes a group of common time domain resource indication bits corresponding to the $M$ carriers or $M$ groups of time domain resource indication bits respectively corresponding to the $M$ carriers;

when the modulation and coding scheme is used to indicate the modulation and coding scheme of the transport block transmitted on the $M$ carriers, the modulation and coding scheme includes common modulation and coding scheme indication bits corresponding to the $M$ carriers or $M$ modulation and coding scheme indication bits respectively corresponding to the $M$ carriers;

when the redundancy version information is used to indicate the redundancy versions of the transport block transmitted on the *M* carriers, the redundancy version information includes a common redundancy version identifier corresponding to the *M* carriers or *M* redundancy version identifiers respectively corresponding to the *M* carriers.

Optionally, the target carrier is a carrier whose reference signal receiving power meets a preset condition among carriers in the cell; or, the target carrier is the anchor carrier.

Optionally, the reference signal receiving power of the target carrier meeting the preset condition includes: the reference signal receiving power of the target carrier is greater than or equal to the reference signal receiving power of other carriers in the cell except the target carrier; and/or, the reference signal receiving power of the target carrier is greater than or equal to a first threshold.

Optionally, the configuration information is carried in a system information block; and/or, the scheduling information is carried in downlink control information.

Optionally, the processing module 192 is specifically configured to: determine, according to the scheduling information and/or the configuration information, frequency domain resources of the transport block transmitted on the carrier; and/or, determine, according to the scheduling information, at least one of time domain resources, modulation schemes, transport block sizes, redundancy versions and code block groups of the transport block transmitted on the carrier.

Optionally, the scheduling method meets at least one of the following:

the frequency domain resource is a starting resource block and available resource block size within a bandwidth indicated in frequency domain resource assignment information;

the time domain resource is a starting symbol position and a time domain symbol duration indicated in time domain resource assignment information;

the modulation scheme is a modulation scheme indicated by modulation and coding scheme;

the transport block size is a size indicated by the modulation and coding scheme;

the redundancy version is redundancy version identifier of the transport block in a corresponding carrier indicated in redundancy version information;

the code block group is a code block group indicated by code block group transmission information.

Optionally, the redundancy version identifier meets at least one of the following:

a number of bits for the redundancy version identifier is 0, and the redundancy version of the transport block transmitted on the corresponding carrier is 0;

a number of bits for the redundancy version identifier is 1, and the redundancy version of the transport block transmitted on the corresponding carrier is 0 or 3;

a number of bits for the redundancy version identifier is 2, and the redundancy version of the transport block transmitted on the corresponding carrier is any one of 0, 1, 2 and 3.

The processing apparatus provided in the embodiment of the present application may execute the technical solution shown in the above method embodiments, and implementation principles and beneficial effects thereof are similar, and will not be repeated here.

FIG. 20 is a schematic structural diagram of a processing apparatus provided by an embodiment of the present application. As shown in FIG. 20, the processing apparatus 200 includes: a processing module 2001, configured to in response to configuration information meeting a first preset condition and/or scheduling information meeting a second preset condition, determine a scheduling manner of the transport block transmitted on at least one carrier in a same cell.

Optionally, the configuration information meeting the first preset condition includes at least one of the following:

the configuration information includes frequency points and/or bandwidth of the carrier;

the configuration information is transmitted on an anchor carrier of the carrier in the cell;

the configuration information is carried in a system information block.

Optionally, a number of carriers in the same cell is more than one, and the scheduling information meeting the second preset condition includes:

the scheduling information is transmitted on at least one target carrier in the cell; and/or, the scheduling information is carried in downlink control information.

Optionally, the scheduling information transmitted on the target carrier includes at least one of the following:

frequency domain resource assignment information;

time domain resource assignment information;

modulation and coding scheme;

redundancy version information;

carrier indicator;

code block group transmission information.

Optionally, wherein:

the frequency domain resource assignment information is used to indicate frequency domain resources of the transport block transmitted on $M$ carriers, or used to indicate frequency domain resources for transmission on the target carrier;

the time domain resource assignment information is used to indicate time domain resources of the transport block transmitted on the $M$ carriers, or used to indicate the time domain resources for transmission on the target carrier;

the modulation and coding scheme is used to indicate the modulation and coding scheme of the transport block transmitted on the $M$ carriers, or used to indicate the modulation and coding scheme for transmission on the target carrier;

the redundancy version information is used to indicate redundancy versions of the transport block transmitted on the $M$ carriers, or used to indicate redundancy versions for transmission on the target carrier;

$M$ is greater than or equal to 1 and less than or equal to $N$, $N$ is a number of multiple carriers, and the $M$ carriers include the target carrier.

Optionally, wherein:

when the frequency domain resource assignment information is used to indicate the frequency domain resources of the transport block transmitted on the $M$ carriers, the frequency domain resource assignment information includes a group of common frequency domain resource indication bits corresponding to the $M$ carriers or $M$ groups of frequency domain resource indication bits respectively corresponding to the $M$ carriers;

when the time domain resource assignment information is used to indicate the time domain resources of the transport block transmitted on the $M$ carriers, the time domain resource assignment information includes a group of common time domain resource indication bits corresponding to the $M$ carriers or $M$ groups of time domain resource indication bits respectively corresponding to the $M$ carriers;

when the modulation and coding scheme is used to indicate the modulation and coding scheme of the transport block transmitted on the $M$ carriers, the modulation and coding scheme includes a group of common modulation and coding scheme indication bits corresponding to the $M$ carriers or $M$ groups of modulation and coding scheme indication bits respectively corresponding to the $M$ carriers;

when the redundancy version information is used to indicate the redundancy versions of the transport block transmitted on the $M$ carriers, the redundancy version information includes a common redundancy version identifier corresponding to the *M* carriers or *M* redundancy version identifiers respectively corresponding to the *M* carriers.

Optionally, the target carrier is a carrier whose reference signal receiving power meets a preset condition among the carrier in the cell; or, the target carrier is the anchor carrier.

Optionally, the reference signal receiving power of the target carrier meeting the preset condition includes: the reference signal receiving power of the target carrier is greater than or equal to the reference signal receiving power of other carriers in the cell except the target carrier; and/or, the reference signal receiving power of the target carrier is greater than or equal to a first threshold.

Optionally, the processing module 2001 is specifically configured to:

determine, according to the scheduling information and/or the configuration information, frequency domain resources of the transport block transmitted on the carrier; and/or,

determine, according to the scheduling information, at least one of time domain resources, modulation schemes, transport block sizes, redundancy versions and code block groups of the transport block transmitted on the carrier.

Optionally, the scheduling manner meets at least one of the following:

the frequency domain resource is a starting resource block and available resource block size within a bandwidth indicated in frequency domain resource assignment information;

the time domain resource is a starting symbol position and a time domain symbol duration indicated in time domain resource assignment information;

the modulation scheme is a modulation scheme indicated by modulation and coding scheme;

the transport block size is a size indicated by the modulation and coding scheme;

the redundancy version is redundancy version identifier of the transport block in a corresponding carrier indicated in redundancy version information;

the code block group is a code block group indicated by code block group transmission information.

Optionally, the redundancy version identifier meets at least one of the following:

a number of bits for the redundancy version identifier is 0, and the redundancy version of the transport block transmitted on the corresponding carrier is 0;

a number of bits for the redundancy version identifier is 1, and the redundancy version of the transport block transmitted on the corresponding carrier is 0 or 3;

a number of bits for the redundancy version identifier is 2, and the redundancy version of the transport block transmitted on the corresponding carrier is any one of 0, 1, 2 and 3.

The processing apparatus provided in the embodiment of the present application may execute the technical solution shown in the above method embodiments, and the implementation principles and beneficial effects thereof are similar, and will not be repeated here.

FIG. 21 is a schematic structural diagram of a processing apparatus provided by an embodiment of the present application. As shown in FIG. 21, the processing apparatus 210 includes:

a transceiver module 211, configured to send scheduling information and/or configuration information of at least one carrier in a same cell, where the scheduling information and/or the configuration information are(is) used to indicate a scheduling manner of the transport block transmitted on the carrier.

Optionally, at least one of the following is met:

the configuration information includes frequency points and/or bandwidth of the carrier;

the configuration information is carried in a system information block;

the scheduling information is carried in downlink control information.

Optionally, a number of carriers in the same cell is more than one, where
the configuration information is transmitted on an anchor carrier of the more than one carrier; and/or, the scheduling information is transmitted on at least one target carrier in the cell.

Optionally, the scheduling information transmitted on the target carrier includes at least one of the following:

frequency domain resource assignment information;

time domain resource assignment information;

modulation and coding scheme;

redundancy version information;

carrier indicator;

code block group transmission information.

Optionally, the target carrier is a carrier whose reference signal receiving power meets a preset condition among the carrier in the cell; or, the target carrier is the anchor carrier.

Optionally, the reference signal receiving power of the target carrier meeting the preset condition includes:
the reference signal receiving power of the target carrier is greater than or equal to the reference signal receiving power of other carriers in the cell except the target carrier; and/or, the reference signal receiving power of the target carrier is greater than or equal to a first threshold.

Optionally, the configuration information is carried in a system information block; and/or, the scheduling information is carried in downlink control information.

The processing apparatus provided in the embodiment of the present application may execute the technical solution shown in the above method embodiments, and the implementation principles and beneficial effects thereof are similar, and will not be repeated here.

FIG. 22 is a schematic structural diagram of a communication device provided by an embodiment of the present application. As shown in FIG. 22, a communication device 220 in the embodiment may be a terminal device (or a component applicable to a terminal device) or a network device (or a component applicable to a network device) mentioned in the foregoing method embodiments. The communication device 220 may be configured to implement the method corresponding to the terminal device or the network device described in the foregoing method embodiments, and reference for the specific description may be made to the description in the foregoing method embodiments.

The communication device 220 may include one or more processors 221, and the processor 221 may also be referred to as a processing unit, and may implement certain control or processing functions. The processor 221 may be a general purpose processor or a special purpose processor or the like, for example, it may be a baseband processor or a central processing unit. The baseband processor may be used to process communication protocols and communication data, and the central processing unit may be used to control the communication device, execute software programs, and process data of the software programs.

Optionally, the processor 221 may also store an instruction 223 or data (such as intermediate data). Optionally, the instruction 223 may be executed by the processor 221 to enable the communication device 220 to execute the method corresponding to the terminal device or the network device described in the foregoing method embodiments.

Optionally, the communication device 220 may include a circuit, and the circuit may implement a function of sending or receiving or communicating in the foregoing method embodiments.

Optionally, the communication device 220 may include one or more memories 222, having an instruction 224 stored thereon, and the instruction may be executed on the processor 221 to enable the communication device 220 to execute the methods described in the foregoing method embodiments.

Optionally, data may also be stored in the memory 222. The processor 221 and the memory 222 may be set separately or integrated together.

Optionally, the communication device 220 may further include a transceiver 225 and/or an antenna 226. The processor 221 may be called the processing unit, and controls the communication device 220 (the terminal device or a core network device or a radio access network device). The transceiver 225 may be called a transceiver unit, a transceiver, a transceiver circuit, or a transceiver, etc., and is used to implement a transceiver function of the communication device 220.

Optionally, reference for specific implementation processes of the processor 221 and the transceiver 225 may be made to relevant descriptions of the foregoing embodiments, which will not be repeated here.

Optionally, if the communication device 220 is used to implement operations corresponding to the terminal devices in the above embodiments, for example: the transceiver 225 may receive scheduling information and/or configuration information for carriers in a same cell; the processor 221 may determine, according to the scheduling information and/or the configuration information, a scheduling manner of the transport block transmitted on the carrier.

Optionally, if the communication device 220 is used to implement operations corresponding to the network devices in the above embodiments, for example: the transceiver 225 may send the scheduling information and/or the configuration information for the carriers in the same cell, where the scheduling information and/or the configuration information are used to indicate the scheduling manner of the transport block transmitted on the carrier.

Optionally, reference for specific implementation processes of the processor 221 and the transceiver 225 may be made to relevant descriptions of the foregoing embodiments, which will not be repeated here.

The processor 221 and transceiver 225 described in the present application may be implemented in an IC (Integrated Circuit), analog integrated circuit, a RFIC (Radio Frequency Integrated Circuit), a mixed signal integrated circuit, an ASIC (Application Specific Integrated Circuit, application specific integrated circuit), a PCB (Printed Circuit Board), an electronic device, etc. The processor 221 and transceiver 225 may also be manufactured with various integrated circuit technologies, such as a CMOS (Complementary Metal Oxide Semiconductor), an NMOS (N Metal-Oxide-Semiconductor), a PMOS (Positive channel Metal Oxide Semiconductor), a BJT (Bipolar Junction Transistor), a bipolar CMOS (BiCMOS), a silicon germanium (SiGe), a gallium arsenide (GaAs), etc.

In the present application, the communication device may be the terminal device or the network device (such as a base station), which needs to be determined according to the context. In addition, the terminal device may be implemented in various forms. For example, the terminal device described in the present application may include a mobile phone, a tablet computer, a notebook computer, a palmtop computer, a personal digital assistant (PDA), a portable media player (PMP), a navigation apparatus, a wearable device, a smart bracelet, a pedometer and other mobile terminals, as well as a digital TV, a desktop computer and other fixed terminals.

Although in the description of the above embodiments, the communication device is described by taking the terminal device or network device as an example, the scope of the communication device described in the present application is not limited to the above terminal device or network device, and a structure of the communication device may not be limited by FIG. 22. The communication device may be a stand-alone device or may be part of a larger device.

An embodiment of the present application further provides a communication system, including: a terminal device in any one of the above method embodiments; and a network device in any one of the above method embodiments.

An embodiment of the present application further provides a communication device, including: a memory and a processor; where computer programs are stored in the memory, and when the computer programs are executed by the processor, the steps of the processing method in any of the above embodiments are implemented.

An embodiment of the present application further provides a terminal device, including: a memory and a processor; where computer programs are stored in the memory, and when the computer programs are executed by the processor, the steps of the processing method in any of the above embodiments are implemented.

An embodiment of the present application further provides a network device, including: a memory and a processor; where computer programs are stored in the memory, and when the computer programs are executed by the processor, the steps of the processing method in any of the above embodiments are implemented.

An embodiment of the present application further provides a computer readable storage medium, having computer programs stored thereon, when the computer programs are executed by a processor, the steps of the processing method in any of the foregoing embodiments are implemented.

In the embodiments of the terminal device, the network device and the computer readable storage medium provided in the embodiments of the present application, all the technical features of any of the above processing method embodiments may be included, the expansion and explanation content of the specification is basically the same as that of the various embodiments of the above methods, and will not be repeated here.

An embodiment of the present application further provides a computer program product, including computer program codes, and when the computer program codes are run on a computer, the computer is enabled to execute the methods in the above various possible implementations.

An embodiment of the present application further provides a chip, including a memory and a processor, the memory is used to store computer programs, and the processor is configured to call and run the computer programs from the memory, to enable the device installed with the chip to execute the methods described in the above various possible implementations.

It can be understood that the above scenario is only used as an example and does not constitute a restriction on the application scenarios of the technical solution provided in the embodiments of the present application. The technical solution of the present application may also be applied to other scenarios. For example, those ordinarily skilled in the art know that with the evolution of system architecture and the emergence of new business scenarios, the technical solution provided in the embodiments of the present application is also applicable to similar technical problems.

The serial numbers of above embodiments of the present application are only for description and do not represent the advantages or disadvantages of the embodiments.

The steps of the methods in the embodiments of the present application may be sequentially adjusted, merged, and deleted according to actual requirements.

The units in the device in the embodiments of the present application may be merged, divided, and deleted according to actual requirements.

In the present application, the same or similar term concepts, technical solutions, and/or application scenario descriptions, detailed descriptions are generally described only at the first occurrence, when reoccurring later, they are generally not repeated for the sake of brevity. To understand the technical solution and other contents of the present application, etc., for the same or similar terminology concepts, for technical solutions, and/or application scenario descriptions etc., which are not described in detail later, reference may be made to previous detailed description.

In the present application, the description of each embodiment is made with its own emphasis. For parts that are not described in detail or recorded in a certain embodiment, please refer to the relevant descriptions of other embodiments.

The various technical features of the technical solution in the present application may be combined randomly. To make the description concise, not all possible combinations of the various technical features in the above embodiments have been described.

Through the description of the above implementations, those skilled in the art can clearly understand that the above implementations may be implemented through software plus a necessary general hardware platform, of course, also may be implemented through hardware, however, in many cases, the former is the better implementation. Based on such understanding, the technical solution of the present application in essence, or a part thereof contributing to the existing technology, may be embodied in a form of a software product. The computer software product is stored in a storage medium (e.g., a ROM (Read Only Memory)/RAM (Random Access Memory), a magnetic disk, an optical disk), including several instructions to cause a terminal device (which may be a mobile phone, a computer, a server, a controlled terminal, or a network device, etc.) to execute the method in each embodiment of the present application.

The above embodiments may be implemented wholly or in part by software, hardware, firmware, or any combination thereof. When the above embodiments are implemented using software, all or part of them may be implemented in the form of computer program products. The computer program products include one or more computer instructions. When computer program instructions are loaded and executed on a computer, all or part of the processes or functions according to the embodiments of the present application are generated. The computer may be a general-purpose computer, a special-purpose computer, a computer network, or other programmable apparatuses. The computer instructions may be stored in a computer readable storage medium, or transmitted from one computer readable storage medium to another computer readable storage medium. For example, the computer instructions may be transmitted from one website site, computer, server, or data center via wired (such as a coaxial cable, a fiber optic, a digital user line) or wireless (such as an infrared, a wireless, a microwave, etc.) to another website site, computer, server or data center. The computer readable storage medium may be any available medium that the computer can access, or a data storage device that includes one or more available media integrations such as a server or a data center. The available medium may be a magnetic medium (for example, a floppy disk, a storage disk, a magnetic tape), an optical medium (for example, DVDs), or a semiconductor medium (for example, a solid state disk (SSD)), etc.

**Claims**

1.  A processing method, comprising the following steps:

    receiving (S82) configuration information and scheduling information on one target carrier of *M* carriers;
    determining (S83), according to the configuration information and the scheduling information, a scheduling manner of a transport block transmitted on the M carriers, wherein *M* is a positive integer greater than 1;
    wherein the configuration information comprises frequency points and/or bandwidths of the carriers;
    and/or, the configuration information is carried in a system information block; and/or, the scheduling information is carried in downlink control information;
    wherein the scheduling information comprises at least a carrier indicator;
    wherein the carrier indicator is used to indicate carriers corresponding to the scheduling information included in the downlink control information;
    **characterized in that** in a case that the downlink control information includes the scheduling information of at least two carriers, the carrier indicator is also used to implicitly indicate an order of the scheduling information of the at least two carriers.

2.  The method according to claim 1, wherein the scheduling information further comprises at least one of the following:

frequency domain resource assignment information;
time domain resource assignment information;
modulation and coding scheme;
redundancy version information.

3. The method according to claim 2, wherein:

the frequency domain resource assignment information is used to indicate frequency domain resources of the transport block transmitted on the *M* carriers, or used to indicate frequency domain resources for transmission on the at least two carriers;
the time domain resource assignment information is used to indicate time domain resources of the transport block transmitted on the *M* carriers, or used to indicate the time domain resources for transmission on the at least two carriers;
the modulation and coding scheme is used to indicate the modulation and coding scheme of the transport block transmitted on the *M* carriers, or used to indicate the modulation and coding scheme for transmission on the at least two carriers;
the redundancy version information is used to indicate redundancy versions of the transport block transmitted on the *M* carriers, or used to indicate redundancy versions for transmission on the at least two carriers.

4. The method according to claim 3, wherein:

when the frequency domain resource assignment information is used to indicate the frequency domain resources of the transport block transmitted on the *M* carriers, a number of frequency domain resource indication bits of the *M* carriers is related to M;
when the time domain resource assignment information is used to indicate the time domain resources of the transport block transmitted on the *M* carriers, a number of time domain resource indication bits of the *M* carriers is related to *M;*
when the modulation and coding scheme is used to indicate the modulation and coding scheme of the transport block transmitted on the *M* carriers, a number of modulation and coding scheme indication bits of the *M* carriers is related to *M*;
when the redundancy version information is used to indicate the redundancy versions of the transport block transmitted on the *M* carriers, a number of redundancy version identifiers of the *M* carriers is related to M.

5. The method according to claim 4, wherein when frequency domain resource assignment type is type 0, a number of bits occupied by the frequency domain resource assignment information is $sum_j\{N_{RBGj}\}$;
wherein $N_{RBGj}$ is the number of RBGs included in a jth carrier among the *M* carriers, *j* is greater than or equal to 1 and less than or equal to *M, M* is a number of carriers carried by the scheduling information, and $sum_j\{NRBG_j\}$ is a sum of a number of RBGs included in the carriers carried by the scheduling information.

6. The method according to claim 4, wherein the determining, according to the configuration information and the scheduling information, the scheduling manner of the transport block transmitted on the *M* carriers comprises:

determining, according to the scheduling information and the configuration information, frequency domain resources of the transport block transmitted on the *M* carriers; and/or,
determining, according to the scheduling information, at least one of time domain resources, modulation schemes, transport block sizes, and redundancy versions of the transport block transmitted on the *M* carriers;
optionally, the scheduling manner meets at least one of the following:

the frequency domain resource is a starting resource block and available resource block size within a bandwidth indicated in frequency domain resource assignment information;
the time domain resource is a starting symbol position and a time domain symbol duration of the transport block indicated in time domain resource assignment information;
the modulation scheme is a modulation scheme of the transport block indicated by modulation and coding scheme;
the transport block size is a size indicated by the modulation and coding scheme;
the redundancy version is redundancy version identifier of the transport block in a corresponding carrier indicated in redundancy version information;
optionally, the redundancy version identifier of each carrier meets at least one of the following:

a number of bits for the redundancy version identifier of the each carrier is 0, and the redundancy version of the transport block transmitted on the corresponding carrier is 0;
a number of bits for the redundancy version identifier of the each carrier is 1, and the redundancy version of the transport block transmitted on the corresponding carrier is 0 or 3;
a number of bits for the redundancy version identifier of the each carrier is 2, and the redundancy version of the transport block transmitted on the corresponding carrier is any one of 0, 1, 2 and 3.

7. A processing method, comprising the following steps:

sending (S81) configuration information and scheduling information on one target carrier of $M$ carriers, the configuration information and the scheduling information are used to determine a scheduling manner of a transport block transmitted on the $M$ carriers, wherein $M$ is a positive integer greater than 1;
wherein the configuration information comprises frequency points and/or bandwidths of the carriers; and/or, the configuration information is carried in a system information block; and/or, the scheduling information is carried in downlink control information;
wherein the scheduling information comprises at least a carrier indicator;
wherein the carrier indicator is used to indicate carriers corresponding to the scheduling information included in the downlink control information;
**characterized in that** in a case that the downlink control information includes the scheduling information of at least two carriers, the carrier indicator is also used to implicitly indicate an order of the scheduling information of the at least two carriers.

8. The method according to claim 7, wherein the scheduling information further comprises at least one of the following:

frequency domain resource assignment information;
time domain resource assignment information;
modulation and coding scheme;
redundancy version information.

9. The method according to claim 8, wherein:

the frequency domain resource assignment information is used to indicate frequency domain resources of the transport block transmitted on the $M$ carriers, or used to indicate frequency domain resources for transmission on the at least two carriers;
the time domain resource assignment information is used to indicate time domain resources of the transport block transmitted on the $M$ carriers, or used to indicate the time domain resources for transmission on the at least two carriers;
the modulation and coding scheme is used to indicate the modulation and coding scheme of the transport block transmitted on the $M$ carriers, or used to indicate the modulation and coding scheme for transmission on the at least two carriers;
the redundancy version information is used to indicate redundancy versions of the transport block transmitted on the $M$ carriers, or used to indicate redundancy versions for transmission on the at least two carriers.
wherein the $M$ carriers comprise the at least one carrier.

10. The method according to claim 9, wherein:

when the frequency domain resource assignment information is used to indicate the frequency domain resources of the transport block transmitted on the $M$ carriers, a number of frequency domain resource indication bits of the M carriers is related to M;
when the time domain resource assignment information is used to indicate the time domain resources of the transport block transmitted on the $M$ carriers, a number of time domain resource indication bits of the $M$ carriers is related to $M;$
when the modulation and coding scheme is used to indicate the modulation and coding scheme of the transport block transmitted on the $M$ carriers, a number of modulation and coding scheme indication bits of the $M$ carriers is related to M;
when the redundancy version information is used to indicate the redundancy versions of the transport block transmitted on the $M$ carriers, a number of redundancy version identifiers of the $M$ carriers is related to M;
optionally, when frequency domain resource assignment type is type 0, a number of bits occupied by the frequency domain resource assignment information is $sum_j\{N_{RBG_j}\}$;

wherein $N_{RBG_j}$ is the number of RBGs included in a jth carrier among the *M* carriers, *j* is greater than or equal to 1 and less than or equal to *M, M* is a number of carriers carried by the scheduling information, and $sum_j\{N_{RBG_j}\}$ is a sum of a number of RBGs included in the carriers carried by the scheduling information.

11. The method according to claim 10, wherein the determining, according to the configuration information and the scheduling information, the scheduling manner of the transport block transmitted on the *M* carriers comprises:

determining, according to the scheduling information and the configuration information, frequency domain resources of the transport block transmitted on the *M* carriers; and/or,

determining, according to the scheduling information, at least one of time domain resources, modulation schemes, transport block sizes, and redundancy versions of the transport block transmitted on the *M* carriers; optionally, the scheduling manner meets at least one of the following:

the frequency domain resource is a starting resource block and available resource block size within a bandwidth indicated in frequency domain resource assignment information;

the time domain resource is a starting symbol position and a time domain symbol duration of the transport block indicated in time domain resource assignment information;

the modulation scheme is a modulation scheme of the transport block indicated by modulation and coding scheme;

the transport block size is a size indicated by the modulation and coding scheme;

the redundancy version is redundancy version identifier of the transport block in a corresponding carrier indicated in redundancy version information;

optionally, the redundancy version identifier of each carrier meets at least one of the following:

a number of bits for the redundancy version identifier of the each carrier is 0, and the redundancy version of the transport block transmitted on the corresponding carrier is 0;

a number of bits for the redundancy version identifier of the each carrier is 1, and the redundancy version of the transport block transmitted on the corresponding carrier is 0 or 3;

a number of bits for the redundancy version identifier of the each carrier is 2, and the redundancy version of the transport block transmitted on the corresponding carrier is any one of 0, 1, 2 and 3.

12. A communication device (220), comprising: a memory (222) and a processor (221); wherein

the memory (222) is configured to store program instructions;

the processor (221) is configured to call the program instructions in the memory (222) to execute the processing method according to any one of claims 1 to 6.

13. A communication device (220), comprising: a memory (222) and a processor (221); wherein

the memory (222) is configured to store program instructions;

the processor (221) is configured to call the program instructions in the memory (222) to execute the processing method according to any one of claims 7 to 11.

14. A computer readable storage medium, having computer programs stored thereon; wherein when the computer programs are executed, the processing method according to any one of claims 1 to 6 is implemented.

15. A computer readable storage medium, having computer programs stored thereon; wherein when the computer programs are executed, the processing method according to any one of claims 7 to 11 is implemented.

**Patentansprüche**

1. Verarbeitungsverfahren, umfassend die folgenden Schritte:

Empfangen (S82) von Konfigurationsinformationen und Planungsinformationen auf einem Zielträger von M Trägern;

Bestimmen (S83),

gemäß den Konfigurationsinformationen und den Planungsinformationen, einer Planungsweise eines Transportblocks, der auf den *M* Trägern übertragen wird, wobei M eine positive ganze Zahl größer als 1 ist; wobei die Konfigurationsinformationen Frequenzpunkte und/oder Bandbreiten der Träger umfassen; und/oder die Konfigurationsinformationen in einem Systeminformationsblock getragen werden; und/oder die Planungsinformationen in Downlink-Steuerungsinformationen getragen werden; wobei die Planungsinformationen mindestens einen Trägerindikator umfassen; wobei der Trägerindikator verwendet wird, um Träger anzugeben, die den in den Downlink-Steuerungsinformationen eingeschlossenen Planungsinformationen entsprechen; **dadurch gekennzeichnet, dass** in einem Fall, dass die Downlink-Steuerungsinformationen die Planungsinformationen von mindestens zwei Trägern einschließen, der Trägerindikator auch verwendet wird, um eine Reihenfolge der Planungsinformationen der mindestens zwei Träger implizit anzugeben.

2. Verfahren nach Anspruch 1, wobei die Planungsinformationen ferner mindestens eines des Folgenden umfassen:

Frequenzbereichsressourcenzuweisungsinformationen;
Zeitbereichsressourcenzuweisungsinformationen;
Modulations- und Codierungsschema;
Redundanzversionsinformationen.

3. Verfahren nach Anspruch 2, wobei:

die Frequenzbereichsressourcenzuweisungsinformationen verwendet werden, um Frequenzbereichsressourcen des auf den M Trägern übertragenen Transportblocks anzugeben, oder verwendet werden, um Frequenzbereichsressourcen zur Übertragung auf den mindestens zwei Trägern anzugeben;
die Zeitbereichsressourcenzuweisungsinformationen verwendet werden, um Zeitbereichsressourcen des auf den M Trägern übertragenen Transportblocks anzugeben, oder verwendet werden, um die Zeitbereichsressourcen zur Übertragung auf den mindestens zwei Trägern anzugeben;
das Modulations- und Codierungsschema verwendet wird, um das Modulations- und Codierungsschema des auf den *M* Trägern übertragenen Transportblocks anzugeben, oder verwendet wird, um das Modulations- und Codierungsschema zur Übertragung auf den mindestens zwei Trägern anzugeben;
die Redundanzversionsinformationen verwendet werden, um Redundanzversionen des auf den *M* Trägern übertragenen Transportblocks anzugeben, oder verwendet werden, um Redundanzversionen zur Übertragung auf den mindestens zwei Trägern anzugeben.

4. Verfahren nach Anspruch 3, wobei:

wenn die Frequenzbereichsressourcenzuweisungsinformationen verwendet werden, um die Frequenzbereichsressourcen des auf den *M* Trägern übertragenen Transportblocks anzugeben, eine Anzahl von Frequenzbereichsressourcen-Indikationsbits der *M* Träger mit M in Beziehung steht;
wenn die Zeitbereichsressourcenzuweisungsinformationen verwendet werden, um die Zeitbereichsressourcen des auf den *M* Trägern übertragenen Transportblocks anzugeben, eine Anzahl von Zeitbereichsressourcen-Indikationsbits der *M* Träger mit M in Beziehung steht;
wenn das Modulations- und Codierungsschema verwendet wird, um das Modulations- und Codierungsschema des auf den *M* Trägern übertragenen Transportblocks anzugeben, eine Anzahl von Modulations- und Codierungsschema-Indikationsbits der *M* Träger mit M in Beziehung steht;
wenn die Redundanzversionsinformationen verwendet werden, um die Redundanzversionen des auf den *M* Trägern übertragenen Transportblocks anzugeben, eine Anzahl von Redundanzversionsidentifikatoren der M Träger mit *M* in Beziehung steht.

5. Verfahren nach Anspruch 4, wobei, wenn ein Frequenzbereichsressourcenzuweisungstyp Typ 0 ist, eine Anzahl von durch die Frequenzbereichsressourcenzuweisungsinformationen belegten Bits $sum_j\{N_{RBGj}\}$ ist; wobei $N_{RBGj}$ die Anzahl von RBGs ist, die in einem j-ten Träger unter den M Trägern eingeschlossen sind, j größer als oder gleich 1 und kleiner als oder gleich *M ist, M* eine Anzahl von Trägern ist, die durch die Planungsinformationen getragen werden, und $sum_j\{N_{RBGj}\}$ eine Summe einer Anzahl von RBGs ist, die in den durch die Planungsinformationen getragenen Trägern eingeschlossen sind.

6. Verfahren nach Anspruch 4, wobei das Bestimmen, gemäß den Konfigurationsinformationen und den Planungsinformationen, der Planungsweise des Transportblocks, der auf den M Trägern übertragen wird, umfasst:

Bestimmen, gemäß den Planungsinformationen und den Konfigurationsinformationen, von Frequenzbereichsressourcen des auf den M Trägern übertragenen Transportblocks; und/oder,

Bestimmen, gemäß den Planungsinformationen, von mindestens einem von Zeitbereichsressourcen, Modulationsschemata, Transportblockgrößen und Redundanzversionen des auf den M Trägern übertragenen Transportblocks;

wobei optional die Planungsweise mindestens eines des Folgenden erfüllt:

die Frequenzbereichsressource ist ein Startressourcenblock und eine verfügbare Ressourcenblockgröße innerhalb einer Bandbreite, die in Frequenzbereichsressourcenzuweisungsinformationen angegeben ist;

die Zeitbereichsressource ist eine Startsymbolposition und eine Zeitbereichssymboldauer des Transportblocks, die in Zeitbereichsressourcenzuweisungsinformationen angegeben ist;

das Modulationsschema ist ein Modulationsschema des Transportblocks, das durch ein Modulations- und Codierungsschema angegeben ist;

die Transportblockgröße ist eine Größe, die durch das Modulations- und Codierungsschema angegeben ist;

die Redundanzversion ist ein Redundanzversionsidentifikator des Transportblocks in einem entsprechenden Träger, der in Redundanzversionsinformationen angegeben ist;

wobei optional der Redundanzversionsidentifikator jedes Trägers mindestens eines des Folgenden erfüllt:

eine Anzahl von Bits für den Redundanzversionsidentifikator jedes Trägers ist 0, und die Redundanzversion des auf dem entsprechenden Träger übertragenen Transportblocks ist 0;

eine Anzahl von Bits für den Redundanzversionsidentifikator jedes Trägers ist 1, und die Redundanzversion des auf dem entsprechenden Träger übertragenen Transportblocks ist 0 oder 3;

eine Anzahl von Bits für den Redundanzversionsidentifikator jedes Trägers ist 2, und die Redundanzversion des auf dem entsprechenden Träger übertragenen Transportblocks ist eine beliebige von 0, 1, 2 und 3.

7. Verarbeitungsverfahren, umfassend die folgenden Schritte:

Senden (S81) von Konfigurationsinformationen und Planungsinformationen auf einem Zielträger von $M$ Trägern, wobei die Konfigurationsinformationen und die Planungsinformationen verwendet werden, um eine Planungsweise eines auf den $M$ Trägern übertragenen Transportblocks zu bestimmen, wobei $M$ eine positive ganze Zahl größer als 1 ist;

wobei die Konfigurationsinformationen Frequenzpunkte und/oder Bandbreiten der Träger umfassen; und/oder die Konfigurationsinformationen in einem Systeminformationsblock getragen werden; und/oder die Planungsinformationen in Downlink-Steuerungsinformationen getragen werden;

wobei die Planungsinformationen mindestens einen Trägerindikator umfassen;

wobei der Trägerindikator verwendet wird, um Träger anzugeben, die den in den Downlink-Steuerungsinformationen eingeschlossenen Planungsinformationen entsprechen;

**dadurch gekennzeichnet, dass** in einem Fall, dass die Downlink-Steuerungsinformationen die Planungsinformationen von mindestens zwei Trägern einschließen, der Trägerindikator auch verwendet wird, um eine Reihenfolge der Planungsinformationen der mindestens zwei Träger implizit anzugeben.

8. Verfahren nach Anspruch 7, wobei die Planungsinformationen ferner mindestens eines des Folgenden umfassen:

Frequenzbereichsressourcenzuweisungsinformationen;
Zeitbereichsressourcenzuweisungsinformationen;
Modulations- und Codierungsschema;
Redundanzversionsinformationen.

9. Verfahren nach Anspruch 8, wobei:

die Frequenzbereichsressourcenzuweisungsinformationen verwendet werden, um Frequenzbereichsressourcen des auf den $M$ Trägern übertragenen Transportblocks anzugeben, oder verwendet werden, um Frequenzbereichsressourcen zur Übertragung auf den mindestens zwei Trägern anzugeben;

die Zeitbereichsressourcenzuweisungsinformationen verwendet werden, um Zeitbereichsressourcen des auf den $M$ Trägern übertragenen Transportblocks anzugeben, oder verwendet werden, um die Zeitbereichsressourcen zur Übertragung auf den mindestens zwei Trägern anzugeben;

das Modulations- und Codierungsschema verwendet wird, um das Modulations- und Codierungsschema des auf den *M* Trägern übertragenen Transportblocks anzugeben, oder verwendet wird, um das Modulations- und Codierungsschema zur Übertragung auf den mindestens zwei Trägern anzugeben;

die Redundanzversionsinformationen verwendet werden, um Redundanzversionen des auf den *M* Trägern übertragenen Transportblocks anzugeben, oder verwendet werden, um Redundanzversionen zur Übertragung auf den mindestens zwei Trägern anzugeben,

wobei die *M* Träger den mindestens einen Träger umfassen.

10. Verfahren nach Anspruch 9, wobei:

wenn die Frequenzbereichsressourcenzuweisungsinformationen verwendet werden, um die Frequenzbereichsressourcen des auf den *M* Trägern übertragenen Transportblocks anzugeben, eine Anzahl von Frequenzbereichsressourcen-Indikationsbits der M Träger mit M in Beziehung steht;

wenn die Zeitbereichsressourcenzuweisungsinformationen verwendet werden, um die Zeitbereichsressourcen des auf den *M* Trägern übertragenen Transportblocks anzugeben, eine Anzahl von Zeitbereichsressourcen-Indikationsbits der *M* Träger mit *M* in Beziehung steht;

wenn das Modulations- und Codierungsschema verwendet wird, um das Modulations- und Codierungsschema des auf den *M* Trägern übertragenen Transportblocks anzugeben, eine Anzahl von Modulations- und Codierungsschema-Indikationsbits der *M* Träger mit M in Beziehung steht;

wenn die Redundanzversionsinformationen verwendet werden, um die Redundanzversionen des auf den *M* Trägern übertragenen Transportblocks anzugeben, eine Anzahl von Redundanzversionsidentifikatoren der M Träger mit *M* in Beziehung steht;

wobei optional, wenn ein Frequenzbereichsressourcenzuweisungstyp Typ 0 ist, eine Anzahl von durch die Frequenzbereichsressourcenzuweisungsinformationen belegten Bits $sum_j\{N_{RBGj}\}$ ist;

wobei $N_{REGj}$ die Anzahl von RBGs ist, die in einem *j*-ten Träger unter den *M* Trägern eingeschlossen sind, *j* größer als oder gleich 1 und kleiner als oder gleich *M* ist, *M* eine Anzahl von Trägern ist, die durch die Planungsinformationen getragen werden, und $sum_j\{N_{RBGj}\}$ eine Summe einer Anzahl von RBGs ist, die in den durch die Planungsinformationen getragenen Trägern eingeschlossen sind.

11. Verfahren nach Anspruch 10, wobei das Bestimmen, gemäß den Konfigurationsinformationen und den Planungsinformationen, der Planungsweise des Transportblocks, der auf den M Trägern übertragen wird, umfasst:

Bestimmen, gemäß den Planungsinformationen und den Konfigurationsinformationen, von Frequenzbereichsressourcen des auf den M Trägern übertragenen Transportblocks; und/oder,

Bestimmen, gemäß den Planungsinformationen, von mindestens einem von Zeitbereichsressourcen, Modulationsschemata, Transportblockgrößen und Redundanzversionen des auf den M Trägern übertragenen Transportblocks;

wobei optional die Planungsweise mindestens eines des Folgenden erfüllt:

die Frequenzbereichsressource ist ein Startressourcenblock und eine verfügbare Ressourcenblockgröße innerhalb einer Bandbreite, die in Frequenzbereichsressourcenzuweisungsinformationen angegeben ist;

die Zeitbereichsressource ist eine Startsymbolposition und eine Zeitbereichssymboldauer des Transportblocks, die in Zeitbereichsressourcenzuweisungsinformationen angegeben ist;

das Modulationsschema ist ein Modulationsschema des Transportblocks, das durch ein Modulations- und Codierungsschema angegeben ist;

die Transportblockgröße ist eine Größe, die durch das Modulations- und Codierungsschema angegeben ist;

die Redundanzversion ist ein Redundanzversionsidentifikator des Transportblocks in einem entsprechenden Träger, der in Redundanzversionsinformationen angegeben ist;

wobei optional der Redundanzversionsidentifikator jedes Trägers mindestens eines des Folgenden erfüllt:

eine Anzahl von Bits für den Redundanzversionsidentifikator jedes Trägers ist 0, und die Redundanzversion des auf dem entsprechenden Träger übertragenen Transportblocks ist 0;

eine Anzahl von Bits für den Redundanzversionsidentifikator jedes Trägers ist 1, und die Redundanzversion des auf dem entsprechenden Träger übertragenen Transportblocks ist 0 oder 3;

eine Anzahl von Bits für den Redundanzversionsidentifikator jedes Trägers ist 2, und die Redundanzversion des auf dem entsprechenden Träger übertragenen Transportblocks ist eine beliebige von 0, 1, 2 und 3.

12. Kommunikationsvorrichtung (220), umfassend: einen Speicher (222) und einen Prozessor (221); wobei

der Speicher (222) konfiguriert ist, Programmanweisungen zu speichern;
der Prozessor (221) konfiguriert ist, die Programmanweisungen in dem Speicher (222) aufzurufen, um das Verarbeitungsverfahren nach einem der Ansprüche 1 bis 6 auszuführen.

13. Kommunikationsvorrichtung (220), umfassend: einen Speicher (222) und einen Prozessor (221); wobei

der Speicher (222) konfiguriert ist, Programmanweisungen zu speichern;
der Prozessor (221) konfiguriert ist, die Programmanweisungen in dem Speicher (222) aufzurufen, um das Verarbeitungsverfahren nach einem der Ansprüche 7 bis 11 auszuführen.

14. Computerlesbares Speichermedium, das darauf gespeicherte Computerprogramme aufweist; wobei, wenn die Computerprogramme ausgeführt werden, das Verarbeitungsverfahren nach einem der Ansprüche 1 bis 6 implementiert wird.

15. Computerlesbares Speichermedium, das darauf gespeicherte Computerprogramme aufweist; wobei, wenn die Computerprogramme ausgeführt werden, das Verarbeitungsverfahren nach einem der Ansprüche 7 bis 11 implementiert wird.

**Revendications**

1. Procédé de traitement, comprenant les étapes suivantes :

réception (S82) d'informations de configuration et d'informations de planification sur une porteuse cible parmi $M$ porteuses ;
détermination (S83), en fonction des informations de configuration et des informations de planification, d'une manière de planification d'un bloc de transport transmis sur les $M$ porteuses, dans lequel $M$ représente un nombre entier positif supérieur à 1 ;
dans lequel les informations de configuration comprennent des points de fréquence et/ou des largeurs de bandes des porteuses ;
et/ou, les informations de configuration sont transportées dans un bloc d'informations système ; et/ou, les informations de planification sont transportées dans des informations de commande de liaison descendante ;
dans lequel les informations de planification comprennent au moins un indicateur de porteuses ;
dans lequel l'indicateur de porteuses est utilisé pour indiquer les porteuses correspondant aux informations de planification incluses dans les informations de commande de liaison descendante ;
**caractérisé en ce que**, dans un cas où les informations de commande de liaison descendante comportent les informations de planification d'au moins deux porteuses, l'indicateur de porteuses est également utilisé pour indiquer implicitement un ordre des informations de planification des au moins deux porteuses.

2. Procédé selon la revendication 1, dans lequel les informations de planification comprennent en outre au moins l'un des éléments suivants :

des informations d'attribution de ressources dans le domaine fréquentiel ;
des informations d'attribution de ressources dans le domaine temporel ;
un schéma de modulation et de codage ;
des informations sur les versions de redondance.

3. Procédé selon la revendication 2, dans lequel :

les informations d'attribution de ressources dans le domaine fréquentiel sont utilisées pour indiquer les ressources dans le domaine fréquentiel du bloc de transport transmises sur les M porteuses, ou utilisées pour indiquer les ressources dans le domaine fréquentiel pour une transmission sur les au moins deux porteuses ;
les informations d'attribution de ressources dans le domaine temporel sont utilisées pour indiquer les ressources dans le domaine temporel du bloc de transport transmises sur les $M$ porteuses, ou utilisées pour indiquer les ressources dans le domaine temporel pour une transmission sur les au moins deux porteuses ;
le schéma de modulation et de codage est utilisé pour indiquer le schéma de modulation et de codage du bloc de transport transmis sur les M porteuses, ou utilisé pour indiquer le schéma de modulation et de codage pour une transmission sur les au moins deux porteuses ;

les informations sur les versions de redondance sont utilisées pour indiquer les versions de redondance du bloc de transport transmis sur les M porteuses, ou utilisées pour indiquer les versions de redondance pour une transmission sur les au moins deux porteuses.

4. Procédé selon la revendication 3, dans lequel :

lorsque les informations d'attribution de ressources dans le domaine fréquentiel sont utilisées pour indiquer les ressources dans le domaine fréquentiel du bloc de transport transmis sur les M porteuses, un certain nombre de bits d'indication de ressources dans le domaine fréquentiel des M porteuses sont liés à M ;
lorsque les informations d'attribution de ressources dans le domaine temporel sont utilisées pour indiquer les ressources dans le domaine temporel du bloc de transport transmis sur les M porteuses, un certain nombre de bits d'indication de ressources dans le domaine temporel des M porteuses sont liés à M ;
lorsque le schéma de modulation et de codage est utilisé pour indiquer le schéma de modulation et de codage du bloc de transport transmis sur les $M$ porteuses, un certain nombre de bits d'indication de schéma de modulation et de codage des $M$ porteuses sont liés à M ;
lorsque les informations sur les versions de redondance sont utilisées pour indiquer les versions de redondance du bloc de transport transmis sur les $M$ porteuses, un certain nombre d'identifiants de versions de redondance des $M$ porteuses sont liés à M.

5. Procédé selon la revendication 4, dans lequel, lorsque le type d'attribution de ressources dans le domaine fréquentiel est de type 0, un certain nombre de bits occupés par les informations d'attribution de ressources dans le domaine fréquentiel est la somme$_j\{N_{RBGj}\}$ ;
dans lequel $N_{RBGj}$ désigne le nombre de RBG inclus dans une jème porteuse parmi les M porteuses, j est supérieur ou égal à 1 et inférieur ou égal à $M$, $M$ désigne un certain nombre de porteuses transportées par les informations de planification, et $sum_j\{N_{RBGj}\}$ désigne une somme d'un certain nombre de RBG inclus dans les porteuses transportées par les informations de planification.

6. Procédé selon la revendication 4, dans lequel la détermination, en fonction des informations de configuration et des informations de planification, de la manière de planification du bloc de transport transmis sur les $M$ porteuses consiste à :

déterminer, en fonction des informations de planification et des informations de configuration, les ressources dans le domaine fréquentiel du bloc de transport transmis sur les $M$ porteuses ; et/ou,
déterminer, en fonction des informations de planification, au moins l'une des ressources dans le domaine temporel, des schémas de modulation, des tailles de blocs de transport et des versions de redondance du bloc de transport transmis sur les M porteuses ;
la manière de planification répondant éventuellement à au moins l'un de ce qui suit :

la ressource dans le domaine fréquentiel est un bloc de ressource initial et une taille de bloc de ressource disponible au sein d'une bande passante indiqués dans les informations d'attribution de ressources dans le domaine fréquentiel ;
la ressource dans le domaine temporel est une position de symbole initial et une durée de symbole dans le domaine temporel du bloc de transport indiquées dans les informations d'attribution de ressources dans le domaine temporel ;
le schéma de modulation est un schéma de modulation du bloc de transport indiqué par le schéma de modulation et de codage ;
la taille de bloc de transport est une taille indiquée par le schéma de modulation et de codage ;
la version de redondance est l'identifiant de version de redondance du bloc de transport dans une porteuse correspondante indiqué dans les informations sur les versions de redondance ;
l'identifiant de version de redondance de chaque porteuse répondant éventuellement à au moins l'un de ce qui suit :

un certain nombre de bits pour l'identifiant de version de redondance de chaque porteuse est 0, et la version de redondance du bloc de transport transmis sur la porteuse correspondante est 0 ;
un certain nombre de bits pour l'identifiant de version de redondance de chaque porteuse est 1, et la version de redondance du bloc de transport transmis sur la porteuse correspondante est 0 ou 3 ;
un certain nombre de bits pour l'identifiant de version de redondance de chaque porteuse est 2, et la version de redondance du bloc de transport transmis sur la porteuse correspondante est l'un quelconque parmi 0, 1, 2 et 3.

7.   Procédé de traitement, comprenant les étapes suivantes :

envoi (S81) d'informations de configuration et d'informations de planification sur une porteuse cible de M porteuses, les informations de configuration et les informations de planification étant utilisées pour déterminer une manière de planification d'un bloc de transport transmis sur les $M$ porteuses, dans lequel $M$ représente un nombre entier positif supérieur à 1 ;
dans lequel les informations de configuration comprennent des points de fréquence et/ou des largeurs de bandes des porteuses ;
et/ou, les informations de configuration sont transportées dans un bloc d'informations système ; et/ou, les informations de planification sont transportées dans des informations de commande de liaison descendante ;
dans lequel les informations de planification comprennent au moins un indicateur de porteuses ;
dans lequel l'indicateur de porteuses est utilisé pour indiquer les porteuses correspondant aux informations de planification incluses dans les informations de commande de liaison descendante ;
**caractérisé en ce que**, dans un cas où les informations de commande de liaison descendante comportent les informations de planification d'au moins deux porteuses, l'indicateur de porteuses est également utilisé pour indiquer implicitement un ordre des informations de planification des au moins deux porteuses.

8.   Procédé selon la revendication 7, dans lequel les informations de planification comprennent en outre au moins l'un des éléments suivants :

des informations d'attribution de ressources dans le domaine fréquentiel ;
des informations d'attribution de ressources dans le domaine temporel ;
un schéma de modulation et de codage ;
des informations sur les versions de redondance.

9.   Procédé selon la revendication 8, dans lequel :

les informations d'attribution de ressources dans le domaine fréquentiel sont utilisées pour indiquer les ressources dans le domaine fréquentiel du bloc de transport transmises sur les $M$ porteuses, ou utilisées pour indiquer les ressources dans le domaine fréquentiel pour une transmission sur les au moins deux porteuses ;
les informations d'attribution de ressources dans le domaine temporel sont utilisées pour indiquer les ressources dans le domaine temporel du bloc de transport transmises sur les $M$ porteuses, ou utilisées pour indiquer les ressources dans le domaine temporel pour une transmission sur les au moins deux porteuses ;
le schéma de modulation et de codage est utilisé pour indiquer le schéma de modulation et de codage du bloc de transport transmis sur les $M$ porteuses, ou utilisé pour indiquer le schéma de modulation et de codage pour une transmission sur les au moins deux porteuses ;
les informations sur les versions de redondance sont utilisées pour indiquer les versions de redondance du bloc de transport transmis sur les $M$ porteuses, ou utilisées pour indiquer les versions de redondance pour une transmission sur les au moins deux porteuses,
dans lequel les $M$ porteuses comprennent l'au moins une porteuse.

10.   Procédé selon la revendication 9, dans lequel :

lorsque les informations d'attribution de ressources dans le domaine fréquentiel sont utilisées pour indiquer les ressources dans le domaine fréquentiel du bloc de transport transmis sur les $M$ porteuses, un certain nombre de bits d'indication de ressources dans le domaine fréquentiel des $M$ porteuses sont liés à M ;
lorsque les informations d'attribution de ressources dans le domaine temporel sont utilisées pour indiquer les ressources dans le domaine temporel du bloc de transport transmis sur les $M$ porteuses, un certain nombre de bits d'indication de ressources dans le domaine temporel des $M$ porteuses sont liés à $M$ ;
lorsque le schéma de modulation et de codage est utilisé pour indiquer le schéma de modulation et de codage du bloc de transport transmis sur les $M$ porteuses, un certain nombre de bits d'indication de schéma de modulation et de codage des $M$ porteuses sont liés à M ;
lorsque les informations sur les versions de redondance sont utilisées pour indiquer les versions de redondance du bloc de transport transmis sur les $M$ porteuses, un certain nombre d'identifiants de versions de redondance des $M$ porteuses sont liés à M ;
éventuellement, lorsque le type d'attribution de ressources dans le domaine fréquentiel est de type 0, un certain nombre de bits occupés par les informations d'attribution de ressources dans le domaine fréquentiel est la somme$_j\{N_{RBGj}\}$ ;

dans lequel $N_{RBGj}$ désigne le nombre de RBG inclus dans une jème porteuse parmi les M porteuses, j est supérieur ou égal à 1 et inférieur ou égal à *M, M* désigne un certain nombre de porteuses transportées par les informations de planification, et sum$_j\{N_{RBGj}\}$ désigne une somme d'un certain nombre de RBG inclus dans les porteuses transportées par les informations de planification.

11. Procédé selon la revendication 10, dans lequel la détermination, en fonction des informations de configuration et des informations de planification, de la manière de planification du bloc de transport transmis sur les *M* porteuses consiste à :

déterminer, en fonction des informations de planification et des informations de configuration, les ressources dans le domaine fréquentiel du bloc de transport transmis sur les M porteuses ; et/ou,
déterminer, en fonction des informations de planification, au moins l'une des ressources dans le domaine temporel, des schémas de modulation, des tailles de blocs de transport et des versions de redondance du bloc de transport transmis sur les M porteuses ;
la manière de planification répondant éventuellement à au moins l'un de ce qui suit :

la ressource dans le domaine fréquentiel est un bloc de ressource initial et une taille de bloc de ressource disponible au sein d'une bande passante indiqués dans les informations d'attribution de ressources dans le domaine fréquentiel ;
la ressource dans le domaine temporel est une position de symbole initial et une durée de symbole dans le domaine temporel du bloc de transport indiquées dans les informations d'attribution de ressources dans le domaine temporel ;
le schéma de modulation est un schéma de modulation du bloc de transport indiqué par le schéma de modulation et de codage ;
la taille de bloc de transport est une taille indiquée par le schéma de modulation et de codage ;
la version de redondance est l'identifiant de version de redondance du bloc de transport dans une porteuse correspondante indiqué dans les informations sur les versions de redondance ;
l'identifiant de version de redondance de chaque porteuse répondant éventuellement à au moins l'un de ce qui suit :

un certain nombre de bits pour l'identifiant de version de redondance de chaque porteuse est 0, et la version de redondance du bloc de transport transmis sur la porteuse correspondante est 0 ;
un certain nombre de bits pour l'identifiant de version de redondance de chaque porteuse est 1, et la version de redondance du bloc de transport transmis sur la porteuse correspondante est 0 ou 3 ;
un certain nombre de bits pour l'identifiant de version de redondance de chaque porteuse est 2, et la version de redondance du bloc de transport transmis sur la porteuse correspondante est l'un quelconque parmi 0, 1, 2 et 3.

12. Dispositif de communication (220), comprenant : une mémoire (222) et un processeur (221) ; dans lequel

la mémoire (222) est configurée pour stocker les instructions du programme ;
le processeur (221) est configuré pour appeler les instructions du programme dans la mémoire (222) afin d'exécuter le procédé de traitement selon l'une quelconque des revendications 1 à 6.

13. Dispositif de communication (220), comprenant : une mémoire (222) et un processeur (221) ; dans lequel

la mémoire (222) est configurée pour stocker les instructions du programme ;
le processeur (221) est configuré pour appeler les instructions du programme dans la mémoire (222) afin d'exécuter le procédé de traitement selon l'une quelconque des revendications 7 à 11.

14. Support de stockage lisible par ordinateur, sur lequel sont stockés des programmes informatiques ; dans lequel, lorsque les programmes informatiques sont exécutés, le procédé de traitement selon l'une quelconque des revendications 1 à 6 est mis en œuvre.

15. Support de stockage lisible par ordinateur, sur lequel sont stockés des programmes informatiques ; dans lequel, lorsque les programmes informatiques sont exécutés, le procédé de traitement selon l'une quelconque des revendications 7 à 11 est mis en œuvre.

FIG. 1

FIG. 2

FIG. 3

FIG. 4

FIG. 5

FIG. 6

180

Network node

1803

Communication
interface

1801

1804

Memory

1802

Processor

FIG. 7

| Terminal device | Network device |
|---|---|

S81, send configuration information and/or
scheduling information of a carrier in a same
cell, where the configuration information and/or
the scheduling information are(is) used to
indicate a scheduling manner for transmission
of a transport block on the carrier

S82, receive the configuration
information and/or the
scheduling information of the
carrier in the same cell

S83, determine, according to
the configuration information
and/or the scheduling
information, the scheduling
manner for transmission of the
transport block on the carrier

FIG. 8

| DCI | | | | |
|---|---|---|---|---|
| Time domain resource assignment information(CC0-CC2) | Frequency domain resource assignment information(CC0-CC2) | Modulation and coding scheme(CC0-CC2) | Redundancy version information(CC0-CC2) | Other inform-ation |

CC0

CC1

CC2

Network device

Terminal device

| DCI | | | | |
|---|---|---|---|---|
| Time domain resource assignment information(CC3 and CC4) | Frequency domain resource assignment information(CC3 and CC4) | Modulation and coding scheme(CC3 and CC4) | Redundancy version information(CC3 and CC4) | Other inform-ation |

CC3

CC4

FIG. 9

FIG. 10

Network device - - - → CC0 | Configuration information and/or scheduling information | - - - → Terminal device

Frequency domain resource

| R B 0 | R B 1 | R B 2 | R B 3 | R B 4 | R B 5 | R B 6 | R B 7 | R B 8 | R B 9 | R B 10 | R B 11 | R B 12 | ... | R B 47 | R B 48 | R B 49 |

RBG1                RBG3                RBG13

FIG. 11

CC0 | Configuration information

CC1 |

Network device

CC2 |

CC3 |

CC4 | Scheduling information (CC0-CC4)

Terminal device

FIG. 12

Frequency domain resource assignment information

1 0 1 0 1 0 0 0 0 0 1 0 1

CC0

CC1

CC2

CC3

CC4

| ▨ | Available RBG |
| □ | Unavailable RBG |

FIG. 13

Frequency domain resource assignment information

10001 0111001001110 1011000110 0101100101110 0010101110

CC0

CC1

CC2

CC3

CC4

Available
RBG

Unavailable
RBG

FIG. 14

Network
device

CC0

Configuration
information (CC0-CC4)
scheduling information
(CC0、CC1 and CC2)

CC1

CC2

CC3

Scheduling information
(CC3)

CC4

Scheduling information
(CC4)

Terminal
device

FIG. 15

Frequency domain resource assignment
information (carried on CC0)
1010100000101

Frequency domain resource assignment
information (carried on CC3)
0011010100000

Frequency domain resource assignment
information (carried on CC4)
0010101010

Available
RBG

Unavailable
RBG

FIG. 16

Frequency domain resource assignment
information (carried on CC0)
10001 0111001001110 1011000110

Frequency domain resource assignment
information (carried on CC3)
0101100101110

Frequency domain resource assignment
information (carried on CC4)
0010101110

Available
RBG

Unavailable
RBG

FIG. 17

| Terminal device | | Network device |
|---|---|---|

S181, send configuration information and/or scheduling information of a carrier in a same cell, where the configuration information and/or the scheduling information are(is) used to indicate a scheduling manner for transmission of a transport block on the carrier

S182, in response to the configuration information meeting a first preset condition and/or the scheduling information meeting a second preset condition, determine the scheduling manner for transmission of the transport block on the carrier in the same cell

FIG. 18

Processing apparatus 190

191

Transceiver module

192

Processing module

FIG. 19

Processing apparatus 200

2001

Processing module

FIG. 20

Processing apparatus 210

211

Transceiver module

FIG. 21

220

221

Processor

Instruction

223

222

Memory

Instruction

224

Transceiver

225

Antenna

226

FIG. 22

**REFERENCES CITED IN THE DESCRIPTION**

**Patent documents cited in the description**

- EP 3913845 A2

- WO 2021223703 A1